(19)

**Europäisches Patentamt**
**European Patent Office**
**Office européen des brevets**

(11)  **EP 4 044 713 B1**

(12)  **EUROPEAN PATENT SPECIFICATION**

(45) Date of publication and mention
of the grant of the patent:
**24.06.2026  Bulletin 2026/26**

(21) Application number: **19947577.3**

(22) Date of filing: **30.09.2019**

(51) International Patent Classification (IPC):
*H04W 72/04* (2023.01)      *H04L 5/00* (2006.01)
*H04L 27/26* (2006.01)

(52) Cooperative Patent Classification (CPC):
**H04L 27/2613; H04L 5/0048; H04L 5/0053;**
H04L 27/2607

(86) International application number:
**PCT/CN2019/109619**

(87) International publication number:
**WO 2021/062716 (08.04.2021 Gazette 2021/14)**

(54) **COMMUNICATION METHOD AND APPARATUS**

KOMMUNIKATIONSVERFAHREN UND -VORRICHTUNG

PROCÉDÉ ET APPAREIL DE COMMUNICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**17.08.2022  Bulletin 2022/33**

(73) Proprietor: **Huawei Technologies Co., Ltd.**
**Longgang District**
**Shenzhen, Guangdong**
**518129 (CN)**

(72) Inventors:
• **LI, Chao**
**Shenzhen, Guangdong 518129 (CN)**
• **ZHANG, Fuqiang**
**Shenzhen, Guangdong 518129 (CN)**
• **XIANG, Zhengzheng**
**Shenzhen, Guangdong 518129 (CN)**
• **YUAN, Pu**
**Shenzhen, Guangdong 518129 (CN)**

(74) Representative: **Gill Jennings & Every LLP**
**The Broadgate Tower**
**20 Primrose Street**
**London EC2A 2ES (GB)**

(56) References cited:
CN-A- 109 560 904      CN-A- 110 166 393
US-A1- 2019 150 068

• ZTE ET AL: "Discussion on synchronization
mechanism in NR V2X", vol. RAN WG1, no.
Prague, CZ; 20190826 - 20190830, 17 August
2019 (2019-08-17), XP051765503, Retrieved from
the Internet <URL:http://www.3gpp.org/ftp/
tsg_ran/WG1_RL1/TSGR1_98/Docs/R1-1908895.
zip> [retrieved on 20190817]
• CATT ET AL: "Sidelink synchronization
mechanism in NR V2X", vol. RAN WG1, no.
Prague, CZ; 20190826 - 20190830, 17 August
2019 (2019-08-17), XP051765190, Retrieved from
the Internet <URL:http://www.3gpp.org/ftp/
tsg_ran/WG1_RL1/TSGR1_98/Docs/R1-1908582.
zip> [retrieved on 20190817]
• RAPPORTEUR (NOKIA): "SSB Clarifications",
3GPP DRAFT; R2-1806862 STAGE 2 SSB
CLARIFICATIONS, 3RD GENERATION
PARTNERSHIP PROJECT (3GPP), MOBILE
COMPETENCE CENTRE ; 650, ROUTE DES
LUCIOLES ; F-06921 SOPHIA-ANTIPOLIS
CEDEX ; FRANCE, vol. RAN WG2, no. Busan,
South Korea; 20180521 - 20180525, 20 May 2018
(2018-05-20), Mobile Competence Centre ; 650,
route des Lucioles ; F-06921 Sophia-Antipolis
Cedex ; France, XP051443311

**(Cont. next page)**

- ERICSSON: "Relation between SSB and SS-Burst", 3GPP DRAFT; R2-1814540 CR96 TO 38.300 ON RELATION BETWEEN SSB AND SS-BURST, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Chengdu, China; 20181020, 27 September 2018 (2018-09-27), Mobile Competence Centre ; 650, route des Lucioles ; F-06921 Sophia-Antipolis Cedex ; France, XP051523965

- ERICSSON: "SMTC configurations for RRM tests", 3GPP DRAFT; R4-1811862 SMTC CONFIGURATION 38.133, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. Gothenburg, Sweden; 20180820 - 20180824, 29 August 2018 (2018-08-29), Mobile Competence Centre ; 650, route des Lucioles ; F-06921 Sophia-Antipolis Cedex ; France, XP051580700

**Description**

**TECHNICAL FIELD**

This application relates to the field of mobile communication technologies, and in particular, to a communication method and an apparatus.

**BACKGROUND**

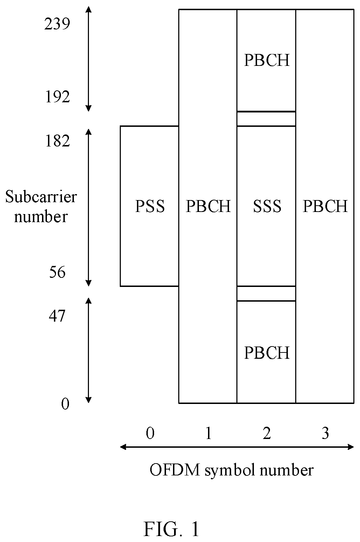

In an existing NR system, through a Uu interface, a terminal device may implement synchronization with a base station, obtain a system message, and the like by receiving an SSB. A primary synchronization signal (primary synchronization signal, PSS), a secondary synchronization signal (secondary synchronization signal, SSS), and a physical broadcast channel (physical broadcast channel, PBCH) together form an SSB. As shown in FIG. 1, in time domain, one SSB occupies four orthogonal frequency division multiplexing (orthogonal frequency division multiplexing, OFDM) symbols (symbols), namely, symbol 0 to symbol 3. In frequency domain, one SSB occupies 20 resource blocks (resource blocks, RBs), namely, 240 subcarriers, and in the 20 RBs, the subcarriers are numbered from 0 to 239. The PSS is located on the middle 127 subcarriers in symbol 0, and the SSS is located on the middle 127 subcarriers in symbol 2. The PBCH occupies all subcarriers of symbol 1 and symbol 3, and occupies some subcarriers in remaining subcarriers other than the subcarriers occupied by the SSS in all subcarriers of symbol 2.

It can be learned that currently, one SSB transmitted on the Uu interface occupies four OFDM symbols. However, in an NR-V2X system, it is specified that one SSB occupies one slot. Then, it is clear that, a structure of the SSB currently used on the Uu interface cannot apply to the NR-V2X system. ZTE ET AL: "Discussion on synchronization mechanism in NR V2X", 3GPP DRAFT: R1-1908895, 17 August 2019, discusses the agreements and working assumptions for S-SSB transmission. CATT ET AL: "Sidelink synchronization mechanism in NR V2X", 3GPP DRAFT; R1-1908582, 17 August 2019, discusses the agreements and working assumptions for sidelink synchronization mechanism in NR V2X.

**SUMMARY**

Embodiments of this application provide a communication method and an apparatus, to provide a synchronization signal block applicable to an NR-V2X system.

According to a first aspect, a first communication method is provided according to appended claim 1.

The method may be performed by a first communication apparatus, where the first communication apparatus may be a communication device or a communication apparatus, for example, a chip system, that can support the communication device to implement a function required in the method. For example, the first communication apparatus is a terminal apparatus, for example, referred to as a first terminal apparatus. For example, the first terminal apparatus is a terminal device, is a chip system that is disposed in the terminal device and that is configured to implement a function of the terminal device, or is another component configured to implement a function of the terminal device.

In this embodiment of this application, the synchronization signal block period may include the first resource set, the first resource set includes M groups, and X candidate resources included in the 1st group in the M groups may be used to carry X synchronization signal blocks. It is equivalent to that resources used to send synchronization signal blocks are specified. When a synchronization signal block needs to be sent, it only needs to select a resource from the resources, so that a resource selection manner is simplified. In addition, one synchronization signal block may occupy Y symbols, so that the technical solution provided in this embodiment of this application can be applied to an NR-V2X system, or may be applied to another communication system in which it is specified that a synchronization signal block occupies Y symbols.

For example, the M groups may be sent by using M beams, and different beams correspond to different directions. In other words, the M groups may correspond to M sending directions, that is, S-SSBs carried by the M groups correspond to M sending directions. Different groups point to different sending directions. If the first terminal apparatus needs to switch a sending direction of an antenna, the first terminal apparatus only needs to perform the switching between two groups, and does not need to perform the switching in a group. This reduces the number of times of switching performed by the terminal apparatus, and correspondingly reduces a switching latency.

In an optional implementation, that the $j^{th}$ synchronization signal block occupies Y symbols in time domain includes:

the Y symbols are all symbols in one slot; or
the Y symbols are all symbols except the last symbol in one slot.

One synchronization signal block may occupy all symbols in one slot. For example, some slots do not include gaps or do not include blank symbols that are not used for data sending and receiving. In this case, the synchronization signal block may fully occupy the slot, so that slot utilization can be improved, and coverage of the synchronization signal block can be improved. Alternatively, one synchronization signal block may not occupy the last symbol in a slot. For example, some slots include gaps, or include blank symbols that are not used for data sending and receiving. A gap or a blank symbol usually occupies the last symbol in the slot. Therefore, the synchronization signal block does not occupy a symbol that is occupied by a gap or a blank symbol that is not used for data sending and receiving. In this way, the required symbol may be reserved for the gap or the blank symbol that is not used for data sending and receiving, and sending of the synchronization signal block can also be implemented.

In an optional implementation, for a normal cyclic prefix, Y=13, or for an extended cyclic prefix, Y=11.

If the Y symbols are all symbols except the last symbol in a slot, that is, one synchronization signal block occupies all symbols except the last symbol in a slot, for a slot with a normal cyclic prefix, the total number of included symbols is 14, and then, the synchronization signal block may occupy 13 symbols thereof; and for a slot with an extended cyclic prefix, the total number of included symbols is 12, and then, the synchronization signal block may occupy 11 symbols thereof. If there is a slot in another format, for example, the total number of symbols included in a slot is D, the synchronization signal block may occupy D-1 symbols in the slot, and a value of D is not limited.

In an optional implementation, the N synchronization signal blocks are transmitted in a repeated manner, or every H synchronization signal blocks in the N synchronization signal blocks are transmitted in a repeated manner, where H is a positive integer less than or equal to N.

H may be understood as a repetition factor. Sending in a repeated manner may also be described as repeated sending, or sending in a quasi co-located manner. In other words, a same synchronization signal block is sent for a plurality of times, to improve coverage of the synchronization signal block. A manner in this embodiment of this application is flexible. For example, all the N synchronization signal blocks may be sent in a repeated manner, and this is equivalent to H=N. The N synchronization signal blocks may belong to one of the M groups, and this is equivalent to implementing intragroup repetition. Alternatively, the N synchronization signal blocks may belong to different groups in the M groups, and this is equivalent to that repeated sending may be implemented between groups. Alternatively, every H synchronization signal blocks in the N synchronization signal blocks may be repeatedly sent. For example, N=4, and H=2, and this is equivalent to that every two synchronization signal blocks in the four synchronization signal blocks are repeatedly sent. For example, every H synchronization signal blocks may belong to one of the M groups, and different H synchronization signal blocks may belong to different groups in the M groups. For example, N=4 and H=2. Two synchronization signal blocks that are repeatedly sent belong to one of the M groups, and the other two synchronization signal blocks that are synchronously sent belong to another group in the M groups, so that different groups may be used to send different synchronization signal blocks. For example, synchronization signal blocks sent by using different groups may correspond to different directions, so as to implement multi-direction coverage. Alternatively, every H synchronization signal blocks may belong to a plurality of groups in the M groups. For example, N=4 and H=2. Two synchronization signal blocks that are repeatedly sent belong to two groups in the M groups. The other two synchronization signal blocks that are synchronously sent belong to other two groups in the M groups, so that different groups may be used to send different synchronization signal blocks, and repeated sending between groups can be implemented.

In an optional implementation,

when a frequency of a carrier on which the first resource set is located is a low frequency, duration of a time domain resource occupied by a synchronization signal block carried by the first resource set is less than or equal to 2 milliseconds; or
when a frequency of a carrier on which the first resource set is located is a high frequency, duration of a time domain resource occupied by a synchronization signal block carried by the first resource set is less than or equal to 8 milliseconds.

If the frequency of the carrier on which the first resource set is located is a low frequency, duration occupied by all synchronization signal blocks carried by the first resource set may be less than or equal to 2 ms, in other words, duration occupied by all candidate resources included in the first resource set may be less than or equal to 2 ms. For example, a subcarrier spacing corresponding to the first resource set is 15 kHz, the first resource set may include two candidate resources, and duration occupied by each candidate resource may be 1 ms. In this case, duration occupied by all the synchronization signal blocks carried by the first resource set may be equal to 2 ms. It should be noted that, if one synchronization signal block does not occupy the last symbol of one slot, actually, duration occupied by the synchronization signal block may be less than 1 ms. In this case, duration occupied by all the synchronization signal blocks carried by the first resource set may be actually less than 2 ms. However, in this embodiment of this application, this difference may be ignored. It is considered that, if duration occupied by one synchronization signal block is 1 ms, duration occupied by all the synchronization signal blocks carried by the first resource set is 2 ms.

Alternatively, if the frequency of the carrier on which the first resource set is located is a high frequency, duration occupied by all synchronization signal blocks carried by the first resource set may be less than or equal to 8 ms, in other words, duration occupied by all candidate resources included in the first resource set may be less than or equal to 8 ms. For example, a subcarrier spacing corresponding to the first resource set is 120 kHz, the first resource set may include two candidate resources, and duration occupied by each candidate resource may be 1 ms. In this case, duration occupied by all the synchronization signal blocks carried by the first resource set may be equal to 8 ms. Similarly, it should be noted that, if one synchronization signal block does not occupy the last symbol of one slot, actually, duration occupied by the synchronization signal block may be less than 1 ms. In this case, duration occupied by all the synchronization signal blocks carried by the first resource set may be actually less than 8 ms. However, in this embodiment of this application, this difference may be ignored. It is considered that, if duration occupied by one synchronization signal block is 1 ms, duration occupied by all the synchronization signal blocks carried by the first resource set is 8 ms.

In an optional implementation, duration occupied in time domain by a synchronization signal block carried by the $i^{th}$ group is 1 ms.

Duration occupied by the synchronization signal block carried by the $i^{th}$ group of the M groups may be 1 ms, or duration occupied by a synchronization signal block carried in each of the M groups may be 1 ms. Alternatively, it is described as that duration occupied by X candidate resources included in the $i^{th}$ group in the M groups is 1 ms, or duration occupied by all candidate resources included in each of the M groups is 1 ms. For example, M=8. The first resource set includes eight groups in total. Duration occupied by all candidate resources included in one group thereof is 1 ms, or duration occupied by all candidate resources included in each group thereof is 1 ms. If duration occupied by all the candidate resources included in each group thereof is 1 ms, duration occupied by all the synchronization signal blocks carried by the first resource set may be 8 ms. For example, a value of X may be related to a subcarrier spacing of the carrier on which the first resource set is located. A larger subcarrier spacing of the carrier on which the first resource set is located indicates a smaller value of X. On the contrary, a smaller subcarrier spacing of the carrier on which the first resource set is located indicates a larger value of X.

In an optional implementation,

a time domain location of the first resource set in the synchronization signal block period is determined based on preconfigured information; or
first signaling is received from a network device, where the first signaling is used to indicate a time domain location of the first resource set in the synchronization signal block period.

A location of a resource set included in an S-SSB period may be specified in a protocol; or may be preconfigured in the first terminal apparatus, where the first terminal apparatus may determine the location of the resource set in the synchronization signal block period based on the preconfigured information; or may be configured for the terminal apparatus by the network device. For example, the network device may send first signaling to the first terminal apparatus, and the first signaling may indicate a time domain location of the first resource set in the synchronization signal block period. After receiving the first signaling, the first terminal apparatus may determine the time domain location of the first resource set in the synchronization signal block period. In addition, the time domain location of the first resource set in the synchronization signal block period is variable. In different cases, the first resource set may be located in different locations in the synchronization signal block period. For example, the network device may configure, based on different cases, different locations of the first resource set in the synchronization signal block period, or the protocol may specify a plurality of possible locations of the first resource set in the synchronization signal block period, so that the technical solution in this embodiment of this application is more flexible.

In an optional implementation, when the frequency of the carrier on which the first resource set is located is a low frequency, the number of groups to which the N candidate resources belong is less than or equal to 2, where the groups to which the N candidate resources belong are located in a same radio frame, or are respectively located in different half-frames of a same radio frame.

If the frequency of the first resource set is a low frequency, the number of groups occupied by the N candidate resources may be less than or equal to 2. In addition, the groups occupied by the N candidate resources may be located in a same radio frame. For example, the groups occupied by the N candidate resources may be located in a same half-frame of a radio frame, for example, all located in a first half-frame or a second half-frame of the radio frame. Alternatively, if the number of groups occupied by the N candidate resources is 2, one of the two groups may be located in the first half-frame of the radio frame, and the other group may be located in the second half-frame of the radio frame. For example, the subcarrier spacing corresponding to the first resource set is 15 kHz. In this case, the first resource set may include two groups of candidate resources used to send S-SSBs, and the N candidate resources may belong to the two groups, or belong to one of the two groups. If the N candidate resources belong to the two groups, the two groups are located in a same radio frame. In addition, the two groups may be both located in a first half-frame or a second half-frame of the radio frame; or one of the two groups is located in a first half-frame of the radio frame, and the other group is located in a second half-frame of the radio frame. It can be learned that the groups to which the N candidate resources belong may be flexible. Theoretically, the N candidate resources may belong to any one or more groups included in the first resource set.

The $i^{th}$ group includes K subgroups, the X candidate resources belong to the K subgroups, one subgroup in the K subgroups includes R candidate resources, the R candidate resources may be used to transmit R synchronization signal blocks, and the R synchronization signal blocks are repeatedly transmitted.

To support a finer granularity, each of all or some groups in the M groups may be further divided into a plurality of subgroups. If each of a plurality of groups is further divided into a plurality of subgroups, the numbers of subgroups included in different groups may be the same, or may be different. For example, the 1st group in the M groups may be divided into K subgroups, and then the X candidate resources included in the 1st group belong to the K subgroups. For example, each of the M groups may include K subgroups, or the number of subgroups included in the second group in the M groups may not be equal to K. K may be a positive integer. For example, K may be equal to 1, or may be equal to 2, or may be equal to a larger numerical value. The numbers of candidate resources included in different subgroups in the K subgroups may be the same, or may be different. For example, one of the K subgroups includes R candidate resources, the R candidate resources may carry R S-SSBs, and the R S-SSBs may be repeatedly transmitted, in other words, transmitted in a QCL manner. For example, each of the K subgroups may include R candidate resources, or the number of candidate resources included in the second subgroup in the K subgroups may not be equal to R. R may be a positive integer. For example, R may be equal to 1, or may be equal to 2, or may be equal to a larger numerical value.

X S-SSBs are further grouped into the K subgroups, because it is considered that, in a high frequency scenario, when a beam lobe width is smaller, or some lobes need to be partially spatially overlapped during transmission, the S-SSBs may need to be grouped into more groups. For example, the K subgroups may be sent by using K beams, and different beams correspond to different directions. In other words, the K subgroups may correspond to K sending directions, that is, S-SSBs carried by the K subgroups correspond to K sending directions. Different subgroups point to different sending directions. If the first terminal apparatus needs to switch a sending direction of an antenna, the first terminal apparatus only needs to perform the switching between two subgroups, and does not need to perform the switching in a subgroup. This reduces the number of times of switching performed by the terminal apparatus, and correspondingly reduces a switching latency.

For example, H may be less than or equal to R, and this is equivalent to that every H synchronization signal blocks may be sent in a repeated manner. The H synchronization signal blocks may belong to one of the K subgroups, and this is equivalent to implementing intra-subgroup repetition. Alternatively, the H synchronization signal blocks may belong to different subgroups in the K subgroups, and this is equivalent to that repeated sending may also be implemented between groups. Alternatively, H may be greater than R, and the H synchronization signal blocks may belong to different subgroups in the K subgroups, and this is equivalent to that repeated sending may also be implemented between groups.

In an optional implementation, the first resource set includes a first part and a second part, the first part includes the first M/2 groups in time domain in the M groups, and the second part includes the last M/2 groups in time domain in the M groups.

The first resource set may be further divided into two parts. For example, the first resource set includes the first part and the second part, the first part may include M/2 groups, and the second part may also include M/2 groups. For example, the first part includes the first M/2 groups in time domain in the M groups, and the second part includes the last M/2 groups in time domain in the M groups. In time domain, the first part is located before the second part. If each of the M groups includes X S-SSBs, the first part may include $L_{max}/2$ S-SSBs, and the second part may also include $L_{max}/2$ S-SSBs. If the M groups are located in one radio frame, the first part may be located in a first half-frame of the radio frame, and the second part may be located in a second half-frame of the radio frame. For example, a structure of the first part and a structure of the second part may be the same, or may be different. The same structure means that a relative location, in the first part, of a candidate resource included in the first part is the same as a relative location, in the second part, of a candidate resource included in the second part. The first resource set is further divided into the two parts, so that the first resource set may be considered from a perspective of each half-frame, and a granularity of the first resource set is further refined.

In an optional implementation,

a first resource used to send N synchronization signal blocks is determined in a first resource set, where the first resource set is located in a synchronization signal block period, the first resource set includes M groups, an $i^{th}$ group in the M groups includes X candidate resources, the first resource set includes M×X candidate resources, each of the M×X candidate resources may be used to transmit a synchronization signal block, each of the N synchronization signal blocks occupies Y symbols in time domain, M, i, and X are all integers greater than or equal to 1, Y is an integer greater than or equal to 5, the first resource includes N candidate resources, and the N candidate resources belong to one or more groups in the M groups: and
a $j^{th}$ synchronization signal block in the N synchronization signal blocks is sent on a $j^{th}$ candidate resource in the N candidate resources, where the $j^{th}$ synchronization signal block indicates a time domain location of the $j^{th}$ synchronization signal block.

In this embodiment of this application, the synchronization signal block period may include the first resource set, the first resource set includes M groups, and X candidate resources included in the 1st group in the M groups may be used to carry X synchronization signal blocks. It is equivalent to that resources used to send synchronization signal blocks are specified. When a synchronization signal block needs to be sent, it only needs to select a resource from the resources, so that a resource selection manner is simplified. In addition, one synchronization signal block may occupy Y symbols, so that the technical solution provided in this embodiment of this application can be applied to an NR-V2X system, or may be applied to another communication system in which it is specified that a synchronization signal block occupies Y symbols. In addition, the time domain location of the $j^{th}$ synchronization signal block may be indicated by using the $j^{th}$ synchronization signal block, so that a second terminal apparatus can receive the $j^{th}$ synchronization signal block at a correct time domain location, and synchronization signal block detection power consumption of the second terminal apparatus is reduced.

In an optional implementation, a first synchronization signal block is determined, where the first synchronization signal block includes a primary synchronization signal, a secondary synchronization signal, and a physical broadcast channel, the physical broadcast channel includes a demodulation reference signal, the first synchronization signal block occupies Y symbols in time domain, Y is an integer greater than or equal to 6, the primary synchronization signal occupies the $2^{nd}$ symbol and the $3^{rd}$ symbol in the Y symbols, the secondary synchronization signal occupies the $4^{th}$ symbol and the $5^{th}$ symbol or the $5^{th}$ symbol and the $6^{th}$ symbol in the Y symbols, and the physical broadcast channel occupies symbols, in the Y symbols, other than the symbols occupied by the primary synchronization signal and the secondary synchronization signal; and the first synchronization signal block is sent.

In this embodiment of this application, the primary synchronization signal and the secondary synchronization signal may be located at the front part of the slot, so that the primary synchronization signal and the secondary synchronization signal are sent as early as possible, and the second terminal apparatus serving as a receive end may perform an operation such as synchronization based on the primary synchronization signal and the secondary synchronization signal. In addition, the demodulation reference signal occupies only the symbols of the physical broadcast channel, and does not occupy the symbols of the primary synchronization signal and the secondary synchronization signal. Therefore, reliability of the symbols occupied by the primary synchronization signal and the secondary synchronization signal can be ensured, and the demodulation reference signal can be normally sent.

According to a second aspect, a second communication method is provided according to appended claim 8.

The method may be performed by a second communication apparatus, where the second communication apparatus may be a communication device or a communication apparatus, for example, a chip system, that can support the communication device to implement a function required in the method. For example, the second communication apparatus is a terminal apparatus, for example, referred to as a second terminal apparatus. For example, the second terminal apparatus is a terminal device, is a chip system that is disposed in the terminal device and that is configured to implement a function of the terminal device, or is another component configured to implement a function of the terminal device.

In an optional implementation, after the $j^{th}$ synchronization signal block is received, information about timing and/or information about a frequency of the $j^{th}$ synchronization signal block are/is obtained based on the $j^{th}$ synchronization signal block.

In an optional implementation, that the $j^{th}$ synchronization signal block occupies Y symbols in time domain includes:

the Y symbols are all symbols in one slot; or
the Y symbols are all symbols except the last symbol in one slot.

In an optional implementation,

for a normal cyclic prefix, Y=13, or
for an extended cyclic prefix, Y=11.

In an optional implementation, the N synchronization signal blocks are transmitted in a repeated manner, or every H synchronization signal blocks in the N synchronization signal blocks are transmitted in a repeated manner, where H is a positive integer less than or equal to N.

In an optional implementation,

when a frequency of a carrier on which the first resource set is located is a low frequency, duration of a time domain resource occupied by a synchronization signal block carried by the first resource set is less than or equal to 2 milliseconds; or
when a frequency of a carrier on which the first resource set is located is a high frequency, duration of a time domain resource occupied by a synchronization signal block carried by the first resource set is less than or equal to 8 milliseconds.

In an optional implementation, duration occupied in time domain by a synchronization signal block carried by the $i^{th}$ group is 1 ms.

In an optional implementation, when the frequency of the carrier on which the first resource set is located is a low frequency, the number of groups to which the N candidate resources belong is less than or equal to 2, where the groups to which the N candidate resources belong are located in a same radio frame, or are respectively located in different half-frames of a same radio frame.

In an optional implementation, the $i^{th}$ group includes K subgroups, the X candidate resources belong to the K subgroups, one subgroup in the K subgroups includes R candidate resources, the R candidate resources may be used to transmit R synchronization signal blocks, and the R synchronization signal blocks are repeatedly transmitted.

In an optional implementation, the first resource set includes a first part and a second part, the first part includes the first M/2 groups in time domain in the M groups, and the second part includes the last M/2 groups in time domain in the M groups.

In an optional implementation, a $j^{th}$ synchronization signal block in N synchronization signal blocks is received on a $j^{th}$ candidate resource in N candidate resources, where the N candidate resources belong to a first resource set, the first resource set is located in a synchronization signal block period, the first resource set includes M groups, an $i^{th}$ group in the M groups includes X candidate resources, the first resource set includes $M \times X$ candidate resources, each of the $M \times X$ candidate resources may be used to transmit a synchronization signal block, each of the N synchronization signal blocks occupies Y symbols in time domain, M, i, and X are all integers greater than or equal to 1, Y is an integer greater than or equal to 5, and the N candidate resources belong to one or more groups in the M groups; and a time domain location of the $j^{th}$ synchronization signal block is determined based on the $j^{th}$ synchronization signal block.

In an optional implementation, a first synchronization signal block is received, where the first synchronization signal block includes a primary synchronization signal, a secondary synchronization signal, and a physical broadcast channel, the physical broadcast channel includes a demodulation reference signal, the first synchronization signal block occupies Y symbols in time domain, Y is an integer greater than or equal to 6, the primary synchronization signal occupies the $2^{nd}$ symbol and the $3^{rd}$ symbol in the Y symbols, the secondary synchronization signal occupies the $4^{th}$ symbol and the $5^{th}$ symbol or the $5^{th}$ symbol and the $6^{th}$ symbol in the Y symbols, and the physical broadcast channel occupies symbols, in the Y symbols, other than the symbols occupied by the primary synchronization signal and the secondary synchronization signal. The physical broadcast channel is demodulated based on the first synchronization signal block.

For technical effects of the second aspect or the optional implementations, refer to the descriptions of the technical effects of the first aspect or the corresponding implementations.

According to a comparative example, a third communication method is provided. The method includes: determining, in a first resource set, a first resource used to send N synchronization signal blocks, where the first resource set is located in a synchronization signal block period, the first resource set includes M groups, an $i^{th}$ group in the M groups includes X candidate resources, the first resource set includes $M \times X$ candidate resources, each of the $M \times X$ candidate resources may be used to transmit a synchronization signal block, each of the N synchronization signal blocks occupies Y symbols in time domain, M, i, and X are all integers greater than or equal to 1, Y is an integer greater than or equal to 5, the first resource includes N candidate resources, and the N candidate resources belong to one or more groups in the M groups; and sending a $j^{th}$ synchronization signal block in the N synchronization signal blocks on a $j^{th}$ candidate resource in the N candidate resources, where the $j^{th}$ synchronization signal block indicates a time domain location of the $j^{th}$ synchronization signal block.

The method may be performed by a third communication apparatus, where the third communication apparatus may be a communication device or a communication apparatus, for example, a chip system, that can support the communication device to implement a function required in the method. For example, the third communication apparatus is a terminal apparatus, for example, referred to as a first terminal apparatus. For example, the first terminal apparatus is a terminal device, is a chip system that is disposed in the terminal device and that is configured to implement a function of the terminal device, or is another component configured to implement a function of the terminal device.

In this example, the synchronization signal block period may include the first resource set, the first resource set includes M groups, and X candidate resources included in the $1^{st}$ group in the M groups may be used to carry X synchronization signal blocks. It is equivalent to that resources used to send synchronization signal blocks are specified. When a synchronization signal block needs to be sent, it only needs to select a resource from the resources, so that a resource selection manner is simplified. In addition, one synchronization signal block may occupy Y symbols, so that the technical solution provided in this embodiment of this application can be applied to an NR-V2X system, or may be applied to another communication system in which it is specified that a synchronization signal block occupies Y symbols. In addition, the time domain location of the $j^{th}$ synchronization signal block may be indicated by using the $j^{th}$ synchronization signal block, so that a second terminal apparatus can receive the $j^{th}$ synchronization signal block at a correct time domain location, and synchronization signal block detection power consumption of the second terminal apparatus is reduced.

In an optional implementation, the time domain location of the $j^{th}$ synchronization signal block includes an identifier of a group in which the $j^{th}$ synchronization signal block is located, and/or an identifier of the $j^{th}$ synchronization signal block in a group in which the $j^{th}$ synchronization signal block is located.

A time domain location of the first resource set may be determined by the second terminal apparatus in advance. For example, the time domain location of the first resource set may be configured for the second terminal apparatus by a network device, or may be notified by the first terminal apparatus to the second terminal apparatus, or may be specified in a protocol, or may be preconfigured in the second terminal apparatus. After learning of the time domain location of the first resource set, the second terminal apparatus can determine the time domain location of the $j^{th}$ synchronization signal block, provided that the second terminal apparatus can determine the identifier of the group in which the $j^{th}$ synchronization signal block is located, or determine the identifier of the $j^{th}$ synchronization signal block in the group in which the $j^{th}$ synchronization signal block is located, or determine the identifier of the group in which the $j^{th}$ synchronization signal block is located, and the identifier of the $j^{th}$ synchronization signal block in the group in which the $j^{th}$ synchronization signal block is located, so that the second terminal apparatus can receive the $j^{th}$ synchronization signal block at the correct time domain location. Certainly, the time domain location of the $j^{th}$ synchronization signal block may further include other information, which is not specifically limited.

In an optional implementation, that the $j^{th}$ synchronization signal block indicates a time domain location of the $j^{th}$ synchronization signal block includes:

signaling carried on a broadcast channel included in the $j^{th}$ synchronization signal block indicates the time domain location of the $j^{th}$ synchronization signal block; or
a demodulation reference signal carried on a broadcast channel included in the $j^{th}$ synchronization signal block indicates the time domain location of the $j^{th}$ synchronization signal block; or
a reference signal used to scramble signaling carried on a broadcast channel included in the $j^{th}$ synchronization signal block indicates the time domain location of the $j^{th}$ synchronization signal block.

For example, the $j^{th}$ synchronization signal block is an S-SSB. The broadcast channel included in the $j^{th}$ synchronization signal block is, for example, a physical sidelink broadcast channel, and signaling carried on the physical sidelink broadcast channel is, for example, a sidelink master information block. In this embodiment of this application, the time domain location of the $j^{th}$ synchronization signal block may be indicated by using a plurality of types of information corresponding to the $j^{th}$ synchronization signal block, and a manner is flexible. In addition, the time domain location of the $j^{th}$ synchronization signal block may include a plurality of types of information, or different information included in time domain information of the $j^{th}$ synchronization signal block may be respectively indicated by using the different information corresponding to the $j^{th}$ synchronization signal block, so that more information is indicated, and the second terminal apparatus can obtain more information.

In an optional implementation, that a demodulation reference signal carried on a broadcast channel included in the $j^{th}$ synchronization signal block indicates the time domain location of the $j^{th}$ synchronization signal block includes:

an initial value or an initial location of the demodulation reference signal sequence indicates the time domain location of the $j^{th}$ synchronization signal block.

If the time domain location of the $j^{th}$ synchronization signal block is indicated by using the demodulation reference signal carried on the broadcast channel, the time domain location of the $j^{th}$ synchronization signal block may be indicated by using the initial value of the demodulation reference signal sequence. A different initial value of the demodulation reference signal sequence indicates a different time domain location of the $j^{th}$ synchronization signal block. There may be a plurality of initial values of the demodulation reference signal sequence, so that richer content may be indicated. Alternatively, the time domain location of the $j^{th}$ synchronization signal block may be indicated by using the initial location of the demodulation reference signal sequence. A different initial location of the demodulation reference signal sequence indicates a different time domain location of the $j^{th}$ synchronization signal block. There may be a plurality of initial locations of the demodulation reference signal sequence, so that richer content may be indicated.

In an optional implementation, that a reference signal used to scramble signaling carried on a broadcast channel included in the $j^{th}$ synchronization signal block indicates the time domain location of the $j^{th}$ synchronization signal block includes:

an initial value or an initial location of the reference signal sequence used to scramble the signaling carried on the broadcast channel included in the $j^{th}$ synchronization signal block indicates the time domain location of the $j^{th}$ synchronization signal block.

If the time domain location of the $j^{th}$ synchronization signal block is indicated by using the reference signal sequence used to scramble signaling carried on the broadcast channel included in the $j^{th}$ synchronization signal block, the time domain location of the $j^{th}$ synchronization signal block may be indicated by using the initial value of the reference signal sequence. A different initial value of the reference signal sequence indicates a different time domain location of the $j^{th}$ synchronization signal block. There may be a plurality of initial values of the reference signal sequence, so that richer content may be indicated. Alternatively, the time domain location of the $j^{th}$ synchronization signal block may be indicated by using the initial location of the reference signal sequence. A different initial location of the reference signal sequence indicates a different time domain location of the $j^{th}$ synchronization signal block. There may be a plurality of initial locations of the reference signal sequence, so that richer content may be indicated.

In an optional implementation, the initial value of the demodulation reference signal sequence is determined by using one or more of the following parameters:

the identifier of the group in which the $j^{th}$ synchronization signal block is located;

the identifier of the $j^{th}$ synchronization signal block in the group in which the $j^{th}$ synchronization signal block is located;

an identifier of a synchronization signal source;

an identifier of a slot in which the $j^{th}$ synchronization signal block is located; or

a CP type corresponding to a slot in which the $j^{th}$ synchronization signal block is located.

For example, the initial value of the demodulation reference signal sequence may be determined based on the identifier of the group in which the $j^{th}$ synchronization signal block is located; the initial value of the demodulation reference signal sequence may be determined based on the identifier of the group in which the $j^{th}$ synchronization signal block is located and the identifier of the $j^{th}$ synchronization signal block in the group in which the $j^{th}$ synchronization signal block is located; or the initial value of the demodulation reference signal sequence may be determined based on the identifier of the group in which the $j^{th}$ synchronization signal block is located, the identifier of the $j^{th}$ synchronization signal block in the group in which the $j^{th}$ synchronization signal block is located, the identifier of the synchronization signal source, the identifier of the slot in which the $j^{th}$ synchronization signal block is located, and the CP type corresponding to the slot in which the $j^{th}$ synchronization signal block is located. Certainly, the initial value of the demodulation reference signal sequence may alternatively be determined based on information other than the foregoing information, or the initial value of the demodulation reference signal sequence may be determined based not on the foregoing information, but determined based on other information. This is not specifically limited.

In an optional implementation, the initial value of the reference signal sequence is determined by using one or more of the following parameters:

the identifier of the group in which the $j^{th}$ synchronization signal block is located;

the identifier of the $j^{th}$ synchronization signal block in the group in which the $j^{th}$ synchronization signal block is located;

an identifier of a synchronization signal source;

an identifier of a slot in which the $j^{th}$ synchronization signal block is located; or

a CP type corresponding to a slot in which the $j^{th}$ synchronization signal block is located.

For example, the initial value of the reference signal sequence may be determined based on the identifier of the group in which the $j^{th}$ synchronization signal block is located; the initial value of the reference signal sequence may be determined based on the identifier of the group in which the $j^{th}$ synchronization signal block is located and the identifier of the $j^{th}$ synchronization signal block in the group in which the $j^{th}$ synchronization signal block is located; or the initial value of the reference signal sequence may be determined based on the identifier of the group in which the $j^{th}$ synchronization signal block is located, the identifier of the $j^{th}$ synchronization signal block in the group in which the $j^{th}$ synchronization signal block is located, the identifier of the synchronization signal source, the identifier of the slot in which the $j^{th}$ synchronization signal block is located, and the CP type corresponding to the slot in which the $j^{th}$ synchronization signal block is located. Certainly, the initial value of the reference signal sequence may alternatively be determined based on information other than the foregoing information, or the initial value of the reference signal sequence may be determined based not on the foregoing information, but determined based on other information. This is not specifically limited.

In an optional implementation, a first resource used to send N synchronization signal blocks is determined in a first resource set, where the first resource set is located in a synchronization signal block period, the first resource set includes M groups, an $i^{th}$ group in the M groups includes X candidate resources, the first resource set includes M×X candidate resources, each of the M×X candidate resources may be used to transmit a synchronization signal block, each of the N synchronization signal blocks occupies Y symbols in time domain, M, i, and X are all integers greater than or equal to 1, Y is an integer greater than or equal to 5, the first resource includes N candidate resources, and the N candidate resources belong to one or more groups in the M groups; and a $j^{th}$ synchronization signal block in the N synchronization signal blocks is sent on a $j^{th}$ candidate resource in the N candidate resources, where j is an integer greater than or equal to 1 and less than or equal to N.

In this example, the synchronization signal block period may include the first resource set, the first resource set includes M groups, and X candidate resources included in the $1^{st}$ group in the M groups may be used to carry X synchronization signal blocks. It is equivalent to that resources used to send synchronization signal blocks are specified. When a synchronization signal block needs to be sent, it only needs to select a resource from the resources, so that a resource selection manner is simplified. In addition, one synchronization signal block may occupy Y symbols, so that the technical solution provided in this embodiment of this application can be applied to an NR-V2X system, or may be applied to another communication system in which it is specified that a synchronization signal block occupies Y symbols.

In an optional implementation, a first synchronization signal block is determined, where the first synchronization signal block includes a primary synchronization signal, a secondary synchronization signal, and a physical broadcast channel, the physical broadcast channel includes a demodulation reference signal, the first synchronization signal block occupies Y symbols in time domain, Y is an integer greater than or equal to 6, the primary synchronization signal occupies the $2^{nd}$ symbol and the $3^{rd}$ symbol in the Y symbols, the secondary synchronization signal occupies the $4^{th}$ symbol and the $5^{th}$ symbol or the $5^{th}$ symbol and the $6^{th}$ symbol in the Y symbols, and the physical broadcast channel occupies symbols, in the Y symbols, other than the symbols occupied by the primary synchronization signal and the secondary synchronization signal; and the first synchronization signal block is sent.

In this embodiment of this application, the primary synchronization signal and the secondary synchronization signal may be located at the front part of the slot, so that the primary synchronization signal and the secondary synchronization signal are sent as early as possible, and the second terminal apparatus serving as a receive end may perform an operation such as synchronization based on the primary synchronization signal and the secondary synchronization signal. In addition, the demodulation reference signal occupies only the symbols of the physical broadcast channel, and does not occupy the symbols of the primary synchronization signal and the secondary synchronization signal. Therefore, reliability of the symbols occupied by the primary synchronization signal and the secondary synchronization signal can be ensured, and the demodulation reference signal can be normally sent.

According to a comparative example, a fourth communication method is provided. The method includes: receiving a $j^{th}$ synchronization signal block in N synchronization signal blocks on a $j^{th}$ candidate resource in N candidate resources, where the N candidate resources belong to a first resource set, the first resource set is located in a synchronization signal block period, the first resource set includes M groups, an $i^{th}$ group in the M groups includes X candidate resources, the first resource set includes M×X candidate resources, each of the M×X candidate resources may be used to transmit a synchronization signal block, each of the N synchronization signal blocks occupies Y symbols in time domain, M, i, and X are all integers greater than or equal to 1, Y is an integer greater than or equal to 5, and the N candidate resources belong to one or more groups in the M groups; and determining a time domain location of the $j^{th}$ synchronization signal block based on the $j^{th}$ synchronization signal block.

The method may be performed by a fourth communication apparatus, where the fourth communication apparatus may be a communication device or a communication apparatus, for example, a chip system, that can support the communication device to implement a function required in the method. For example, the fourth communication apparatus is a terminal apparatus, for example, referred to as a second terminal apparatus. For example, the second terminal apparatus is a terminal device, is a chip system that is disposed in the terminal device and that is configured to implement a function of the terminal device, or is another component configured to implement a function of the terminal device.

In an optional implementation, the time domain location of the $j^{th}$ synchronization signal block includes an identifier of a group in which the $j^{th}$ synchronization signal block is located, and/or an identifier of the $j^{th}$ synchronization signal block in a group in which the $j^{th}$ synchronization signal block is located.

In an optional implementation, the determining a time domain location of the $j^{th}$ synchronization signal block based on the $j^{th}$ synchronization signal block includes:

determining the time domain location of the $j^{th}$ synchronization signal block based on signaling carried on a broadcast channel included in the $j^{th}$ synchronization signal block; or determining the time domain location of the $j^{th}$ synchronization signal block based on a demodulation reference signal carried on a broadcast channel included in the $j^{th}$ synchronization signal block; or determining the time domain location of the $j^{th}$ synchronization signal block based on a reference signal used to scramble signaling carried on a broadcast channel included in the $j^{th}$ synchronization signal block.

In an optional implementation, the determining the time domain location of the $j^{th}$ synchronization signal block based on a demodulation reference signal carried on a broadcast channel included in the $j^{th}$ synchronization signal block includes:
determining the time domain location of the $j^{th}$ synchronization signal block based on an initial value or an initial location of the demodulation reference signal sequence.

In an optional implementation, the determining the time domain location of the $j^{th}$ synchronization signal block based on a reference signal used to scramble signaling carried on a broadcast channel included in the $j^{th}$ synchronization signal block includes:
determining the time domain location of the $j^{th}$ synchronization signal block based on an initial value or an initial location of the reference signal sequence used to scramble the signaling carried on the broadcast channel included in the $j^{th}$ synchronization signal block.

In an optional implementation, the initial value of the sequence is determined by using one or more of the following parameters:

the identifier of the group in which the $j^{th}$ synchronization signal block is located; the identifier of the $j^{th}$ synchronization signal block in the group in which the $j^{th}$ synchronization signal block is located; an identifier of a synchronization signal source; an identifier of a slot in which the $j^{th}$ synchronization signal block is located; or a CP type corresponding to a slot in which the $j^{th}$ synchronization signal block is located.

In an optional implementation, a first resource used to transmit N synchronization signal blocks is determined in a first resource set, where the first resource set is located in a synchronization signal block period, the first resource set includes M groups, an i$^{th}$ group in the M groups includes X candidate resources, the first resource set includes M×X candidate resources, each of the M×X candidate resources may be used to transmit a synchronization signal block, each of the N synchronization signal blocks occupies Y symbols in time domain, M, i, and X are all integers greater than or equal to 1, Y is an integer greater than or equal to 5, the first resource includes N candidate resources, and the N candidate resources belong to one or more groups in the M groups; and a j$^{th}$ synchronization signal block in the N synchronization signal blocks is received on a j$^{th}$ candidate resource in the N candidate resources, where j is an integer greater than or equal to 1 and less than or equal to N.

In an optional implementation, a first synchronization signal block is received, where the first synchronization signal block includes a primary synchronization signal, a secondary synchronization signal, and a physical broadcast channel, the physical broadcast channel includes a demodulation reference signal, the first synchronization signal block occupies Y symbols in time domain, Y is an integer greater than or equal to 6, the primary synchronization signal occupies the 2$^{nd}$ symbol and the 3$^{rd}$ symbol in the Y symbols, the secondary synchronization signal occupies the 4$^{th}$ symbol and the 5$^{th}$ symbol or the 5$^{th}$ symbol and the 6$^{th}$ symbol in the Y symbols, and the physical broadcast channel occupies symbols, in the Y symbols, other than the symbols occupied by the primary synchronization signal and the secondary synchronization signal. The physical broadcast channel is demodulated based on the first synchronization signal block.

For technical effects of the fourth method or the possible implementations, refer to the descriptions of the technical effects of the third method or the corresponding possible implementations.

According to a comparative example, a fifth communication method is provided. The method includes: determining a first synchronization signal block, where the first synchronization signal block includes a primary synchronization signal, a secondary synchronization signal, and a physical broadcast channel, the physical broadcast channel includes a demodulation reference signal, the first synchronization signal block occupies Y symbols in time domain, Y is an integer greater than or equal to 6, the primary synchronization signal occupies the 2$^{nd}$ symbol and the 3$^{rd}$ symbol in the Y symbols, the secondary synchronization signal occupies the 4$^{th}$ symbol and the 5$^{th}$ symbol or the 5$^{th}$ symbol and the 6$^{th}$ symbol in the Y symbols, and the physical broadcast channel occupies symbols, in the Y symbols, other than the symbols occupied by the primary synchronization signal and the secondary synchronization signal; and sending the first synchronization signal block.

The method may be performed by a fifth communication apparatus, where the fifth communication apparatus may be a communication device or a communication apparatus, for example, a chip system, that can support the communication device to implement a function required in the method. For example, the fifth communication apparatus is a terminal apparatus, for example, referred to as a first terminal apparatus. For example, the first terminal apparatus is a terminal device, is a chip system that is disposed in the terminal device and that is configured to implement a function of the terminal device, or is another component configured to implement a function of the terminal device.

In this example, the primary synchronization signal and the secondary synchronization signal may be located at the front part of the slot, so that the primary synchronization signal and the secondary synchronization signal are sent as early as possible, and the second terminal apparatus serving as a receive end may perform an operation such as synchronization based on the primary synchronization signal and the secondary synchronization signal. In addition, the demodulation reference signal occupies only the symbols of the physical broadcast channel, and does not occupy the symbols of the primary synchronization signal and the secondary synchronization signal. Therefore, reliability of the symbols occupied by the primary synchronization signal and the secondary synchronization signal can be ensured, and the demodulation reference signal can be normally sent.

In an optional implementation, that the first synchronization signal block occupies Y symbols in time domain includes:

the Y symbols are all symbols in one slot; or
the Y symbols are all symbols except the last symbol in one slot.

One synchronization signal block may occupy all symbols in one slot. For example, some slots do not include gaps. In this case, the synchronization signal block may fully occupy the slot, so that slot utilization can be improved. Alternatively, one synchronization signal block may not occupy the last symbol in a slot. For example, some slots include gaps. A gap usually occupies the last symbol in the slot. Therefore, the synchronization signal block does not occupy a symbol that is occupied by a gap. In this way, the required symbol may be reserved for the gap, and sending of the synchronization signal block can also be implemented.

In an optional implementation, for a normal cyclic prefix, Y=13, or for an extended cyclic prefix, Y=11.

If the Y symbols are all symbols except the last symbol in a slot, that is, one synchronization signal block occupies all symbols except the last symbol in a slot, for a slot with a normal cyclic prefix, the total number of included symbols is 14, and then, the synchronization signal block may occupy 13 symbols thereof; and for a slot with an extended cyclic prefix, the total number of included symbols is 12, and then, the synchronization signal block may occupy 11 symbols thereof. If there is a slot in another format, for example, the total number of included symbols is D, the synchronization signal block may occupy D-1 symbols in the slot, and a value of D is not limited.

In an optional implementation, the demodulation reference signal occupies all or some symbols, in the Y symbols, other than the symbols occupied by the primary synchronization signal and the secondary synchronization signal.

The demodulation reference signal occupies only the symbols of the physical broadcast channel, and does not occupy the symbols of the primary synchronization signal and the secondary synchronization signal. Therefore, reliability of the symbols occupied by the primary synchronization signal and the secondary synchronization signal can be ensured, and the demodulation reference signal can be normally sent. The demodulation reference signal may occupy the some symbols, in the Y symbols, other than the primary synchronization signal and the secondary synchronization signal, and the remaining some symbols may be occupied by the physical broadcast channel, for example, may be used to send broadcast information, so that content included in the synchronization signal block is richer. Alternatively, the demodulation reference signal may occupy all the symbols, in the Y symbols, other than the primary synchronization signal and the secondary synchronization signal, so that coverage of the demodulation reference signal is improved.

In an optional implementation, in a physical resource block corresponding to the symbols of the physical broadcast channel including the demodulation reference signal, the demodulation reference signal occupies three or four subcarriers at equal spacings; and broadcast information carried by the physical broadcast signal occupies another subcarrier other than the subcarriers occupied by the demodulation reference signal in the physical resource block.

In the physical resource block corresponding to the symbols of the physical broadcast channel that including the modulation reference signal, the demodulation reference signal may occupy three or four subcarriers at equal spacings, in other words, the demodulation reference signal may occupy, at equal spacings, the subcarriers by using three or four subcarriers as a spacing. The broadcast information carried on the physical broadcast channel may occupy the another subcarrier other than the subcarriers occupied by the demodulation reference signal in the physical resource block. For example, one slot includes 12 symbols, which are respectively symbol 0 to symbol 11, a primary synchronization signal occupies symbol 1 and symbol 2, a secondary synchronization signal occupies symbol 3 and symbol 4, symbols occupied by a physical broadcast channel include symbol 5, and a demodulation reference signal occupies symbol 5. Certainly, the demodulation reference signal may further occupy another symbol of the physical broadcast signal. Herein, only symbol 5 is used as an example. For example, symbol 5 occupies one physical resource block in frequency domain, and one physical resource block may include 12 subcarriers, which are respectively subcarrier 0 to subcarrier 11. If the demodulation reference signal occupies three subcarriers at equal spacings, the spacings between the three subcarriers are 4. For example, the demodulation reference signal occupies subcarrier 0, subcarrier 4, and subcarrier 8. In this case, broadcast information carried on the physical broadcast channel may occupy one or more subcarriers in remaining subcarrier 1 to subcarrier 3, subcarrier 5 to subcarrier 7, or subcarrier 9 to subcarrier 11. The demodulation reference signal occupies only some subcarriers in frequency domain, so that not only sending of the demodulation reference signal can be ensured, but also some subcarriers can be reserved for other information to occupy. In this way, frequency domain resource utilization can be improved.

In an optional implementation, for a normal cyclic prefix, the demodulation reference signal is located in locations of the following symbols in the first synchronization signal block:

the demodulation reference signal is located in a $7^{th}$ symbol, an $8^{th}$ symbol, an $11^{th}$ symbol, and a $12^{th}$ symbol in the synchronization signal block; or
the demodulation reference signal is located in a $7^{th}$ symbol, a $10^{th}$ symbol, and a $13^{th}$ symbol in the synchronization signal block; or
the demodulation reference signal is located in an $8^{th}$ symbol and an $11^{th}$ symbol in the synchronization signal block; or
the demodulation reference signal is located in a $7^{th}$ symbol and a $12^{th}$ symbol in the synchronization signal block; or
the demodulation reference signal is located in a $7^{th}$ symbol and a $13^{th}$ symbol in the synchronization signal block; or
the demodulation reference signal is located in a $9^{th}$ symbol or a $10^{th}$ symbol in the synchronization signal block.

Locations of some symbols that may be occupied by the demodulation reference signal in a slot of the normal cyclic prefix are provided herein, so that a person skilled in the art better implements technical solutions of embodiments of this application. Certainly, the foregoing several locations are merely examples. In the slot of the normal cyclic prefix, a location of a symbol that may be occupied by the demodulation reference signal is not limited to the several locations described herein.

In an optional implementation, for an extended cyclic prefix, the demodulation reference signal is located in locations of the following symbols in the first synchronization signal block:

the demodulation reference signal is located in a 7th symbol, an 8th symbol, a 10th symbol, and an 11th symbol in the synchronization signal block; or
the demodulation reference signal is located in a 7th symbol, a 9th symbol, and an 11th symbol in the synchronization signal block; or
the demodulation reference signal is located in a 7th symbol and a 10th symbol in the synchronization signal block; or
the demodulation reference signal is located in an 8th symbol or a 9th symbol in the synchronization signal block.

Locations of some symbols that may be occupied by the demodulation reference signal in a slot of the extended cyclic prefix are provided herein, so that a person skilled in the art better implements technical solutions of embodiments of this application. Certainly, the foregoing several locations are merely examples. In the slot of the extended cyclic prefix, a location of a symbol that may be occupied by the demodulation reference signal is not limited to the several locations described herein.

In an optional implementation, a first resource used to send N synchronization signal blocks is determined in a first resource set, where the first resource set is located in a synchronization signal block period, the first resource set includes M groups, an i$^{th}$ group in the M groups includes X candidate resources, the first resource set includes M×X candidate resources, each of the M×X candidate resources may be used to transmit a synchronization signal block, each of the N synchronization signal blocks occupies Y symbols in time domain, M, i, and X are all integers greater than or equal to 1, Y is an integer greater than or equal to 5, the first resource includes N candidate resources, and the N candidate resources belong to one or more groups in the M groups; and a j$^{th}$ synchronization signal block in the N synchronization signal blocks is sent on a j$^{th}$ candidate resource in the N candidate resources, where j is an integer greater than or equal to 1 and less than or equal to N.

In this example, the synchronization signal block period may include the first resource set, the first resource set includes M groups, and X candidate resources included in the 1$^{st}$ group in the M groups may be used to carry X synchronization signal blocks. It is equivalent to that resources used to send synchronization signal blocks are specified. When a synchronization signal block needs to be sent, it only needs to select a resource from the resources, so that a resource selection manner is simplified. In addition, one synchronization signal block may occupy Y symbols, so that the technical solution provided in this embodiment of this application can be applied to an NR-V2X system, or may be applied to another communication system in which it is specified that a synchronization signal block occupies Y symbols.

In an optional implementation, a first resource used to send N synchronization signal blocks is determined in a first resource set, where the first resource set is located in a synchronization signal block period, the first resource set includes M groups, an i$^{th}$ group in the M groups includes X candidate resources, the first resource set includes M×X candidate resources, each of the M×X candidate resources may be used to transmit a synchronization signal block, each of the N synchronization signal blocks occupies Y symbols in time domain, M, i, and X are all integers greater than or equal to 1, Y is an integer greater than or equal to 5, the first resource includes N candidate resources, and the N candidate resources belong to one or more groups in the M groups; and a j$^{th}$ synchronization signal block in the N synchronization signal blocks is sent on a j$^{th}$ candidate resource in the N candidate resources, where the j$^{th}$ synchronization signal block indicates a time domain location of the j$^{th}$ synchronization signal block.

In this example, the synchronization signal block period may include the first resource set, the first resource set includes M groups, and X candidate resources included in the 1$^{st}$ group in the M groups may be used to carry X synchronization signal blocks. It is equivalent to that resources used to send synchronization signal blocks are specified. When a synchronization signal block needs to be sent, it only needs to select a resource from the resources, so that a resource selection manner is simplified. In addition, one synchronization signal block may occupy Y symbols, so that the technical solution provided in this embodiment of this application can be applied to an NR-V2X system, or may be applied to another communication system in which it is specified that a synchronization signal block occupies Y symbols. In addition, the time domain location of the j$^{th}$ synchronization signal block may be indicated by using the j$^{th}$ synchronization signal block, so that the second terminal apparatus can receive the j$^{th}$ synchronization signal block at a correct time domain location, and synchronization signal block detection power consumption of the second terminal apparatus is reduced.

According to a comparative example, a sixth communication method is provided. The method includes: receiving a first synchronization signal block, where the first synchronization signal block includes a primary synchronization signal, a secondary synchronization signal, and a physical broadcast channel, the physical broadcast channel includes a demodulation reference signal, the first synchronization signal block occupies Y symbols in time domain, Y is an integer greater than or equal to 6, the primary synchronization signal occupies the 2$^{nd}$ symbol and the 3$^{rd}$ symbol in the Y symbols, the secondary synchronization signal occupies the 4$^{th}$ symbol and the 5$^{th}$ symbol or the 5$^{th}$ symbol and the 6$^{th}$ symbol in the Y symbols, and the physical broadcast channel occupies symbols, in the Y symbols, other than the symbols occupied by the primary synchronization signal and the secondary synchronization signal. The physical broadcast channel is demodulated based on the first synchronization signal block.

The method may be performed by a sixth communication apparatus, where the sixth communication apparatus may be a communication device or a communication apparatus, for example, a chip system, that can support a function required by the communication device to implement the method. For example, the sixth communication apparatus is a terminal apparatus, for example, referred to as a second terminal apparatus. For example, the second terminal apparatus is a terminal device, is a chip system that is disposed in the terminal device and that is configured to implement a function of the terminal device, or is another component configured to implement a function of the terminal device.

In a possible implementation, that the first synchronization signal block occupies Y symbols in time domain includes:

> the Y symbols are all symbols in one slot; or
> the Y symbols are all symbols except the last symbol in one slot.

In a possible implementation,

> for a normal cyclic prefix, Y=13, or
> for an extended cyclic prefix, Y=11.

In a possible implementation, the demodulation reference signal occupies all or some symbols, in the Y symbols, other than the symbols occupied by the primary synchronization signal and the secondary synchronization signal.

In a possible implementation, in a physical resource block corresponding to the symbols of the physical broadcast channel including the demodulation reference signal, the demodulation reference signal occupies three or four subcarriers at equal spacings; and broadcast information carried by the physical broadcast signal occupies another subcarrier other than the subcarriers occupied by the demodulation reference signal in the physical resource block.

In a possible implementation, for a normal cyclic prefix, the demodulation reference signal is located in locations of the following symbols in the first synchronization signal block:

> the demodulation reference signal is located in a $7^{th}$ symbol, an $8^{th}$ symbol, an $11^{th}$ symbol, and a $12^{th}$ symbol in the synchronization signal block; or
> the demodulation reference signal is located in a $7^{th}$ symbol, a $10^{th}$ symbol, and a $13^{th}$ symbol in the synchronization signal block; or
> the demodulation reference signal is located in an $8^{th}$ symbol and an $11^{th}$ symbol in the synchronization signal block; or
> the demodulation reference signal is located in a $7^{th}$ symbol and a $12^{th}$ symbol in the synchronization signal block; or
> the demodulation reference signal is located in a $7^{th}$ symbol and a $13^{th}$ symbol in the synchronization signal block; or
> the demodulation reference signal is located in a $9^{th}$ symbol or a $10^{th}$ symbol in the synchronization signal block.

In a possible implementation, for an extended cyclic prefix, the demodulation reference signal is located in locations of the following symbols in the first synchronization signal block:

> the demodulation reference signal is located in a $7^{th}$ symbol, an $8^{th}$ symbol, a $10^{th}$ symbol, and an $11^{th}$ symbol in the synchronization signal block; or
> the demodulation reference signal is located in a $7^{th}$ symbol, a $9^{th}$ symbol, and an $11^{th}$ symbol in the synchronization signal block; or
> the demodulation reference signal is located in a $7^{th}$ symbol and a $10^{th}$ symbol in the synchronization signal block; or
> the demodulation reference signal is located in an $8^{th}$ symbol or a $9^{th}$ symbol in the synchronization signal block.

In an optional implementation, a first resource used to transmit N synchronization signal blocks is determined in a first resource set, where the first resource set is located in a synchronization signal block period, the first resource set includes M groups, an $i^{th}$ group in the M groups includes X candidate resources, the first resource set includes M×X candidate resources, each of the M×X candidate resources may be used to transmit a synchronization signal block, each of the N synchronization signal blocks occupies Y symbols in time domain, M, i, and X are all integers greater than or equal to 1, Y is an integer greater than or equal to 5, the first resource includes N candidate resources, and the N candidate resources belong to one or more groups in the M groups; and a $j^{th}$ synchronization signal block in the N synchronization signal blocks is received on a $j^{th}$ candidate resource in the N candidate resources, where j is an integer greater than or equal to 1 and less than or equal to N.

In an optional implementation, a $j^{th}$ synchronization signal block in N synchronization signal blocks is received on a $j^{th}$ candidate resource in N candidate resources, where the N candidate resources belong to a first resource set, the first resource set is located in a synchronization signal block period, the first resource set includes M groups, an $i^{th}$ group in the M groups includes X candidate resources, the first resource set includes M×X candidate resources, each of the M×X candidate resources may be used to transmit a synchronization signal block, each of the N synchronization signal blocks occupies Y symbols in time domain, M, i, and X are all integers greater than or equal to 1, Y is an integer greater than or equal to 5, and the N candidate resources belong to one or more groups in the M groups; and a time domain location of the $j^{th}$ synchronization signal block is determined based on the $j^{th}$ synchronization signal block.

For technical effects of the sixth method or the possible implementations, refer to the descriptions of the technical effects of the fifth method or the corresponding implementations.

According to a further aspect, a communication apparatus is provided. For example, the communication apparatus is the foregoing first communication apparatus. The first communication apparatus is configured to perform the method according to any one of the first aspect or the possible implementations. Specifically, the first communication apparatus may include a module configured to perform the method according to any one of the first aspect or the possible implementations, for example, include a processing module and a transceiver module. For example, the first communication apparatus is the first terminal apparatus. For example, the first terminal apparatus is a communication device, or is a chip or another component disposed in the communication device. For example, the communication device is a terminal device. For example, the transceiver module may alternatively be implemented by using a transceiver, and the processing module may alternatively be implemented by using a processor. If the first terminal apparatus is the communication device, the transceiver is implemented, for example, by using an antenna, a feeder, and a codec in the communication device. Alternatively, if the first terminal apparatus is a chip disposed in the communication device, the transceiver is, for example, a communication interface in the chip, and the communication interface is connected to a radio frequency transceiver component in the communication device, to implement information receiving and sending by using the radio frequency transceiver component. In a description process of the aspect, the processing module and the transceiver module are still used as an example for description. The processing module is configured to determine, in a first resource set, a first resource used to send N synchronization signal blocks, where the first resource set is located in a synchronization signal block period, the first resource set includes M groups, an $i^{th}$ group in the M groups includes X candidate resources, the first resource set includes M×X candidate resources, each of the M×X candidate resources may be used to transmit a synchronization signal block, each of the N synchronization signal blocks occupies Y symbols in time domain, M, i, and X are all integers greater than or equal to 1, Y is an integer greater than or equal to 5, the first resource includes N candidate resources, and the N candidate resources belong to one or more groups in the M groups.

The transceiver module is configured to send a $j^{th}$ synchronization signal block in the N synchronization signal blocks on a $j^{th}$ candidate resource in the N candidate resources, where j is an integer greater than or equal to 1 and less than or equal to N.

In an optional implementation, that the $j^{th}$ synchronization signal block occupies Y symbols in time domain includes:

the Y symbols are all symbols in one slot; or
the Y symbols are all symbols except the last symbol in one slot.

In an optional implementation,

for a normal cyclic prefix, Y=13, or
for an extended cyclic prefix, Y=11.

In an optional implementation, the N synchronization signal blocks are transmitted in a repeated manner, or every H synchronization signal blocks in the N synchronization signal blocks are transmitted in a repeated manner, where H is a positive integer less than or equal to N.

In an optional implementation,

when a frequency of a carrier on which the first resource set is located is a low frequency, duration of a time domain resource occupied by a synchronization signal block carried by the first resource set is less than or equal to 2 milliseconds; or
when a frequency of a carrier on which the first resource set is located is a high frequency, duration of a time domain resource occupied by a synchronization signal block carried by the first resource set is less than or equal to 8 milliseconds.

In an optional implementation, duration occupied in time domain by a synchronization signal block carried by the $i^{th}$ group is 1 ms.

In an optional implementation,

the processing module is further configured to determine a time domain location of the first resource set in the synchronization signal block period based on preconfigured information; or
the transceiver module is further configured to receive first signaling from a network device, where the first signaling is used to indicate a time domain location of the first resource set in the synchronization signal block period.

In an optional implementation,
when the frequency of the carrier on which the first resource set is located is a low frequency, the number of groups to which the N candidate resources belong is less than or equal to 2, where the groups to which the N candidate resources belong are located in a same radio frame, or are respectively located in different half-frames of a same radio frame.

In an optional implementation, the $i^{th}$ group includes K subgroups, the X candidate resources belong to the K subgroups, one subgroup in the K subgroups includes R candidate resources, the R candidate resources may be used to transmit R synchronization signal blocks, and the R synchronization signal blocks are repeatedly transmitted.

In an optional implementation, the first resource set includes a first part and a second part, the first part includes the first M/2 groups in time domain in the M groups, and the second part includes the last M/2 groups in time domain in the M groups.

In an optional implementation,

the processing module is further configured to determine, in a first resource set, a first resource used to send N synchronization signal blocks, where the first resource set is located in a synchronization signal block period, the first resource set includes M groups, an $i^{th}$ group in the M groups includes X candidate resources, the first resource set includes $M \times X$ candidate resources, each of the $M \times X$ candidate resources may be used to transmit a synchronization signal block, each of the N synchronization signal blocks occupies Y symbols in time domain, M, i, and X are all integers greater than or equal to 1, Y is an integer greater than or equal to 5, the first resource includes N candidate resources, and the N candidate resources belong to one or more groups in the M groups; and

the transceiver module is further configured to send a $j^{th}$ synchronization signal block in the N synchronization signal blocks on a $j^{th}$ candidate resource in the N candidate resources, where the $j^{th}$ synchronization signal block indicates a time domain location of the $j^{th}$ synchronization signal block.

In an optional implementation,

the processing module is further configured to determine a first synchronization signal block, where the first synchronization signal block includes a primary synchronization signal, a secondary synchronization signal, and a physical broadcast channel, the physical broadcast channel includes a demodulation reference signal, the first synchronization signal block occupies Y symbols in time domain, Y is an integer greater than or equal to 6, the primary synchronization signal occupies the $2^{nd}$ symbol and the $3^{rd}$ symbol in the Y symbols, the secondary synchronization signal occupies the $4^{th}$ symbol and the $5^{th}$ symbol or the $5^{th}$ symbol and the $6^{th}$ symbol in the Y symbols, and the physical broadcast channel occupies symbols, in the Y symbols, other than the symbols occupied by the primary synchronization signal and the secondary synchronization signal; and

the transceiver module is further configured to send the first synchronization signal block.

For technical effects of the aspect or the possible implementations, refer to the descriptions of the technical effects of the first aspect or the corresponding implementations.

According to furtheraspect, a communication apparatus is provided. For example, the communication apparatus is the foregoing second communication apparatus. The second communication apparatus is configured to perform the method according to any one of the second aspect or the possible implementations. Specifically, the second communication apparatus may include a module configured to perform the method according to any one of the second aspect or the possible implementations, for example, include a processing module and a transceiver module. For example, the second communication apparatus is a second terminal apparatus. For example, the second terminal apparatus is a communication device, or is a chip or another component disposed in the communication device. For example, the communication device is a terminal device. For example, the transceiver module may alternatively be implemented by using a transceiver, and the processing module may alternatively be implemented by using a processor. If the second terminal apparatus is the communication device, the transceiver is implemented, for example, by using an antenna, a feeder, and a codec in the communication device. Alternatively, if the second terminal apparatus is a chip disposed in the communication device, the transceiver is, for example, a communication interface in the chip, and the communication interface is connected to a radio frequency transceiver component in the communication device, to implement information receiving and sending by using the radio frequency transceiver component. In a description process of the aspect, the processing module and the transceiver module are still used as an example for description. The processing module is configured to determine, in a first resource set, a first resource used to transmit N synchronization signal blocks, where the first resource set is located in a synchronization signal block period, the first resource set includes M groups, an $i^{th}$ group in the M groups includes X candidate resources, the first resource set includes $M \times X$ candidate resources, each of the $M \times X$ candidate resources may be used to transmit a synchronization signal block, each of the N synchronization signal blocks occupies Y symbols in time domain, M, i, and X are all integers greater than or equal to 1, Y is an integer greater than or equal to 5, the first resource includes N candidate resources, and the N candidate resources belong to one or more groups in the M groups.

The transceiver module is configured to receive a $j^{th}$ synchronization signal block in the N synchronization signal blocks on a $j^{th}$ candidate resource in the N candidate resources, where j is an integer greater than or equal to 1 and less than or equal to N.

In an optional implementation, the processing module is further configured to: after the transceiver module receives the $j^{th}$ synchronization signal block, obtain information about timing and/or information about a frequency of the $j^{th}$ synchronization signal block based on the $j^{th}$ synchronization signal block.

In an optional implementation, that the j$^{th}$ synchronization signal block occupies Y symbols in time domain includes:

the Y symbols are all symbols in one slot; or
the Y symbols are all symbols except the last symbol in one slot.

In an optional implementation,

for a normal cyclic prefix, Y=13, or
for an extended cyclic prefix, Y=11.

In an optional implementation, the N synchronization signal blocks are transmitted in a repeated manner, or every H synchronization signal blocks in the N synchronization signal blocks are transmitted in a repeated manner, where H is a positive integer less than or equal to N.

In an optional implementation,

when a frequency of a carrier on which the first resource set is located is a low frequency, duration of a time domain resource occupied by a synchronization signal block carried by the first resource set is less than or equal to 2 milliseconds; or
when a frequency of a carrier on which the first resource set is located is a high frequency, duration of a time domain resource occupied by a synchronization signal block carried by the first resource set is less than or equal to 8 milliseconds.

In an optional implementation, duration occupied in time domain by a synchronization signal block carried by the i$^{th}$ group is 1 ms.

In an optional implementation, when the frequency of the carrier on which the first resource set is located is a low frequency, the number of groups to which the N candidate resources belong is less than or equal to 2, where the groups to which the N candidate resources belong are located in a same radio frame, or are respectively located in different half-frames of a same radio frame.

In an optional implementation, the i$^{th}$ group includes K subgroups, the X candidate resources belong to the K subgroups, one subgroup in the K subgroups includes R candidate resources, the R candidate resources may be used to transmit R synchronization signal blocks, and the R synchronization signal blocks are repeatedly transmitted.

In an optional implementation, the first resource set includes a first part and a second part, the first part includes the first M/2 groups in time domain in the M groups, and the second part includes the last M/2 groups in time domain in the M groups.

In an optional implementation,

the transceiver module is further configured to receive a j$^{th}$ synchronization signal block in N synchronization signal blocks on a j$^{th}$ candidate resource in N candidate resources, where the N candidate resources belong to a first resource set, the first resource set is located in a synchronization signal block period, the first resource set includes M groups, an i$^{th}$ group in the M groups includes X candidate resources, the first resource set includes M×X candidate resources, each of the M×X candidate resources may be used to transmit a synchronization signal block, each of the N synchronization signal blocks occupies Y symbols in time domain, M, i, and X are all integers greater than or equal to 1, Y is an integer greater than or equal to 5, and the N candidate resources belong to one or more groups in the M groups; and
the processing module is further configured to determine a time domain location of the j$^{th}$ synchronization signal block based on the j$^{th}$ synchronization signal block.

In an optional implementation,

the transceiver module is further configured to receive a first synchronization signal block, where the first synchronization signal block includes a primary synchronization signal, a secondary synchronization signal, and a physical broadcast channel, the physical broadcast channel includes a demodulation reference signal, the first synchronization signal block occupies Y symbols in time domain, Y is an integer greater than or equal to 6, the primary synchronization signal occupies the 2$^{nd}$ symbol and the 3$^{rd}$ symbol in the Y symbols, the secondary synchronization signal occupies the 4$^{th}$ symbol and the 5$^{th}$ symbol or the 5$^{th}$ symbol and the 6$^{th}$ symbol in the Y symbols, and the physical broadcast channel occupies symbols, in the Y symbols, other than the symbols occupied by the primary synchronization signal and the secondary synchronization signal; and
the processing module is further configured to demodulate the physical broadcast channel based on the first synchronization signal block.

For technical effects of the aspect or the possible implementations, refer to the descriptions of the technical effects of the second aspect or the corresponding implementations.

According to a further aspect, a communication apparatus is provided. For example, the communication apparatus is the foregoing first communication apparatus. The communication apparatus includes a processor. Optionally, the communication apparatus may further include a memory, configured to store computer instructions. The processor and the memory are coupled to each other, and are configured to implement the method according to any one of the first aspect or the possible implementations. Alternatively, the first communication apparatus may not include a memory, and the memory may be located outside the first communication apparatus. In a description process of the thirteenth aspect, an example in which the first communication apparatus includes the memory is used. Optionally, the first communication apparatus may further include a communication interface, configured to communicate with another apparatus or device. The processor, the memory, and the communication interface are coupled to each other, and are configured to implement the method according to any one of the first aspect or the possible implementations. For example, when the processor executes the computer instructions stored in the memory, the first communication apparatus is enabled to perform the method according to any one of the first aspect or the possible implementations. For example, the first communication apparatus is the first terminal apparatus. For example, the first terminal apparatus is a communication device, or is a chip or another component disposed in the communication device. For example, the communication device is a terminal device. If the first terminal apparatus is the communication device, the communication interface is implemented by using, for example, a transceiver in the communication device. For example, the transceiver is implemented by using an antenna, a feeder, a codec, and the like in the communication device. Alternatively, if the first terminal apparatus is a chip disposed in the communication device, the communication interface is, for example, an input/output interface such as an input/output pin of the chip. The communication interface is connected to a radio frequency transceiver component in the communication device, to implement information receiving and sending by using the radio frequency transceiver component. The memory is configured to store the computer instructions.

The processor is configured to determine, in a first resource set, a first resource used to send N synchronization signal blocks, where the first resource set is located in a synchronization signal block period, the first resource set includes M groups, an $i^{th}$ group in the M groups includes X candidate resources, the first resource set includes M×X candidate resources, each of the M×X candidate resources may be used to transmit a synchronization signal block, each of the N synchronization signal blocks occupies Y symbols in time domain, M, i, and X are all integers greater than or equal to 1, Y is an integer greater than or equal to 5, the first resource includes N candidate resources, and the N candidate resources belong to one or more groups in the M groups.

The communication interface is configured to send a $j^{th}$ synchronization signal block in the N synchronization signal blocks on a $j^{th}$ candidate resource in the N candidate resources, where j is an integer greater than or equal to 1 and less than or equal to N.

In an optional implementation, that the $j^{th}$ synchronization signal block occupies Y symbols in time domain includes:

the Y symbols are all symbols in one slot; or
the Y symbols are all symbols except the last symbol in one slot.

In an optional implementation,

for a normal cyclic prefix, Y=13, or
for an extended cyclic prefix, Y=11.

In an optional implementation, the N synchronization signal blocks are transmitted in a repeated manner, or every H synchronization signal blocks in the N synchronization signal blocks are transmitted in a repeated manner, where H is a positive integer less than or equal to N.

In an optional implementation,

when a frequency of a carrier on which the first resource set is located is a low frequency, duration of a time domain resource occupied by a synchronization signal block carried by the first resource set is less than or equal to 2 milliseconds; or
when a frequency of a carrier on which the first resource set is located is a high frequency, duration of a time domain resource occupied by a synchronization signal block carried by the first resource set is less than or equal to 8 milliseconds.

In an optional implementation, duration occupied in time domain by a synchronization signal block carried by the $i^{th}$ group is 1 ms.

In an optional implementation,

the processor is further configured to determine a time domain location of the first resource set in the synchronization signal block period based on preconfigured information; or
the communication interface is further configured to receive first signaling from a network device, where the first signaling is used to indicate a time domain location of the first resource set in the synchronization signal block period.

In an optional implementation, when the frequency of the carrier on which the first resource set is located is a low frequency, the number of groups to which the N candidate resources belong is less than or equal to 2, where the groups to which the N candidate resources belong are located in a same radio frame, or are respectively located in different half-frames of a same radio frame.

In an optional implementation, the $i^{th}$ group includes K subgroups, the X candidate resources belong to the K subgroups, one subgroup in the K subgroups includes R candidate resources, the R candidate resources may be used to transmit R synchronization signal blocks, and the R synchronization signal blocks are repeatedly transmitted.

In an optional implementation, the first resource set includes a first part and a second part, the first part includes the first M/2 groups in time domain in the M groups, and the second part includes the last M/2 groups in time domain in the M groups.

For technical effects of the aspect or the possible implementations, refer to the descriptions of the technical effects of the first aspect or the corresponding implementations.

According to a further aspect, a communication apparatus is provided. For example, the communication apparatus is the foregoing second communication apparatus. The communication apparatus includes a processor. Optionally, the communication apparatus may further include a memory, configured to store computer instructions. The processor and the memory are coupled to each other, and are configured to implement the method according to any one of the second aspect or the possible implementations. Alternatively, the second communication apparatus may not include a memory, and the memory may be located outside the second communication apparatus. In a description process of the fourteenth aspect, an example in which the second communication apparatus includes the memory is used. Optionally, the second communication apparatus may further include a communication interface, configured to communicate with another apparatus or device. The processor, the memory, and the communication interface are coupled to each other, and are configured to implement the method according to any one of the second aspect or the possible implementations. For example, when the processor executes the computer instructions stored in the memory, the second communication apparatus is enabled to perform the method according to any one of the second aspect or the possible implementations. For example, the second communication apparatus is a second terminal apparatus. For example, the second terminal apparatus is a communication device, or is a chip or another component disposed in the communication device. For example, the communication device is a terminal device. If the second terminal apparatus is the communication device, the communication interface is implemented by using, for example, a transceiver in the communication device. For example, the transceiver is implemented by using an antenna, a feeder, a codec, and the like in the communication device. Alternatively, if the second terminal apparatus is a chip disposed in the communication device, the communication interface is, for example, an input/output interface such as an input/output pin of the chip. The communication interface is connected to a radio frequency transceiver component in the communication device, to implement information receiving and sending by using the radio frequency transceiver component. The memory is configured to store the computer instructions.

The processor is configured to determine, in a first resource set, a first resource used to transmit N synchronization signal blocks, where the first resource set is located in a synchronization signal block period, the first resource set includes M groups, an $i^{th}$ group in the M groups includes X candidate resources, the first resource set includes M×X candidate resources, each of the M×X candidate resources may be used to transmit a synchronization signal block, each of the N synchronization signal blocks occupies Y symbols in time domain, M, i, and X are all integers greater than or equal to 1, Y is an integer greater than or equal to 5, the first resource includes N candidate resources, and the N candidate resources belong to one or more groups in the M groups.

The transceiver is configured to receive a $j^{th}$ synchronization signal block in the N synchronization signal blocks on a $j^{th}$ candidate resource in the N candidate resources, where j is an integer greater than or equal to 1 and less than or equal to N.

In an optional implementation, the processor is further configured to: after the transceiver receives the $j^{th}$ synchronization signal block, obtain information about timing and/or information about a frequency of the $j^{th}$ synchronization signal block based on the $j^{th}$ synchronization signal block.

In an optional implementation, that the $j^{th}$ synchronization signal block occupies Y symbols in time domain includes:

the Y symbols are all symbols in one slot; or
the Y symbols are all symbols except the last symbol in one slot.

In an optional implementation,

for a normal cyclic prefix, Y=13, or
for an extended cyclic prefix, Y=11.

In an optional implementation, the N synchronization signal blocks are transmitted in a repeated manner, or every H synchronization signal blocks in the N synchronization signal blocks are transmitted in a repeated manner, where H is a positive integer less than or equal to N.

In an optional implementation,

when a frequency of a carrier on which the first resource set is located is a low frequency, duration of a time domain resource occupied by a synchronization signal block carried by the first resource set is less than or equal to 2 milliseconds; or
when a frequency of a carrier on which the first resource set is located is a high frequency, duration of a time domain resource occupied by a synchronization signal block carried by the first resource set is less than or equal to 8 milliseconds.

In an optional implementation, duration occupied in time domain by a synchronization signal block carried by the $i^{th}$ group is 1 ms.

In an optional implementation,

when the frequency of the carrier on which the first resource set is located is a low frequency, the number of groups to which the N candidate resources belong is less than or equal to 2, where the groups to which the N candidate resources belong are located in a same radio frame, or are respectively located in different half-frames of a same radio frame.

In an optional implementation, the $i^{th}$ group includes K subgroups, the X candidate resources belong to the K subgroups, one subgroup in the K subgroups includes R candidate resources, the R candidate resources may be used to transmit R synchronization signal blocks, and the R synchronization signal blocks are repeatedly transmitted.

In an optional implementation, the first resource set includes a first part and a second part, the first part includes the first M/2 groups in time domain in the M groups, and the second part includes the last M/2 groups in time domain in the M groups.

For technical effects of the fourteenth aspect or the possible implementations, refer to the descriptions of the technical effects of the second aspect or the corresponding implementations.

According to a further aspect, a first communication system is provided. The communication system includes the communication apparatus according to the above aspect or the communication apparatus according to the above aspect, and includes the communication apparatus according to the above aspect or the communication apparatus according to the above aspect.

According to a further aspect, a computer-readable storage medium is provided. The computer-readable storage medium is configured to store computer instructions. When the computer instructions are run on a computer, the computer is enabled to perform the method according to any one of the above aspects or the possible implementations.

According to a further aspect, a computer program product including instructions is provided. The computer program product is configured to store the computer instructions. When the computer instructions are run on a computer, the computer is enabled to perform the method according to any one of the above aspects or the possible implementations.

In embodiments of this application, one synchronization signal block may occupy Y symbols, so that the technical solutions provided in embodiments of this application can be applied to an NR-V2X system, or may be applied to another communication system in which it is specified that a synchronization signal block occupies Y symbols.

**BRIEF DESCRIPTION OF DRAWINGS**

FIG. 1 is a schematic diagram of an SSB;
FIG. 2 is a schematic diagram of several types of V2X;
FIG. 3 is a schematic diagram of an SS burst set;
FIG. 4A to FIG. 4E show several distribution manners of SSBs transmitted on a Uu interface;
FIG. 5 is a schematic diagram of an application scenario according to an embodiment of this application;
FIG. 6 is a flowchart of a first communication method according to an embodiment of this application;
FIG. 7A is a schematic diagram in which an actually scheduled S-SSB occupies one of M groups according to an embodiment of this application;
FIG. 7B is a schematic diagram of a time domain location of a first resource set in an S-SSB period according to an embodiment of this application;
FIG. 7C and FIG. 7D are schematic diagrams of two structures of an S-SSB according to an embodiment of this application;
FIG. 8 is a schematic diagram of a first resource set and a second resource set according to an embodiment of this application;
FIG. 9A is a schematic diagram of a first resource set and a second resource set according to an embodiment of this application;
FIG. 9B is a schematic diagram in which an actually scheduled S-SSB occupies one of M groups according to an embodiment of this application;
FIG. 10 is a schematic diagram of a first resource set and a second resource set according to an embodiment of this application;
FIG. 11 is a schematic diagram of distribution of X candidate resources at equal intervals in time domain according to an embodiment of this application;
FIG. 12A is a schematic diagram of distribution of X candidate resources at unequal intervals in time domain according to an embodiment of this application;
FIG. 12B is another schematic diagram of distribution of X candidate resources at unequal intervals in time domain according to an embodiment of this application;
FIG. 13 is a flowchart of a second communication method according to an embodiment of this application;
FIG. 14A to FIG. 14C are several schematic diagrams of a $j^{th}$ synchronization signal block according to an embodiment of this application;
FIG. 15 is a flowchart of a third communication method according to an embodiment of this application;
FIG. 16A shows several patterns of a location of a DMRS in a slot of a normal CP according to an embodiment of this application;
FIG. 16B shows several patterns of a location of a DMRS in a slot of an extended CP according to an embodiment of this application;
FIG. 17A to FIG. 17D are several schematic diagrams of a $j^{th}$ synchronization signal block according

FIG. 18A to FIG. 18C are several schematic diagrams of a $j^{th}$ synchronization signal block according to an embodiment of this application;

FIG. 19A to FIG. 19E are several schematic diagrams of a $j^{th}$ synchronization signal block according to an embodiment of this application;

FIG. 20A to FIG. 20D are several schematic diagrams of a $j^{th}$ synchronization signal block according to an embodiment of this application;

FIG. 21A to FIG. 21D are several schematic diagrams of a $j^{th}$ synchronization signal block according to an embodiment of this application;

FIG. 22A to FIG. 22C are several schematic diagrams of a $j^{th}$ synchronization signal block according to an embodiment of this application;

FIG. 23 is a schematic block diagram of a first type of first terminal apparatus according to an embodiment of this application;

FIG. 24 is another schematic block diagram of a first type of first terminal apparatus according to an embodiment of this application;

FIG. 25 is a schematic block diagram of a first type of second terminal apparatus according to an embodiment of this application;

FIG. 26 is another schematic block diagram of a first type of second terminal apparatus according to an embodiment of this application;

FIG. 27 is a schematic block diagram of a second type of first terminal apparatus according to an embodiment of this application;

FIG. 28 is another schematic block diagram of a second type of first terminal apparatus according to an embodiment of this application;

FIG. 29 is a schematic block diagram of a second type of second terminal apparatus according to an embodiment of this application;

FIG. 30 is another schematic block diagram of a second type of second terminal apparatus according to an embodiment of this application;

FIG. 31 is a schematic block diagram of a third type of first terminal apparatus according to an embodiment of this application;

FIG. 32 is another schematic block diagram of a third type of first terminal apparatus according to an embodiment of this application;

FIG. 33 is a schematic block diagram of a third type of second terminal apparatus according to an embodiment of this application;

FIG. 34 is another schematic block diagram of a third type of second terminal apparatus according to an embodiment of this application;

FIG. 35 is another schematic block diagram of a communication apparatus according to an embodiment of this application;

FIG. 36 is still another schematic block diagram of a communication apparatus according to an embodiment of this application; and

FIG. 37 is yet another schematic block diagram of a communication apparatus according to an embodiment of this application.

## DESCRIPTION OF EMBODIMENTS

To make objectives, technical solutions and advantages of embodiments of this application clearer, the following further describes embodiments of this application in detail with reference to the accompanying drawings.

The following describes some terms in embodiments of this application, to help a person skilled in the art have a better understanding.

(1) A terminal apparatus may be, for example, a terminal device or a chip or another component that is disposed in the terminal device and that can implement a function of the terminal device. The terminal device includes a device that provides a voice and/or data connectivity for a user. Specifically, the terminal device includes a device that provides a voice for a user, or includes a device that provides data connectivity for a user, or includes a device that provides a voice and data connectivity for a user. For example, the terminal device may include a handheld device having a wireless connection function or a processing device connected to a wireless modem. The terminal device may communicate with a core network through a radio access network (radio access network, RAN), and exchange a voice or data with the RAN, or exchange a voice and data with the RAN. The terminal device may include user equipment (user equipment, UE), a wireless terminal device, a mobile terminal device, a device-to-device (device-to-device, D2D) communication terminal device, a vehicle-to-everything (vehicle-to-everything, V2X) terminal device, a machine-to-machine/machine type communication (machine-to-machine/-machine type communication, M2M/MTC) terminal device, an internet of things (internet of things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (or referred to as a "cellular" phone), a computer with a mobile terminal device, or a portable, pocket-sized, handheld, or computer built-in mobile apparatus. For example, the terminal device may include a device such as a personal communications service (personal communications service, PCS) phone, a cordless phone, a session initiation protocol (session initiation protocol, SIP) phone, a wireless local loop (wireless local loop, WLL) station, or a personal digital assistant (personal digital assistant, PDA). The terminal device further includes a limited device, for example, a device with low power consumption, a device with a limited storage capability, or a device with a limited computing capability. For example, the terminal device includes an information sensing device such as a barcode, radio frequency identification (radio frequency identification, RFID), a sensor, a global positioning system (global positioning system, GPS), or a laser scanner.

By way of example and not limitation, in embodiments of this application, the terminal device may alternatively be a wearable device. The wearable device may also be referred to as a wearable intelligent device, an intelligent wearable device, or the like, and is a generic term for wearable devices that are developed by applying wearable technologies to intelligent designs of daily wear, such as glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or some functions without depending on smartphones, for example, smart watches or smart glasses, and include devices that focus only on one type of application function and need to collaboratively work with other devices such as smartphones, for example, various smart bands, smart helmets, or smart jewelry for monitoring physical signs.

If the various terminal devices described above are located in a vehicle (for example, placed in the vehicle or mounted in the vehicle), the terminal devices may be all considered as vehicle-mounted terminal devices. For example, the vehicle-mounted terminal devices are also referred to as on-board units (on-board units, OBUs).

In embodiments of this application, any device that can perform data communication with a base station may be considered as a terminal device.

(2) A network device includes, for example, an access network (access network, AN) device such as a base station (for example, an access point), and may be a device that communicates with a wireless terminal device over an air interface through one or more cells in an access network. Alternatively, for example, a network device in a V2X technology is a road side unit (road side unit, RSU). The base station may be configured to perform mutual conversion between a received over-the-air frame and an IP packet, and serve as a router between a terminal device and a remaining part of the access network, where the remaining part of the access network may include an IP network. The RSU may be a fixed infrastructure entity supporting a V2X application, and may exchange a message with another entity supporting the V2X application. The network device may further coordinate attribute management of the air interface. For example, the network device may include an evolved NodeB (NodeB, eNB, or e-NodeB, evolutional NodeB) in an LTE system or a long term evolution-advanced (long term evolution-advanced, LTE-A) system, or may include a next generation NodeB (next generation NodeB, gNB) in a 5G new radio (new radio, NR) system (which is also referred to as an NR system), or may include a centralized unit (centralized unit, CU) and a distributed unit (distributed unit, DU) in a cloud access network (cloud radio access network, Cloud RAN) system. This is not limited in embodiments of this application.

The network device may further include a core network device. However, because embodiments of this application mainly relate to an access network device, a network device mentioned below may refer to an access network device unless otherwise specified.

(3) Vehicle-to-everything (vehicle-to-everything, V2X) means that a vehicle is connected to and communicates with the outside, and is a basic and key technology of future smart vehicles, automatic driving, and intelligent transportation and transport systems. On a basis of an existing D2D technology, a specific application requirement of the V2X is to be optimized in the V2X, to further reduce an access latency of a V2X device and resolve a resource conflict problem.

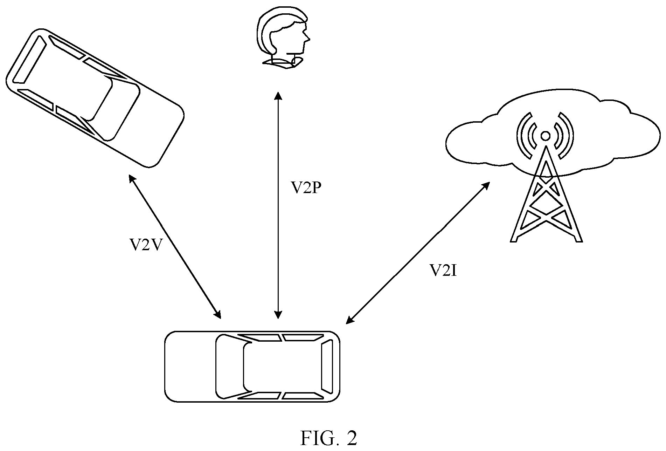

The V2X specifically further includes several application requirements such as vehicle-to-vehicle (vehicle-to-vehicle, V2V), vehicle-to-infrastructure (vehicle-to-infrastructure, V2I), and vehicle-to-pedestrian (vehicle-to-pedestrian, V2P) direct communication, and vehicle-to-network (vehicle-to-network, V2N) communication interaction. As shown in FIG. 2, V2V refers to communication between vehicles. V2P refers to communication between a vehicle and a person (including a pedestrian, a bicycle rider, a driver, or a passenger). V2I refers to communication between a vehicle and a network device, for example, an RSU. In addition, another type of V2N may be included in the V2I. The V2N refers to communication between a vehicle and a base station/network.

The V2P may be used for safety warning for a pedestrian or a non-motor vehicle on a road. A vehicle may communicate, through the V2I, with a road or even another infrastructure such as a traffic light or a road barrier, to obtain road management information such as a traffic light signal time sequence. The V2V may be used for information exchange and reminding between vehicles, and most typical application is application in an anti-collision safety system between vehicles. The V2N is currently the most widely used form of an internet of vehicles, and a main function of the V2N is to enable a vehicle to connect to a cloud server through a mobile network, so as to use an application function, such as navigation, entertainment, or anti-theft, provided by the cloud server.

In the V2X, communication is mainly performed between terminal devices. For a transmission mode between terminal devices, a current standard protocol supports a broadcast mode, a multicast mode, and a unicast mode.

Broadcast mode: The broadcast mode means that a terminal device used as a transmit end sends data in the broadcast mode, and a plurality of terminal devices can receive sidelink control information (sidelink control information, SCI) or a sidelink shared channel (sidelink shared channel, SSCH) from the transmit end.

Multicast mode: The multicast mode is similar to the broadcast mode. A terminal device used as a transmit end sends data in the broadcast mode. A group of terminal devices can parse SCI or an SSCH.

Unicast mode: In the unicast mode, one terminal device sends data to another terminal device, and the another terminal device does not need to or cannot parse the data.

(4) A time unit may be, for example, a slot (slot) or a subframe (subframe), or may be another time unit.

(5) In a case of a normal cyclic prefix, one slot in an NR system includes 14 OFDM symbols. In a case of an extended cyclic prefix, one slot in an NR system includes 12 OFDM symbols. For example, a slot length corresponding to a subcarrier spacing of 15 kHz is 1 ms, a slot length corresponding to a subcarrier spacing of 30 kHz is 0.5 ms, a slot length corresponding to a subcarrier spacing of 60 kHz is 0.25 ms, and a slot length corresponding to a subcarrier spacing of 120 kHz is 0.125 ms.

(6) The terms "system" and "network" may be used interchangeably in embodiments of this application. "At least one" means one or more, and "a plurality of" means two or more. The term "and/or" describes an association relationship between associated objects and represents that three relationships may exist. For example, A and/or B may represent the following cases: Only A exists, both A and B exist, and only B exists, where A and B may be singular or plural. The character "/" generally represents an "or" relationship between the associated objects. "At least one of the following items (pieces)" or a similar expression thereof refers to any combination of these items, including any combination of singular items (pieces) or plural items (pieces). For example, at least one item (piece) of a, b, and c may indicate: a, b, c, a and b, a and c, b and c, or a, b, and c, where a, b, and c may be singular or plural.

In addition, unless otherwise stated, ordinal numbers such as "first" and "second" in embodiments of this application are used to distinguish between a plurality of objects, but are not intended to limit an order, a time sequence, priorities, or importance of the plurality of objects. For example, a first value and a second value are merely used to distinguish between different values, and do not indicate different content, different priorities, different importance, or the like of the two values.

The foregoing describes concepts of some names used in embodiments of this application. The following describes technical features of embodiments of this application.

Device-to-device (device-to-device, D2D) communication or V2X communication is a technology by using which terminal devices directly communicate with each other.

In the NR-V2X, when a system design requirement is defined, a demand is made clear. Some services need to meet a demand for 99.99% or 99.999% communication reliability. However, a key technology in the V2X is to support a transmission mode in which a terminal device not connected to a network autonomously selects a resource. To achieve such high reliability, for a data channel, the NR-V2X agrees to a retransmission feedback mechanism and a hybrid automatic repeat request (hybrid automatic repeat request, HARQ) feedback mechanism that are for a data channel. Therefore, data transmission reliability can be improved.

For example, currently, to improve reliability of a sidelink (sidelink, S)-synchronization signal and physical broadcast channel block (synchronization signal and physical broadcast channel block, SSB), the NR-V2X proposes to support repeated transmission of the S-SSB, and provides a transmission structure of an S-SSB in a slot (slot). However, how to implement the repeated transmission of the S-SSB is not determined currently.

In the existing NR system, through a Uu interface, a terminal device may implement synchronization with a base station, obtain a system message, and the like by receiving an SSB. A PSS, an SSS, and a PBCH jointly form an SSB. As shown in FIG. 1, in time domain, one SSB occupies four OFDM symbols, namely, symbol 0 to symbol 3. In frequency domain, one SSB occupies 20 RBs, namely, 240 subcarriers, and in the 20 RBs, the subcarriers are numbered from 0 to 239. The PSS is located on middle 127 subcarriers in symbol 0, and the SSS is located on middle 127 subcarriers in symbol 2. The PBCH occupies all subcarriers of symbol 1 and symbol 3, and occupies some subcarriers in remaining subcarriers other than the subcarriers occupied by the SSS in all subcarriers of symbol 2.

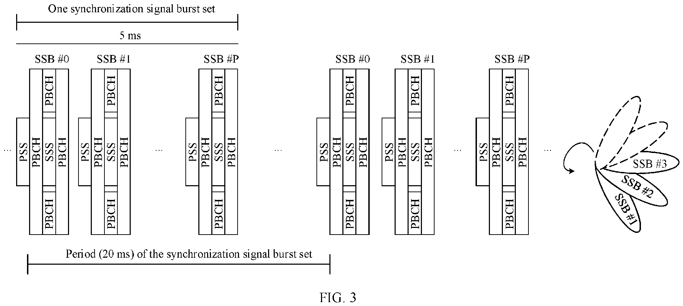

A synchronization signal burst set (synchronization signal burst set, SS burst set) is a set of SSBs included in one time of beam sweeping (beam sweep). An SS burst set period is an SSB period corresponding to a specific beam, and may be set to 5 ms (millisecond), 10 ms, 20 ms, 40 ms, 80 ms, 160 ms, or the like. 20 ms is a default period, that is, a period assumed when the terminal device initially searches for a cell. Currently, there are at most four, eight, or 64 SSBs in one SS burst set period. When a carrier frequency is less than or equal to 3 GHz, there are at most four SSBs in one SS burst set period. Each SS burst set is always located in a time interval of 5 ms. For a schematic diagram of the SS burst set, refer to FIG. 3. In FIG. 3, an example in which an SS burst set period is 20 ms and one SS burst set includes P SSBs is used.

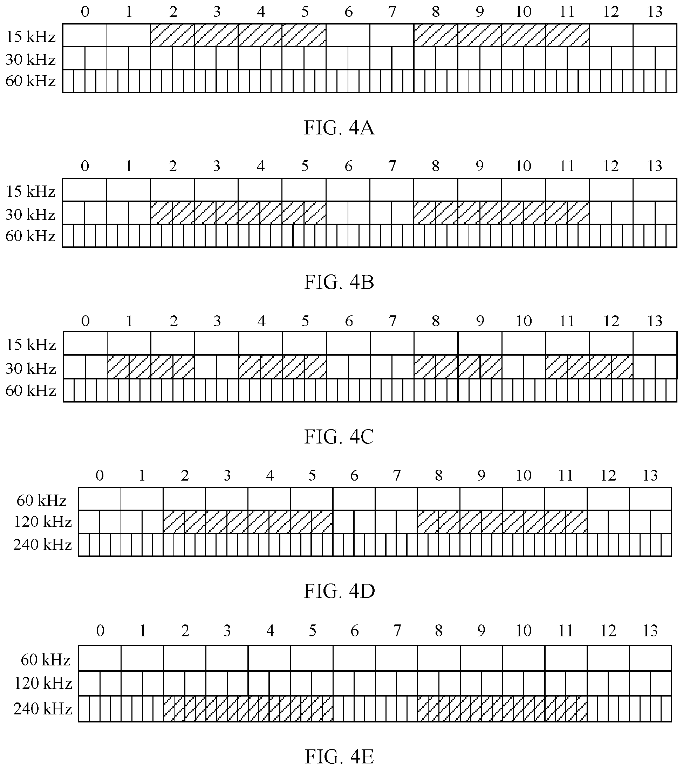

Further refer to FIG. 4A, FIG. 4B, FIG. 4C, FIG.

4D, and FIG. 4E. These figures each show a distribution manner of SSBs transmitted on the Uu interface. FIG. 4A shows a distribution manner, in a case of a 15 kHz subcarrier spacing, of SSBs included in one slot. It can be learned that one slot includes two SSBs, and boxes with slashes in FIG. 4A represent OFDM symbols occupied by the SSBs.

FIG. 4B shows a distribution manner, in a case of a 30 kHz subcarrier spacing, of SSBs included in one slot. It can be learned that one slot includes two SSBs, and boxes with slashes in FIG. 4B represent OFDM symbols occupied by the SSBs.

FIG. 4C shows another distribution manner, in a case of a 30 kHz subcarrier spacing, of SSBs included in one slot. It can be learned that one slot includes four SSBs, and boxes with slashes in FIG. 4C represent OFDM symbols occupied by the SSBs.

FIG. 4D shows a distribution manner, in a case of a 120 kHz subcarrier spacing, of SSBs included in one slot. It can be learned that one slot includes two SSBs, and boxes with slashes in FIG. 4D represent OFDM symbols occupied by the SSBs.

FIG. 4E shows a distribution manner, in a case of a 240 kHz subcarrier spacing, of SSBs included in one slot. It can be learned that one slot includes two SSBs, and boxes with slashes in FIG. 4E represent OFDM symbols occupied by the SSBs.

It can be learned that currently, one SSB transmitted on the Uu interface occupies four OFDM symbols. However, in an NR-V2X system, it is specified that the number of OFDM symbols occupied by one SSB is greater than 4. Then, it is clear that, a structure of the SSB currently used on the Uu interface cannot apply to the NR-V2X system.

In view of this, the technical solutions in embodiments of this application are provided. In embodiments of this application, a synchronization signal block period may include a first resource set, the first resource set includes M groups, and X candidate resources included in an i$^{th}$ group in the M groups may be used to carry X synchronization signal blocks. It is equivalent to that resources used to send synchronization signal blocks are specified. When a synchronization signal block needs to be sent, it only needs to select a resource from the resources, so that a resource selection manner is simplified. In addition, one synchronization signal block may occupy Y symbols, so that the technical solution provided in embodiments of this application can be applied to the NR-V2X system, or may be applied to another communication system in which it is specified that a synchronization signal block occupies Y symbols.

The technical solutions provided in embodiments of this application may be applied to a D2D scenario, which may be an NR D2D scenario, an LTE D2D scenario, or the like, or may be applied to a V2X scenario, which may be an NR V2X scenario, an LTE V2X scenario, or the like, or may be applied to another scenario or another communication system, for example, may be used in a scenario in which communication is performed through the Uu interface in the LTE system or the NR system, may be used in a scenario of communication between a plurality of aircrafts (such as unmanned aerial vehicles, airplanes, or hot air balloons), or may be used in a scenario of communication between base stations (for example, a scenario of communication between macro base stations, between a macro base station and a small cell, or between small cells). This is not specifically limited. When the technical solutions are used in a scenario of communication between aircrafts or between base stations, embodiments of this application may be implemented by a terminal apparatus or a network device. In other words, the methods in embodiments of this application are not limited to be implemented by the terminal apparatus.

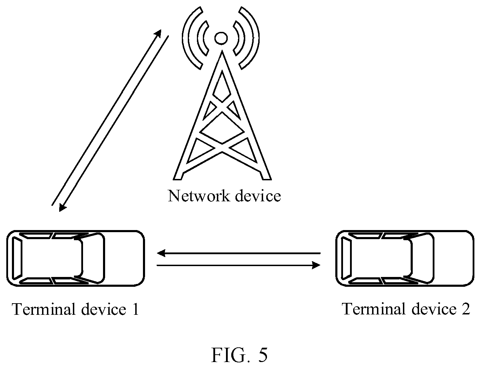

The following describes a network architecture to which embodiments of this application are applied. FIG. 5 shows a network architecture to which embodiments of this application are applied.

FIG. 5 includes a network device and two terminal devices, which are respectively a terminal device 1 and a terminal device 2. The two terminal devices may be both connected to the network device. Alternatively, in the two terminal devices, only the terminal device 1 may be connected to the network device, and the terminal device 2 is not connected to the network device. The two terminal devices may also communicate with each other through a sidelink, in other words, the terminal device 1 is a terminal device with network coverage, and the terminal device 2 is a terminal device with partial network coverage. FIG. 5 uses an example in which only the terminal device 1 is connected to the network device. Certainly, the number of terminal devices in FIG. 5 is merely an example. During actual application, the network device may provide services for a plurality of terminal devices.

The network device in FIG. 5 is, for example, an access network device such as a base station. The access network device corresponds to different devices in different systems. For example, the access network device may correspond to an eNB in a 4th generation (4th generation, 4G) system, and correspond to a 5G access network device in a 5G system, for example, a gNB, or is an access network device in a subsequent evolved communication system.

For example, the terminal device in FIG. 5 is an in-vehicle terminal device or a vehicle. However, the terminal device in embodiments of this application is not limited thereto.

The following describes the technical solutions in embodiments of this application with reference to the accompanying drawings. In embodiments of this application, time domain symbols that carry modulation data and a signal are also referred to as "symbols" for short. These symbols may be symbols generated based on an OFDM waveform, symbols generated based on a DFT-S-OFDM symbol, or symbols generated in a manner such as single carrier modulation (such as code division multiple access (code division multiple access, CDMA) or time division multiple access (time division multiple access, TDMA)). This is not limited in embodiments of this application.

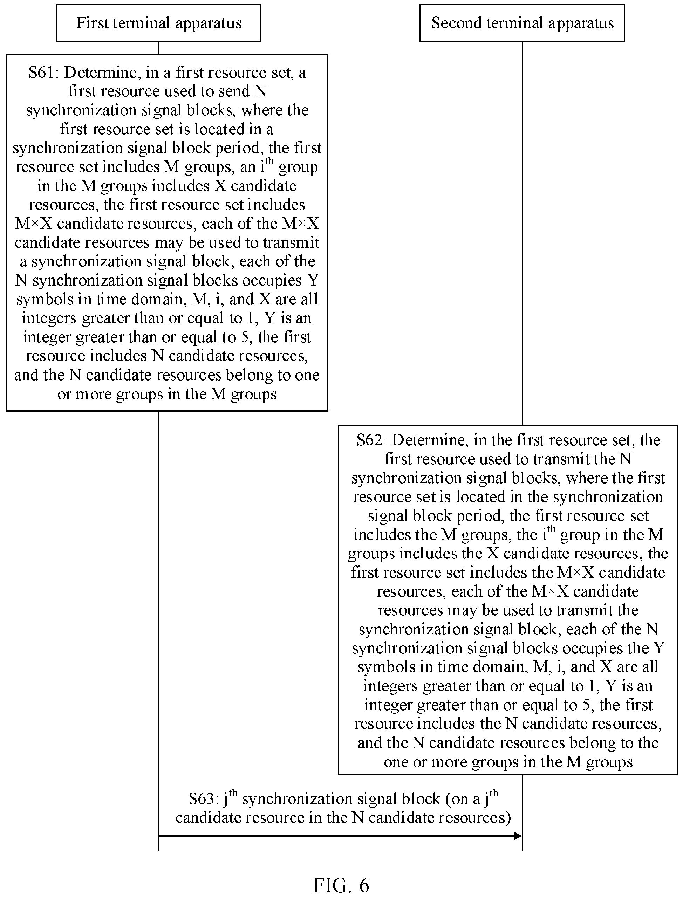

An embodiment of this application provides a first communication method. FIG. 6 shows a flowchart of the method. In the following description process, an example in which the method is applied to the network architecture shown in FIG. 5 is used. In addition, the method may be performed by two communication apparatuses. The two communication apparatuses are, for example, a first communication apparatus and a second communication apparatus. The first communication apparatus or the second communication apparatus may be a network device or a communication apparatus that can support a function required by the network device to implement the method, or may be a terminal device or a communication apparatus that can support a function required by the terminal device to implement the method, or certainly may be another communication apparatus, for example, a chip system. In addition, an implementation of the first communication apparatus or the second communication apparatus is not limited. For example, the two communication apparatuses may be implemented in a same form. For example, the two communication apparatuses are implemented in a device form. Alternatively, the two communication apparatuses may be implemented in different forms. For example, the first communication apparatus is implemented in a device form, and the second communication apparatus is implemented in a chip system form. The network device is, for example, a base station.

For ease of description, the following uses an example in which the method is performed by a terminal apparatus and a terminal apparatus, to be specific, an example in which the first communication apparatus is a terminal apparatus (for example, referred to as a first terminal apparatus) and the second communication apparatus is also a terminal apparatus (for example, referred to as a second terminal apparatus). Because this embodiment uses an example in which the method is applied to the network architecture shown in FIG. 5, the first terminal apparatus described below may implement a function of the terminal device 1 in the network architecture shown in FIG. 5, and the second terminal apparatus described below may implement a function of the terminal device 2 in the network architecture shown in FIG. 5. In addition, the following may further relate to a network device. The network device described below may implement a function of the network device in the network architecture shown in FIG. 5. In a description process of this embodiment of this application, an example in which a synchronization signal block is an S-SSB is used. Actually, the synchronization signal block is not limited thereto. A range of the synchronization signal block described in this embodiment of this application may include any signal used for synchronization, for example, may include a sidelink synchronization signal block, or may include a synchronization signal block used for a Uu interface.

S61: The first terminal apparatus determines, in a first resource set, a first resource used to send N synchronization signal blocks. N is a positive integer.

The first resource set may be located in a synchronization signal block period. The first resource is included in the first resource set, that is, the first resource belongs to the first resource set, that is, the first resource is a subset of the first resource set. The first resource set may include M groups. An $i^{th}$ group in the M groups may include X candidate resources. The X candidate resources may be used to carry X synchronization signal blocks, that is, the X candidate resources may be used to transmit X synchronization signal blocks. One of the candidate resources may be used to transmit one synchronization signal block. The first resource set may include M×X candidate resources, and each of the M×X candidate resources may be used to transmit a synchronization signal block. Each of the N synchronization signal blocks may occupy Y symbols in time domain. Y is an integer greater than or equal to 5, and M, i, and X are all positive integers. In addition, since the first resource may be used to send the N synchronization signal blocks, the first resource may include N candidate resources, and the N candidate resources belong to one or more groups in the M groups. That is, the N candidate resources may be located in one of the M groups, or may be located in a plurality of groups in the M groups. N may be greater than or equal to X, or certainly may be less than X. It should be noted that, the N candidate resources may periodically appear at an interval of the synchronization signal block period. In this case, the N synchronization signal blocks may be periodically sent at the interval of the synchronization signal block period.

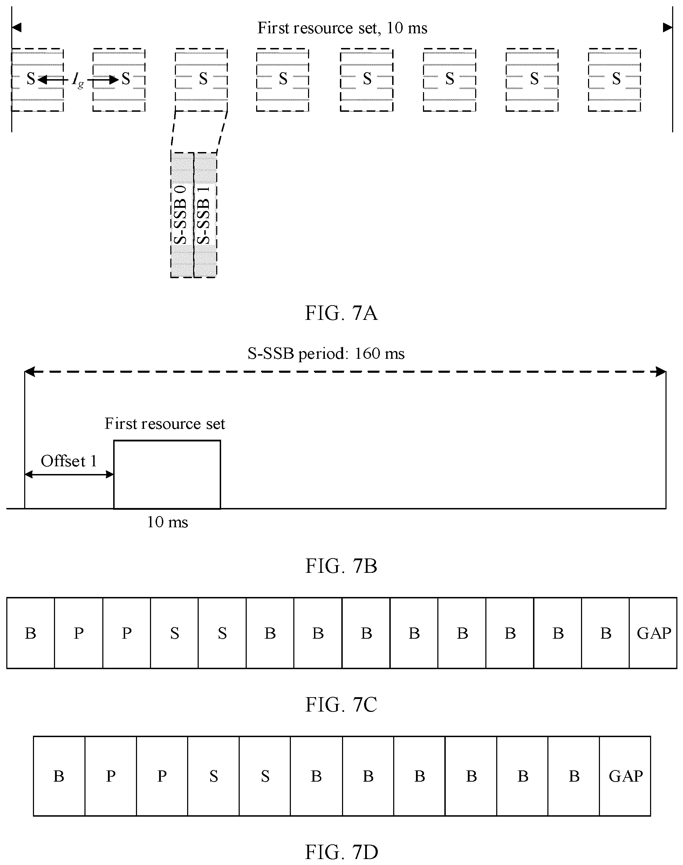

FIG. 7A is a schematic diagram of M groups included in a first resource set. In FIG. 7A, M=8 is used as an example. In FIG. 7A, the $3^{rd}$ group from left to right indicates a group in which actually sent S-SSBs are located, and S in each small box indicates the number of actually sent S-SSBs in the group.

For example, the N synchronization signal blocks include a $j^{th}$ synchronization signal block, and the $j^{th}$ synchronization signal block may occupy all symbols in one slot in time domain, that is, Y symbols are all the symbols in the one slot. For example, for some slots, a gap (GAP) is not included or a blank symbol not used for data sending and receiving is not included. In this case, one synchronization signal block may occupy the entire slot. Alternatively, the $j^{th}$ synchronization signal block may occupy remaining symbols other than the last symbol in one slot in time domain, that is, Y symbols are symbols other than the last symbol in the one slot. For example, the Y symbols may be all remaining symbols other than the last symbol in the one slot. For example, for some slots, a GAP is included or a blank symbol not used for data sending and receiving is included, and the GAP is carried on the last symbol in the slot. In this case, a synchronization signal block cannot occupy the last symbol in the slot, but may occupy remaining symbols other than the last symbol in the slot. j is an integer greater than or equal to 1 and less than or equal to N. The j$^{th}$ synchronization signal block may be any one of the N synchronization signal blocks. In addition, in this embodiment of this application, that a synchronization signal block occupies Y symbols may be equivalent to that a candidate resource occupies Y symbols. Optionally, when a slot or a data slot of another synchronization signal block is further sent after a time domain of a first synchronization signal block is sent, the last symbol of the synchronization signal block may be a symbol of a PSBCH, that is, in this case, the last symbol is not a GAP. Optionally, after the time domain of the first synchronization signal block is sent, the last symbol of the synchronization signal block may be a GAP symbol when data or a signal in a subsequent slot needs to be received, that is, in this case, no sending or receiving is performed on the last symbol. For example. when N is greater than 1 and the N synchronization signal blocks are consecutively sent in slots, in a slot in which first N-1 synchronization signal blocks are located, the last symbol of each synchronization signal block is a PSBCH, and the last symbol of an N$^{th}$ synchronization signal block is a GAP symbol.

In this embodiment of this application, the number of symbols occupied by a synchronization signal block is greater than 4. This is equivalent to that, this embodiment of this application provides a new synchronization signal block (which is new relative to an SSB on a Uu interface in an NR system) with a transmission manner, so that the technical solution provided in this embodiment of this application can be applied to an NR-V2X system, or may be applied to another communication system in which it is specified that a synchronization signal block occupies Y symbols.

For example, if the synchronization signal block is an S-SSB, a synchronization signal block period is an S-SSB period. The S-SSB period may be configured for the first terminal apparatus by the network device by using signaling. For example, the network device sends third signaling to the first terminal apparatus. The third signaling indicates the S-SSB period. After receiving the third signaling, the first terminal apparatus may determine the S-SSB period. Alternatively, the S-SSB period may be preconfigured in the first terminal apparatus, or specified by using a protocol. For example, the protocol specifies that the S-SSB period is 160 ms. For example, one S-SSB period includes one or more resource sets. For example, one S-SSB period may include one, two, or more resource sets. In an optional manner, one S-SSB period may include at least two resource sets, that is, one S-SSB period may include two, three, or more resource sets. For example, one S-SSB period includes two resource sets. One of the two resource sets may include a candidate resource used to send a synchronization signal block, and the remaining one resource set may include a candidate resource used to receive a synchronization signal block. For example, one S-SSB includes two resource sets. The two resource sets are a first resource set and a second resource set. The first resource set includes a candidate resource used to send a synchronization signal block, and the second resource set includes a candidate resource used to receive a synchronization signal block. Optionally, for N synchronization signal blocks included in each of different resource sets, the number of the N synchronization signal blocks and locations of the N synchronization signal blocks in each resource set are correspondingly the same. Alternatively, it is possible that each of all or some resource sets included in one S-SSB includes a candidate resource used to send a synchronization signal block and a candidate resource used to receive a synchronization signal block. That is, a synchronization signal block may be sent or received by using one resource set.

A resource set may also be referred to as a synchronization signal set, a candidate resource set, or the like. One resource set may include one or more candidate resources. The candidate resource is also a concept of a resource, and may also be understood as a resource. For example, the candidate resource may also be referred to as a resource. Each candidate resource may be used to carry one S-SSB. Structures of different resource sets included in one S-SSB period may be the same or may be different. For example, one S-SSB period includes a first resource set and a second resource set, and a structure of the first resource set and a structure of the second resource set may be the same or may be different. A structure of a resource set may refer to the number of candidate resources included in the resource set, locations of the candidate resources in time domain, and the like.

A location of a resource set included in an S-SSB period may be specified by using a protocol, or may be configured for a terminal apparatus by the network device. For example, for a time domain location of the first resource set in the S-SSB period, refer to FIG. 7B. FIG. 7A uses an example in which a time domain length of the first resource set is 10 ms and the S-SSB period is 160 ms. Offset 1 in FIG. 7A refers to a time difference between time domain start time of the first resource set and time domain start time of the S-SSB period. For example, the network device may send first signaling to the first terminal apparatus, and the first signaling may indicate a time domain location of the first resource set in the synchronization signal block period. After receiving the first signaling, the first terminal apparatus may determine the time domain location of the first resource set in the synchronization signal block period. The second terminal apparatus may also receive the first signaling. If the second terminal apparatus may also receive the first signaling, the second terminal apparatus may also determine a location of the first resource set in the synchronization signal block period. However, the second terminal apparatus may not be capable of determining whether the first resource set determined in this case is a resource set used to receive a synchronization signal block. Alternatively, if the second terminal apparatus can determine that the first resource set is a resource set used to receive a synchronization signal block, the second terminal apparatus may perform blind detection on the first resource set when receiving the synchronization signal block. Alternatively, before receiving a synchronization signal block, the second terminal apparatus cannot learn of information about timing and an accurate frequency location that is of the synchronization signal block during current communication. The information needs to be obtained by detecting the synchronization signal block.

In addition, the first terminal apparatus may further obtain first configuration information. The first configuration information may indicate one or more of the following information: a value of N, the number of synchronization signal blocks that are sent in a repeated manner on the first resource, a slot location at which a synchronization signal block sent on the first resource is located in the synchronization signal block period, a time domain offset value of a start location of the first resource in the synchronization signal block period, or a time domain location of the first resource in the first resource set. For example, the first configuration information may indicate the value of N. Alternatively, the first configuration information may indicate the number of synchronization signal blocks that are sent in the repeated manner on the first resource, and the slot location at which the synchronization signal block sent on the first resource is located in the synchronization signal block period. Alternatively, the first configuration information may indicate the value of N, the slot location at which the synchronization signal block sent on the first resource is located in the synchronization signal block period, and the time domain offset value of the start location of the first resource in the synchronization signal block period. Alternatively, the first configuration information may indicate the value of N, the number of synchronization signal blocks that are sent in the repeated manner on the first resource, the slot location at which the synchronization signal block sent on the first resource is located in the synchronization signal block period, the time domain offset value of the start location of the first resource in the synchronization signal block period, and the time domain location of the first resource in the first resource set. The first configuration information may be preconfigured in the first terminal apparatus, and may be directly obtained by the first terminal apparatus. Alternatively, the first configuration information may be sent by the network device to the first terminal apparatus, and by receiving the first configuration information from the network device, the first terminal apparatus obtains the first configuration information.

The number of synchronization signal blocks sent in the repeated manner on the first resource may be referred to as a repetition factor, which is, for example, represented by R. The first resource may be used to send the N synchronization signal blocks, and the repetition factor H may be less than or equal to N. If the repetition factor H is equal to N, the N synchronization signal blocks are sent in the repeated manner. If the repetition factor H is less than N, some of the N synchronization signal blocks are sent in the repeated manner, and it may be considered that every H synchronization signal blocks in the N synchronization signal blocks are sent in the repeated manner. For example, N=4, and the repetition factor H is 2. In this case, in four synchronization signal blocks, only two synchronization signal blocks may be sent in the repeated manner, and it may be considered that the two synchronization signals have same content or a same sending direction. Alternatively, it is possible that, in four synchronization signal blocks, a synchronization signal block 1 and a synchronization signal block 2 are sent in the repeated manner, and the other synchronization signal block 3 and synchronization signal block 4 are also sent in the repeated manner. Content of the synchronization signal block 1 and content of the synchronization signal block 2 are the same. Content of the synchronization signal block 3 and content of the synchronization signal block 4 are the same. However, content or a sending direction of the synchronization signal block 1 may be different from content or a sending direction of the synchronization signal block 3. Optionally, the value of H may be greater than, equal to, or less than X. For example, when X is 4, H may be set to 1, 2, 4, or 8. When R is set to 1, 2, or 4, the H synchronization signal blocks may be sent in the repeated manner in a same group. When H is 8, the H synchronization signal blocks may be sent in the repeated manner in two consecutive groups. Optionally, whether the N synchronization signal blocks appear consecutively in one or more groups or appear in a distributed manner in a plurality of groups may be configured or preconfigured by using signaling. For example, N=4, M=8, and X=4. When a field is used to indicate that "the N synchronization signal blocks appear consecutively", the N synchronization signal blocks are configured in a group for transmission. When a field is used to indicate that "the N synchronization signal blocks appear in the distributed manner", the N synchronization signal blocks may be configured in four groups for transmission, and one synchronization signal block appears in a same location in each group. Further, optionally, when the N synchronization signal blocks appear in the distributed manner in the plurality of groups, the number of synchronization signal blocks that appear in each group is also configurable.

The first configuration information may further indicate the time domain location of the first resource. For example, the first configuration information may indicate the time domain location of the first resource by indicating the slot location at which the synchronization signal block sent on the first resource is located in the synchronization signal block period. The slot location at which the synchronization signal block sent on the first resource is located in the synchronization signal block period may also be understood as locations of slots in which the N candidate resources included in the first resource are located in the synchronization signal block period, or may also be understood as a location of a slot in which the 1st candidate resource in the N candidate resources included in the first resource is located in the synchronization signal block period, and a slot offset of a remaining candidate resource in the N candidate resources relative to the 1st candidate resource. The 1st candidate resource in the N candidate resources herein is a candidate resource that is the earliest in time domain. For example, the first configuration information may indicate a location of a slot in which each of the N candidate resources is located. In this case, the first terminal apparatus may directly determine the locations of the slots in which the N candidate resources are located. Alternatively, the first configuration information may indicate the location of the slot in which the 1st candidate resource in the N candidate resources is located in the synchronization signal block period, and indicate the slot offset of the remaining candidate resource other than the 1st candidate resource in the N candidate resources relative to the 1st candidate resource. For example, N=4. The first configuration information may indicate a location of a slot in which the 1st candidate resource in the four candidate resources is located in the synchronization signal block period. For example, the location of the slot in which the 1st candidate resource is located in the synchronization signal block period is slot 2. In addition, the first configuration information further indicates that in the four candidate resources, a slot offset of the 2nd candidate resource relative to the 1st candidate resource is 1, a slot offset of the 3rd candidate resource relative to the 1st candidate resource is 3, and a slot offset of the 4th candidate resource relative to the 1st candidate resource is 5. In this case, the first terminal apparatus may determine that the location of the slot in which the 1st candidate resource is located in the synchronization signal block period is slot 2, a location of a slot in which the 2nd candidate resource is located in the synchronization signal block period is slot 3, a location of a slot in which the 3rd candidate resource is located in the synchronization signal block period is slot 5, and a location of a slot in which the 4th candidate resource is located in the synchronization signal block period is slot 7.

Alternatively, the first configuration information may indicate the time domain location of the first resource by indicating a time domain offset value of the first resource in the synchronization signal block period. For example, a time domain offset value of a candidate resource in the synchronization signal block period may be a time domain offset value of a start location of the candidate resource relative to a start location of the synchronization signal block period. For example, the first configuration information may indicate a time domain offset value of each of the N candidate resources in the synchronization signal block period. In this case, the first terminal apparatus may determine time domain locations of the N candidate resources based on the start location of the synchronization signal block period and the time domain offset value of each of the N candidate resources in the synchronization signal block period.

Alternatively, the first configuration information may indicate the time domain location of the first resource by indicating the time domain location of the first resource in the first resource set. For example, a location of the first resource set may be specified by using a protocol or configured by the network device, or for example, may be indicated by using the first configuration information. For example, that the first configuration information indicates the time domain location of the first resource in the first resource set may be implemented as that the first configuration information indicates a time domain location of each of the N candidate resources in the first resource set, for example, may indicate an identifier of a group in which each of the N candidate resources is located in the first resource set, or may indicate an identifier of each candidate resource in a group in which the candidate resource is located, or may indicate an identifier of a slot in which each candidate resource is located in the first resource set. Alternatively, that the first configuration information indicates the time domain location of the first resource in the first resource set may be implemented as that the first configuration information indicates a time domain location of the 1st candidate resource in the N candidate resources in the first resource set, for example, may indicate an identifier of a group in which the 1st candidate resource is located in the first resource set, or may indicate an identifier of the 1st candidate resource in a group in which the 1st candidate resource is located, or may indicate an identifier of a slot in which the 1st candidate resource is located in the first resource set. In addition, the first configuration information may further indicate an offset value of each of the remaining candidate resources other than the 1st candidate resource in the N candidate resources relative to the 1st candidate resource, so that the first terminal apparatus may determine the time domain locations of the N candidate resources in the first resource set based on the time domain location of the 1st candidate resource in the first resource set and the offset values of the remaining candidate resources relative to the 1st candidate resource. Optionally, identifiers of groups for sending the first resource may be indicated in a bitmap (bitmap) manner in the first resource set. For example, if M=8, {10101010} may be used to indicate that the N synchronization signal blocks are sent on the 2nd, 4th, 6th, and 8th groups.

In addition, a location of the first resource set in the synchronization signal block period is configurable, that is, the location of the first resource set in the synchronization signal block period is not fixed. For example, the network device may configure the location of the first resource set in the synchronization signal block period. The first resource set may need to occupy limited duration in the synchronization signal block period. For example, the duration occupied by the first resource set may be less than or equal to 10 ms, and optionally, the first resource set is located in a same radio frame. In this way, a receive end can combine synchronization signals received by using the first resource set, to obtain a combination gain, reduce a reception latency, and correspondingly reduce a buffer of the receive end. Optionally, the location of the first resource set in the synchronization signal block period is indicated by using an offset value in a unit of a radio frame. Optionally, a size of the first resource set should be a value far less than the synchronization signal block period, for example, no more than 10 ms. A buffer size and detection complexity of a receiver machine of a synchronization signal block can be reduced only in this way.

For M, M may be equal to 1, or may be greater than 1. If M=1, the first resource set includes one group, the group includes X candidate locations, and $X=L_{max}$. In this case, for a candidate resource included in the first resource set, an identifier of a group in which the candidate resource is located is an identifier of the first resource set, and an identifier of the candidate resource in the group in which the candidate resource is located is an identifier of the candidate resource in the first resource set. Then, if the first configuration information needs to indicate the time domain locations of the N candidate resources, the first configuration information may directly indicate the time domain locations of the N candidate resources; or may indicate a time domain location of the 1st candidate resource in the N candidate resources in the synchronization signal block period, and indicate an offset of the remaining candidate resource other than the 1st candidate resource in the N candidate resources relative to the 1st candidate resource. Alternatively, if M>1, if the first configuration information needs to indicate the time domain locations of the N candidate resources, the first configuration information may directly indicate the time domain locations of the N candidate resources; or may indicate a time domain location of the 1st candidate resource in the N candidate resources in the synchronization signal block period, and indicate an offset of the remaining candidate resource other than the 1st candidate resource in the N candidate resources relative to the 1st candidate resource; or may indicate the time domain location of the 1st candidate resource in the N candidate resources in the first resource set may be indicated, and indicate the offset of the remaining candidate resource other than the 1st candidate resource in the N candidate resources relative to the 1st candidate resource.

An example in which one synchronization signal block occupies all the remaining symbols other than the last symbol in one slot is used. If a slot occupied by the jth synchronization signal block corresponds to a normal (normal) cyclic prefix (cyclic prefix, CP), and the slot of the normal CP includes 14 symbols in total, the number of symbols occupied by the jth synchronization signal block in the slot is 13. Alternatively, if a slot occupied by the jth synchronization signal block corresponds to an extended (extended) CP, and the slot of the extended CP includes 12 symbols in total, the number of symbols occupied by the jth synchronization signal block in the slot is 11.

One synchronization signal block may include a primary synchronization signal, a secondary synchronization signal, and a broadcast channel. In one slot, the primary synchronization signal may occupy two symbols, the secondary synchronization signal occupies two symbols, and the broadcast channel may occupy at least six symbols. Alternatively, it is described as: The primary synchronization signal occupies two symbols in Y symbols, the secondary synchronization signal occupies two symbols in the Y symbols, and the broadcast channel occupies at least six symbols in the Y symbols. Certainly, in this case, Y may be an integer greater than or equal to 10. The at least six symbols described herein may include six, seven, or more symbols. A synchronization signal block S-SSB on a sidelink is used as an example. The S-SSB may include a sidelink primary synchronization signal (sidelink primary synchronization signal, SPSS) and a sidelink secondary synchronization signal (sidelink secondary synchronization signal, SSSS), and a physical sidelink broadcast channel (physical sidelink broadcast channel, PSBCH). The broadcast channel thereof is the physical sidelink broadcast channel PSBCH. In one slot, the SPSS may occupy two symbols, the SSSS may occupy two symbols, and the PBSCH may occupy at least six symbols.

In an example, one synchronization signal block may occupy a plurality of consecutive symbols in one slot. If the slot corresponds to a normal CP, the plurality of consecutive symbols are, for example, {B-P-P-S-S-B-B-B-B-B-B-B}. Alternatively, if the slot corresponds to an extended CP, the plurality of consecutive symbols are, for example, {B-P-P-S-S-B-B-B-B-B-B}. "-" represents that two symbols before and after "-" are adjacent in time domain. B represents a symbol occupied by the broadcast channel. P represents a symbol occupied by a first synchronization sequence (for example, a primary synchronization signal sequence). S represents a symbol occupied by a second synchronization sequence (for example, a secondary synchronization signal sequence).

FIG. 7C is a schematic diagram in which symbols occupied by an S-SSB are {B-P-P-S-S-B-B-B-B-B-B-B}. FIG. 7D is a schematic diagram in which symbols occupied by an S-SSB are {B-P-P-S-S-B-B-B-B-B-B}. It can be learned that the S-SSB does not occupy the last symbol in a slot. In both FIG. 7C and FIG. 7D, an example in which the last symbol in the slot is occupied by a GAP is used.

In an optional implementation, some or all of the X synchronization signal blocks carried on the X candidate resources are repeatedly transmitted. The repeated transmission may also be described as: Transmission is performed in a quasi co-located (quasi co-located, QCL) manner or in a same direction. The transmission herein may include sending or receiving. Correspondingly, an embodiment of this application provides a repeated transmission structure of a synchronization signal block, so that a repeated transmission mechanism is implemented. Transmission reliability can be improved by repeatedly transmitting a synchronization signal. Quasi co-location represented by QCL herein means that signals are sent from a same device and a same location to a same direction; or sent by a plurality of different devices. However, from a perspective of a receiver machine, one or more of parameters of transmission from the plurality of devices, such as a latency, Doppler spread, a transmission direction, or power, may be considered as a parameter of transmission from a same device.

If a frequency of the first resource set is a low frequency (FR1), duration occupied by all synchronization signal blocks carried by the first resource set may be less than or equal to 2 milliseconds (ms), in other words, duration occupied by all candidate resources included in the first resource set may be less than or equal to 2 ms. For example, a subcarrier spacing corresponding to the first resource set is 15 kHz, the first resource set may include two candidate resources, and duration occupied by each candidate resource may be 1 ms. In this case, duration occupied by all the synchronization signal blocks carried by the first resource set may be equal to 2 ms. It should be noted that, if one synchronization signal block does not occupy the last symbol of one slot, actually, duration occupied by the synchronization signal block may be less than 1 ms. In this case, duration occupied by all the synchronization signal blocks carried by the first resource set may be actually less than 2 ms. However, this difference is not described in a one-by-one listing manner in descriptions of this embodiment of this application. In the descriptions, duration occupied by one synchronization signal block is 1 ms. In this case, the duration occupied by all the synchronization signal blocks carried by the first resource set is 2 ms. However, the foregoing descriptions in this embodiment of this application include both a scenario in which a time domain resource occupied by one synchronization signal block is less than duration occupied by one slot and a scenario in which a time domain resource occupied by one synchronization signal block is equal to duration occupied by one slot.

Alternatively, if a frequency of the first resource set is a high frequency (FR2), duration occupied by all synchronization signal blocks carried by the first resource set may be less than or equal to 8 ms, in other words, duration occupied by all candidate resources included in the first resource set may be less than or equal to 8 ms. For example, a subcarrier spacing corresponding to the first resource set is 120 kHz, the first resource set may include two candidate resources, and duration occupied by each candidate resource may be 1 ms. In this case, duration occupied by all the synchronization signal blocks carried by the first resource set may be equal to 8 ms. Similarly, it should be noted that, if one synchronization signal block does not occupy the last symbol of one slot, actually, duration occupied by the synchronization signal block may be less than 1 ms. In this case, duration occupied by all the synchronization signal blocks carried by the first resource set may be actually less than 8 ms. However, in this embodiment of this application, this difference may be ignored. It is considered that, if duration occupied by one synchronization signal block is 1 ms, duration occupied by all the synchronization signal blocks carried by the first resource set is 8 ms.

For example, duration occupied by the synchronization signal block carried by the $i^{th}$ group of the M groups may be 1 ms, or duration occupied by a synchronization signal block carried in each of the M groups may be 1 ms. Alternatively, it is described as that duration occupied by X candidate resources included in the $i^{th}$ group in the M groups is 1 ms, or duration occupied by all candidate resources included in each of the M groups is 1 ms. For example, M=8. The first resource set includes eight groups in total. Duration occupied by all candidate resources included in one group thereof is 1 ms, or duration occupied by all candidate resources included in each group thereof is 1 ms. If duration occupied by all the candidate resources included in each group thereof is 1 ms, duration occupied by all the synchronization signal blocks carried by the first resource set may be 8 ms. For example, a value of X may be related to a subcarrier spacing of the carrier on which the first resource set is located. A larger subcarrier spacing of the carrier on which the first resource set is located indicates a smaller value of X. On the contrary, a smaller subcarrier spacing of the carrier on which the first resource set is located indicates a larger value of X.

In embodiments of this application, for example, a frequency greater than a first threshold is referred to as a high frequency, and a frequency less than or equal to the first threshold is referred to as a low frequency. Alternatively, a frequency greater than or equal to a first threshold is referred to as a high frequency, and a frequency less than the first threshold is referred to as a low frequency. The first threshold may be specified by using a protocol, preconfigured in the terminal apparatus, or configured by the network device; or the first threshold may not exist, and is merely an intermediate concept introduced to distinguish between the high frequency and the low frequency. For example, the first threshold is 6 GHz, 7 GHz, or 7.125 GHz, or may be another value. This is not limited in embodiments of this application.

For example, the first resource set may include at most $L_{max}$ candidate resources, and the $L_{max}$ candidate resources may be grouped into M groups, in other words, the first resource set includes the M groups, and the M groups include the $L_{max}$ candidate resources in total. The M groups may include an $i^{th}$ group. The $i^{th}$ group includes X candidate resources. The X candidate re-

sources belong to the $L_{max}$ candidate resources. X is less than or equal to $L_{max}$. The number of candidate resources included in each of the M groups may be the same or may be different. An example in which each of the M groups includes the same number of candidate resources. For example, each of the M groups includes X candidate resources. $L_{max}$ may indicate the maximum number of candidate resources supported by the first resource set. If one S-SSB period includes a plurality of resource sets, the maximum number of candidate resources supported by each resource set may be the same or may be different. For example, one S-SSB period includes a first resource set and a second resource set. The maximum number of candidate resources supported by the first resource set may be the same as or different from the maximum number of candidate resources supported by the second resource set. In addition, a size relationship between the two is not limited. Optionally, when M is 1, X is $L_{max}$.

A reason why $L_{max}$ S-SSBs are grouped into M groups is that if the frequency of the first resource set is a high frequency, the S-SSBs carried on candidate resources in the M groups may be carried on beams (beams) pointing to different spatial directions, for sending. S-SSBs carried in different groups correspond to different beams. In this case, the different groups correspond to different sending directions. In other words, the M groups correspond to M sending directions, that is, the S-SSBs carried in the M groups correspond to the M sending directions. Different groups point to different sending directions. If the first terminal apparatus needs to switch a sending direction of an antenna, the first terminal apparatus only needs to perform the switching between two groups, and does not need to perform the switching in a group. This reduces the number of times of switching performed by the terminal apparatus, and correspondingly reduces a switching latency. In addition, if the solution provided in this embodiment of this application is applied to a low frequency, in other words, the frequency of the first resource set is a low frequency, S-SSBs carried by different groups in the M groups may be sent by using antenna units installed in different locations, for example, may be sent by using antenna units installed in different locations in a vehicle, to implement coverage of different locations around the vehicle.

For example, a lobe width of an antenna array element in each beam direction may be considered as a factor for determining a value of M. For example, it is assumed that the lobe width of the antenna array element is 45°. In this case, M may be set to 8, and eight non-overlapping beams are used to send S-SSBs, so that a 360° omnidirectional space can be covered.

Optionally, a subcarrier spacing corresponding to an S-SSB may also be used as a factor for determining the value of M. For example, a smaller subcarrier spacing corresponding to the S-SSB indicates a smaller value of M, and a larger subcarrier spacing corresponding to the S-SSB indicates a larger value of M. In this specification, the subcarrier spacing corresponding to the S-SSB, the subcarrier spacing of the carrier on which the first resource set is located, the subcarrier spacing corresponding to the first resource set, and the like may be a same subcarrier spacing.

For example, when a frequency of the carrier on which the first resource set is located is a high frequency, the value of M may be 8. Alternatively, when a frequency of the carrier on which the first resource set is located is a low frequency, the value of M may be 2, 4, or 8.

In an optional implementation, S-SSBs carried by different groups may be further used on different antenna panels (panels), that is, S-SSBs carried by different groups may be sent by using different antenna panels. Alternatively, S-SSBs carried by a plurality of groups may be used on a same antenna panel, that is, S-SSBs carried by the plurality of groups may be sent by using a same antenna panel. This is not limited in this embodiment of this application. In actual application or deployment, one antenna panel may not completely cover all directions of an entire spatial domain. Therefore, in actual application, different antenna panels may be arranged in different directions and locations of a device based on a coverage requirement, to effectively cover signals in the different directions. For example, for V2X, different antenna panels may be installed in different locations of a vehicle.

The M groups may be contiguously distributed in time domain. In this way, S-SSBs can be consecutively sent, and demodulation complexity of the receive end can be reduced. Alternatively, the M groups may be distributed at equal intervals in time domain. For example, two adjacent groups may be separated by one or more OFDM symbols or by one or more slots. Alternatively, the M groups may be distributed at unequal intervals in time domain. For example, two adjacent groups may be separated by one or more OFDM symbols or by one or more slots. Regardless of equal-interval distribution or unequal-interval distribution, specific candidate resources or specific resources may be reserved between the M groups. These resources may be used to transmit other information, for example, transmit data, so that resource utilization can be improved, and a data transmission latency can be reduced.

For example, if the subcarrier spacing of the carrier on which the first resource set is located is 120 kHz, and the M groups are distributed at equal intervals in time domain, an interval between any two groups in the M groups may be one slot or two slots. Alternatively, if the subcarrier spacing of the carrier on which the first resource set is located is 60 kHz (where 60 kHz herein is treated as a high frequency), and the M groups are distributed at equal intervals in time domain, an interval between any two groups in the M groups may be one slot. Alternatively, if the frequency of the carrier on which the first resource set is located is a low frequency, and the M groups are distributed at equal intervals in time domain, an interval between any two groups in the M groups may be 0 slots, that is, there is no slot that is an interval between any two groups in the M groups in time domain, or this is understood as that the M groups are contiguously distributed in time domain.

If the frequency of the first resource set is a low frequency, the number of groups occupied by one or more candidate resources (or resources) that are included in the first resource set and that are used to send a synchronization signal block may be less than or equal to 2. In addition, the groups occupied by the candidate resources used to send the synchronization signal block may be located in a same radio frame. For example, the groups may be located in a same half-frame of a radio frame, for example, all located in a first half-frame or a second half-frame of the radio frame. Alternatively, if the number of groups occupied by the candidate resources used to send synchronization signal blocks is 2, one of the two groups may be located in the first half-frame of the radio frame, and the other group may be located in the second half-frame of the radio frame. For example, if the subcarrier spacing corresponding to the first resource set is 15 kHz, the first resource set may include two groups of candidate resources used to send S-SSBs. The two groups are located in a same radio frame. In addition, the two groups may be both located in a first half-frame or a second half-frame of the radio frame; or one of the two groups is located in a first half-frame of the radio frame, and the other group is located in a second half-frame of the radio frame.

For example, the M groups may be located in a same radio frame. For example, the M groups may be located in different subframes of a same radio frame, that is, the M groups do not go beyond the radio frame. Duration occupied by each radio frame is 10 ms. One of the M groups may be used to repeatedly transmit S-SSBs, and the receive end may combine the repeatedly transmitted S-SSBs, to obtain a combination gain. However, if the receive end needs to combine received S-SSBs, parameters corresponding to the S-SSBs need to be the same. For example, frame numbers of radio frames corresponding to the S-SSBs need to be the same. Otherwise, the receive end cannot perform combination. Therefore, in this embodiment of this application, the M groups are all located in a same radio frame. It is clear that, frame numbers of radio frames corresponding to the M groups are the same. Therefore, the receive end can combine the repeatedly sent S-SSBs (namely, the S-SSBs sent in a QCL manner), to obtain the combination gain.

Optionally, alternatively, each of the M groups may be located in one subframe, that is, each group does not go beyond the subframe. For example, if duration occupied by one subframe is 1 ms, duration occupied by each group may be 1 ms. For example, total duration occupied by the M groups may be less than or equal to 8 ms. M=8 is used as an example. For example, duration occupied by each of the eight groups is 1 ms. In this case, total duration occupied by the eight groups may be 8 ms.

Similarly, if the receive end needs to combine received S-SSBs, parameters corresponding to the S-SSBs need to be the same. For example, frame numbers of subframes corresponding to the S-SSBs need to be the same. Otherwise, the receive end cannot perform combination. Therefore, in this embodiment of this application, each of the M groups is located in a same subframe. It is clear that, all frame numbers of subframes corresponding to S-SSBs included in one of the M groups are the same. Therefore, the receive end can combine repeatedly sent S-SSBs (namely, S-SSBs sent in a QCL manner) in the one group, to obtain the combination gain.

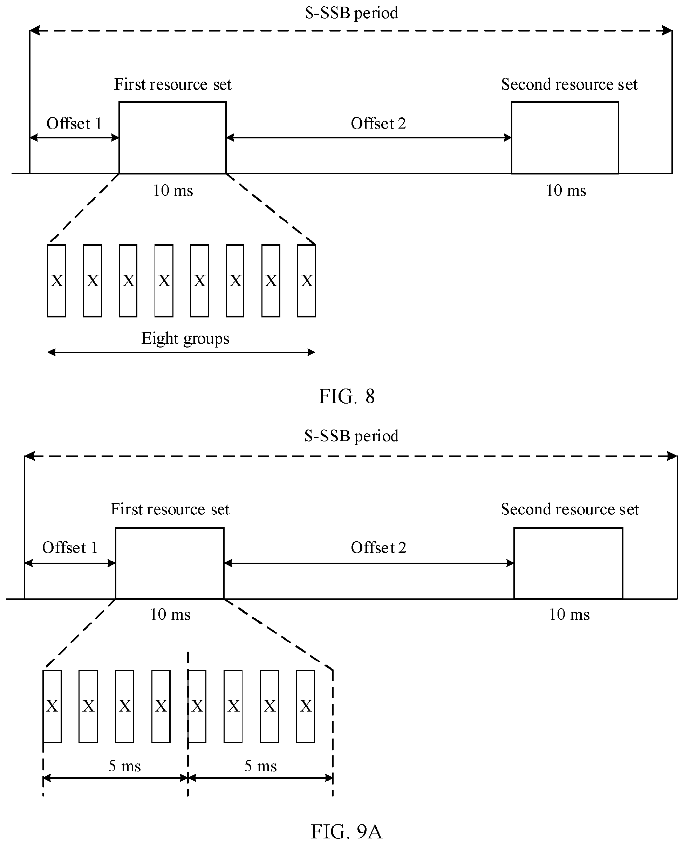

For example, FIG. 8 is a schematic diagram of a first resource set and a second resource set. An example in which one S-SSB period includes the first resource set and the second resource set is used. In FIG. 8, an example in which M=8 and each of M groups includes X candidate resources is used, and an example in which a time domain length of the first resource set is 10 ms is used. In addition, in FIG. 8, an example in which the M groups are distributed at equal intervals in time domain is used. In FIG. 8, offset 1 refers to a time difference between a start location of the first resource set and a start location of the S-SSB period, and offset 2 refers to a time difference between a start location of the second resource set and the start location of the S-SSB period.

In FIG. 8, $L_{max}$ S-SSBs are grouped into eight groups (M=8), and each group includes X S-SSBs. In this case, $L_{max}$ may satisfy the following formula:

$$L_{max}=X \times M \text{ (Formula 1)}$$

For example, X represents the number of candidate resources included in one group, and L represents the number of candidate resources included in the first resource set. The number of candidate resources included in one resource set is greater than or equal to the number of S-SSBs actually sent (or received) by using the resource set. Similarly, the number of candidate resources included in one group is greater than or equal to the number of S-SSBs actually sent (or received) by using the group. If the number of S-SSBs actually sent by using the first resource set is represented as L, a value of L may be less than or equal to the maximum number of S-SSBs supported by one resource set at a corresponding frequency or subcarrier spacing (sub-carrier space, SCS), that is, $L \le L_{max}$.

In this embodiment of this application, $L_{max}$ may satisfy one or more of the following:

A frequency of a carrier on which the first resource set is located is a low frequency, and if a subcarrier spacing of the carrier on which the first resource set is located is 15 kHz, $L_{max}$ corresponding to the first resource set may be equal to 2; or a frequency of the first resource set is a low frequency, and if a subcarrier spacing of a carrier on which the first resource set is located is 30 kHz, $L_{max}$ corresponding to the first resource set may be equal to 4; or a frequency of the first resource set is a low frequency, and if a subcarrier spacing of a carrier on which the first resource set is located is 60 kHz, $L_{max}$ corresponding to the first resource set may be equal to 8; or

> a frequency of a carrier on which the first resource set is located is a low frequency, and if a subcarrier spacing of the carrier on which the first resource set is located is 15 kHz, $L_{max}$ corresponding to the first resource set may be equal to 1; or a frequency of the first resource set is a low frequency, and if a subcarrier spacing of a carrier on which the first resource set is located is 30 kHz, $L_{max}$ corresponding to the first resource set may be equal to 2; or a frequency of the first resource set is a low frequency, and if a subcarrier spacing of a carrier on which the first resource set is located is 60 kHz, $L_{max}$ corresponding to the first resource set may be equal to 4; or
> a frequency of a carrier on which the first resource set is located is a high frequency, and if a subcarrier spacing of the carrier on which the first resource set is located is 60 kHz, $L_{max}$ corresponding to the first resource set may be equal to 32; or a frequency of the first resource set is a high frequency, and if a subcarrier spacing of a carrier on which the first resource set is located is 120 kHz, $L_{max}$ corresponding to the first resource set may be equal to 64.

For example, when the frequency of the carrier on which the first resource set is located is a low frequency, $L_{max}$ may satisfy the following: If the subcarrier spacing of the carrier on which the first resource set is located is 15 kHz, $L_{max}$ corresponding to the first resource set may be equal to 2; or if the subcarrier spacing of the carrier on which the first resource set is located is 30 kHz, $L_{max}$ corresponding to the first resource set may be equal to 4; or if the subcarrier spacing of the carrier on which the first resource set is located is 60 kHz, $L_{max}$ corresponding to the first resource set may be equal to 8.

Alternatively, when the frequency of the carrier on which the first resource set is located is a low frequency, $L_{max}$ may satisfy the following: If the subcarrier spacing of the carrier on which the first resource set is located is 15 kHz, $L_{max}$ corresponding to the first resource set may be equal to 1; or if the subcarrier spacing of the carrier on which the first resource set is located is 30 kHz, $L_{max}$ corresponding to the first resource set may be equal to 2; or if the subcarrier spacing of the carrier on which the first resource set is located is 60 kHz, $L_{max}$ corresponding to the first resource set may be equal to 4.

Alternatively, when the frequency of the carrier on which the first resource set is located is a high frequency, $L_{max}$ may satisfy the following: If a subcarrier spacing of a carrier on which the first resource set is located is 60 kHz, $L_{max}$ corresponding to the first resource set may be equal to 32; or if a subcarrier spacing of the carrier on which the first resource set is located is 120

kHz, $L_{max}$ corresponding to the first resource set may be equal to 64.

Certainly, descriptions of a value of $L_{max}$ described herein are merely some examples, and the value of $L_{max}$ is not limited in this embodiment of this application.

In the foregoing descriptions, L candidate resources are grouped into the M groups. To support a finer granularity, in this embodiment of this application, each of all or some groups in the M groups may be further divided into a plurality of subgroups. If each of a plurality of groups is further divided into a plurality of subgroups, the numbers of subgroups included in different groups may be the same, or may be different. For example, the $1^{st}$ group in the M groups may be divided into K subgroups, and then the X candidate resources included in the $1^{st}$ group belong to the K subgroups. For example, each of the M groups may include K subgroups, or the number of subgroups included in the second group in the M groups may not be equal to K. K may be a positive integer. For example, K may be equal to 1, or may be equal to 2, or may be equal to a larger numerical value.

The numbers of candidate resources included in different subgroups in the K subgroups may be the same, or may be different. For example, the $1^{st}$ subgroup in the K subgroups includes R candidate resources, the R candidate resources may carry R S-SSBs, and the R S-SSBs may be repeatedly transmitted, in other words, transmitted in a QCL manner. For example, each of the K subgroups may include R candidate resources, or the number of candidate resources included in the second subgroup in the K subgroups may not be equal to R. R may be a positive integer. For example, R may be equal to 1, or may be equal to 2, or may be equal to a larger numerical value.

For example, each of the K subgroups includes R candidate resources, and the R candidate resources may carry R repeatedly transmitted S-SSBs. In this case, S-SSBs carried by different subgroups may be different, and this is equivalent to that one S-SSB is repeatedly transmitted only in one subgroup. Alternatively, S-SSBs carried by all or some subgroups in the K subgroups may be the same, or S-SSBs carried by all or some subgroups included in the first resource set are the same. This is equivalent to that one S-SSB may be repeatedly transmitted in a plurality of subgroups. For example, the network device configures the first terminal apparatus to send an S-SSB 1, and the network device configures a repetition factor H for the S-SSB 1. If the repetition factor H is less than or equal to R, the S-SSB 1 may be repeatedly transmitted in one subgroup. If the repetition factor H is greater than R, the S-SSB 1 may be repeatedly transmitted in a plurality of subgroups.

The X S-SSBs are further grouped into the K subgroups, because it is considered that, in a high frequency scenario, when a beam lobe width is smaller, or some lobes need to be partially spatially overlapped during transmission, the S-SSBs may need to be grouped into more groups. For example, the K subgroups may be sent by using K beams, and different beams correspond to different directions. In other words, the K subgroups may correspond to K sending directions, that is, S-SSBs carried by the K subgroups correspond to K sending directions. Different subgroups point to different sending directions. If the first terminal apparatus needs to switch a sending direction of an antenna, the first terminal apparatus only needs to perform the switching between two subgroups, and does not need to perform the switching in a subgroup. This reduces the number of times of switching performed by the terminal apparatus, and correspondingly reduces a switching latency. In addition, if the solution provided in this embodiment of this application is applied to a low frequency, S-SSBs carried by different subgroups in the K subgroups may be sent by using antenna units installed in different locations, for example, may be sent by using antenna units installed in different locations in a vehicle, to implement coverage of different locations around the vehicle. Compared with a solution in which only L S-SSBs are grouped into M groups, further dividing each of the all or some groups in the M groups into the plurality of subgroups can enable a sent S-SSB to support a finer granularity.

R candidate resources included in the 1st subgroup in the K subgroups may be contiguously distributed in time domain. In this way, S-SSBs can be consecutively sent, and the demodulation complexity of the receive end can be reduced. Alternatively, R candidate resources may be distributed at equal intervals in time domain, or R candidate resources may be distributed at unequal intervals in time domain. Regardless of equal-interval distribution or unequal-interval distribution, specific candidate resources or specific resources may be reserved between the R candidate resources. These resources may be used to transmit other information, for example, transmit data, so that the resource utilization can be improved, and the data transmission latency can be reduced.

In an optional implementation, the first resource set may be further divided into two parts. For example, the first resource set includes a first part and a second part, the first part may include M/2 groups, and the second part may also include M/2 groups. For example, the first part includes the first M/2 groups in time domain in the M groups, and the second part includes the last M/2 groups in time domain in the M groups. In time domain, the first part is located before the second part. If each of the M groups includes X S-SSBs, the first part may include $L_{max}/2$ S-SSBs, and the second part may also include $L_{max}/2$ S-SSBs. If the M groups are located in one radio frame, the first part may be located in a first half-frame of the radio frame, and the second part may be located in a second half-frame of the radio frame. For example, a structure of the first part and a structure of the second part may be the same, or may be different. The same structure means that a relative location, in the first part, of a candidate resource included in the first part is the same as a relative location, in the second part, of a candidate resource included in the second part.

For example, FIG. 9A is a schematic diagram of a first resource set and a second resource set. An example in which one S-SSB period includes the first resource set and the second resource set is used. In FIG. 9A, an example in which M=8 and each of M groups includes X candidate resources is used, and an example in which a time domain length of the first resource set is 10 ms is used as an example. In addition, in FIG. 9A, an example in which the M groups are distributed at equal intervals in time domain is used. In FIG. 9A, offset 1 refers to a time difference between a start location of the first resource set and a start location of the S-SSB period, and offset 2 refers to a time difference between a start location of the second resource set and the start location of the S-SSB period. In FIG. 9A, L S-SSBs are grouped into eight groups (M=8), and each group includes X S-SSBs. In addition, the 2nd vertical dashed line represents that the first resource set is divided into a first part and a second part. The first part includes the first four groups, and the second part includes the last four groups.

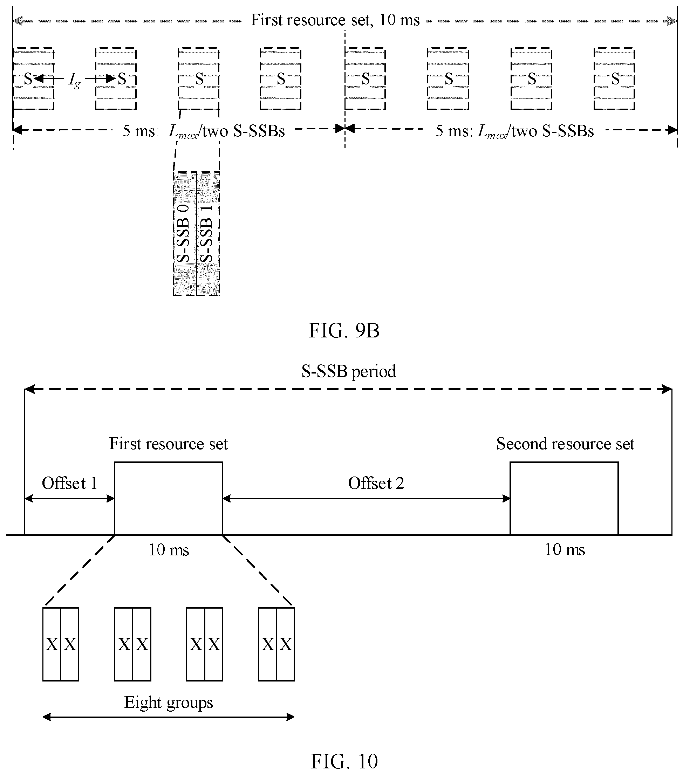

FIG. 9B is a schematic diagram of M groups included in a first resource set. In FIG. 9B, M=8 is used as an example. In FIG. 9B, the 3rd group from left to right indicates a group in which actually sent S-SSBs are located, and S in each small box indicates the number of actually sent S-SSBs in the group.

In FIG. 9A, an example in which the M groups are distributed at equal intervals is used. Alternatively, in another case, a $(2 \times i)^{th}$ group and a $(2 \times i+1)^{th}$ group in the M groups are adjacent in time domain, the $(2 \times i+1)^{th}$ group and a $(2 \times (i+1))^{th}$ group are not adjacent in time domain, where i is any one of 0, 1, ..., or M/2. For example, if i=0, it represents that the 0th group and the 1st group in the M groups are adjacent in time domain, and the 1st group and the 2nd group are not adjacent in time domain. Alternatively, if i=1, it represents that the 2nd group and the 3rd group in the M groups are adjacent in time domain, and the 3rd group and the 4th group are not adjacent in time domain. The rest may be deduced by analogy. In other words, the M groups include pairs of adjacent groups, and there is a specific interval between two successive pairs. For example, the interval is one or more OFDM symbols, or one or more slots. In addition, there may be an equal interval between the two successive pairs.

For example, FIG. 10 is a schematic diagram of a first resource set and a second resource set. An example in which one S-SSB period includes the first resource set and the second resource set is used. In FIG. 10, an example in which M=8 and each of M groups includes X candidate resources is used, and an example in which a time domain length of the first resource set is 10 ms is used as an example. In addition, in FIG. 10, an example in which the M groups are distributed at equal intervals in time domain is used. In FIG. 10, offset 1 refers to a time difference between a start location of the first resource set and a start location of the S-SSB period, and offset 2 refers to a time difference between a start location of the second resource set and the start location of the S-SSB period. In FIG. 10, L S-SSBs are grouped into eight groups (M=8), and each group includes X S-SSBs. In addition, a vertical dashed line represents that the first resource set is divided into a first part and a second part. The first part includes the first four groups, and the second part includes the last four groups. It can be learned from FIG. 10 that the eight groups include four pairs of adjacent groups, and there is further a specific interval between two successive pairs. For example, the 0th group is adjacent to the 1st group, the 1st group is not adjacent to the 2nd group, the 2nd group is adjacent to the 3rd group, and the 3rd group is not adjacent to the 4th group. An interval between the 1st group and the 2nd group, an interval between the 3rd group and the 4th group, and an interval between the 5th group and the 6th group may be equal or not equal. In FIG. 10, an example in which the three intervals are equal is used.

The following uses a structure in which the first resource set is not divided into the first part and the second part as an example to describe the structure of the first resource set for different subcarrier spacings.

For example, if the subcarrier spacing is 120 kHz, sill refer to FIG. 8. In this case, the L S-SSBs may be grouped into eight groups. Each group includes X=8 candidate resources. Duration occupied by the eight candidate resources included in each group is 1 ms. The eight groups may be distributed at equal intervals, and an interval between every two groups is, for example, one slot at 120 kHz. A start time of the 1st group in the eight groups in time domain may be aligned with a start boundary of a radio frame in which the first resource set is located. A start time of each of the remaining groups other than the 1st group in the eight groups has a corresponding offset value from the start boundary of the radio frame in which the first resource set is located. An offset value of each group from the start boundary of the radio frame in which the first resource set is located may be fixed, for example, may be specified by using a protocol. Alternatively, the offset values may be variable, for example, may be configured for the first terminal apparatus by the network device. If the start time of the 1st group in the eight groups in time domain may be aligned with the start boundary of the radio frame in which the first resource set is located, there may be a specific interval between an end time of the last group in the eight groups in time domain and an end boundary of the radio frame in which the first resource set is located. For example, the interval is 1.125 ms.

Alternatively, for example, each of the eight groups may include X=8 candidate resources, duration occupied by the eight candidate resources is 1 ms, and an interval between two successive pairs of adjacent groups in the eight groups is, for example, two slots at 120 kHz. A start time of the 1st group in the eight groups in time domain may be aligned with a start boundary of a radio frame in which the first resource set is located. A start time of each of the remaining groups other than the 1st group in the eight groups has a corresponding offset value from the start boundary of the radio frame in which the first resource set is located. An offset value of each group from the start boundary of the radio frame in which the first resource set is located may be fixed, for example, may be specified by using a protocol. Alternatively, the offset values may be variable, for example, may be configured for the first terminal apparatus by the network device. If the start time of the 1st group in the eight groups in time domain may be aligned with the start boundary of the radio frame in which the first resource set is located, there may be a specific interval between an end time of the last group in the eight groups in time domain and an end boundary of the radio frame in which the first resource set is located. For example, the interval is 0.25 ms.

It should be noted that X=8 may be the number obtained when L is set to $L_{max}$. When the subcarrier spacing is 120 kHz and L is set to $L_{max}$, L may be equal to 64. If the L S-SSBs are grouped into eight groups, each group may include eight candidate resources. For example, when the subcarrier spacing is 120 kHz, a value of X may be less than or equal to 8. For example, X may be equal to 1, 2, 4, or the like. When L is less than 8, actually sent S-SSBs may appear only on some candidate resources.

If the subcarrier spacing is 60 kHz, also still refer to FIG. 8. It is similar to the case of the subcarrier spacing being 120 kHz. However, when the subcarrier spacing is 60 kHz, the L S-SSBs may be grouped into eight groups, and each group may include X=4 candidate resources. Optionally, when the subcarrier spacing is 60 kHz, if the M groups are distributed at equal intervals, an interval between two adjacent groups in the M groups may be one slot in 60 kHz.

It should be noted that X=4 may be the number obtained when L is set to $L_{max}$. When the subcarrier spacing is 60 kHz and L is set to $L_{max}$, L may be equal to 32. If the L S-SSBs are grouped into eight groups, each group may include four candidate resources. For example, when the subcarrier spacing is 60 kHz, the value of X may be less than or equal to 4. For example, X may be equal to 1, 2, or the like. When L is less than 4, actually sent S-SSBs may appear only on some candidate resources.

The following uses a structure in which the first resource set is divided into the first part and the second part as an example, for example, uses a structure shown in FIG. 10 as an example, to describe the structure of the first resource set for different subcarrier spacings.

For example, the M groups are located in one radio frame. When the subcarrier spacing is 120 kHz, M=8 is used as an example. In this case, the first part includes four groups, and the second part also includes four groups. The eight groups may be distributed at equal intervals, and an interval between every two adjacent groups is, for example, two slots at 120 kHz. For example, an interval between the $0^{th}$ group and the $1^{st}$ group in the eight groups is two slots at 120 kHz, and an interval between the $1^{st}$ group and the $2^{nd}$ group is also two slots at 120 kHz. Alternatively, the eight groups may be distributed at unequal intervals. For example, in the first part, an interval between the $0^{th}$ group and the $1^{st}$ group is one slot at 120 kHz, an interval between the $1^{st}$ group and the $2^{nd}$ group is one slot at 120 kHz, an interval between the $2^{nd}$ group and the $3^{rd}$ group is one slot at 120 kHz, and an interval between the $3^{rd}$ group and the $4^{th}$ group is five slots at 120 kHz. Similarly, in the second part, an interval between the $4^{th}$ group and the $5^{th}$ group is one slot at 120 kHz, an interval between the $5^{th}$ group and the $6^{th}$ group is one slot at 120 kHz, an interval between the $6^{th}$ group and the $7^{th}$ group is one slot at 120 kHz, and an interval between the $7^{th}$ group and the end boundary of the radio frame is five slots at 120 kHz.

For another example, the M groups are located in one radio frame. When the subcarrier spacing is 60 kHz, M=8 is used as an example. In this case, the first part includes four groups, and the second part also includes four groups. The eight groups may be distributed at equal intervals, and an interval between every two adjacent groups is, for example, one slot at 60 kHz. For example, an interval between the $0^{th}$ group and the $1^{st}$ group in the eight groups is one slot at 60 kHz, and an interval between the $1^{st}$ group and the $2^{nd}$ group is also one slot at 60 kHz. Alternatively, the eight groups may be distributed at unequal intervals. This is not specifically limited.

For still another example, for a low frequency, $L_{max}$ may be set to 2, 4, or 8, or may be set to 1, 2, or 4. Correspondingly, total duration occupied by $L_{max}$ candidate resources may be 1 ms or 2 ms.

For the low frequency, the foregoing structure of the first resource set may alternatively be directly used to send an S-SSB, and a corresponding candidate resource may be selected from the foregoing first resource set to send the S-SSB. For example, one S-SSB period includes a first resource set and a second resource set, a candidate resource included in the first resource set may be used to send an S-SSB, and a candidate resource included in the second resource set may be used to receive an S-SSB. Alternatively, if $L_{max}$ may be set to 2, 4, or 8, L candidate resources may be grouped into four groups, a candidate resource included in two groups thereof may be used to send an S-SSB, and a candidate resource included in the remaining two groups may be used to receive an S-SSB.

Optionally, for the low frequency, the number M of groups may be the same as that for a high frequency, and actually sent synchronization signal blocks may be located only in a same group. Optionally, for the low frequency, the number M of groups may be different from that for the high frequency. For example, M is fixed to 2, and N synchronization signal blocks may be located in the two groups. Optionally, the two groups may be respectively located in a first half-frame or a second half-frame in a radio frame. Optionally, for the low frequency, the number M of groups may alternatively be fixed to 1, and the N synchronization signal blocks are configured at N locations in the first resource set. In this case, a size of the first resource set does not exceed 10 ms.

For example, when the subcarrier spacing is 15 kHz, $L_{max}$=1 or 2. For example, the $L_{max}$ candidate resources are grouped into M groups, each of the M groups is divided into K subgroups, each of the K subgroups includes R candidate resources, and an S-SSB carried by the R candidate resources may be repeatedly sent. In a manner, R is less than or equal to 2. For example, if R=2 and $L_{max}$=1, the $L_{max}$ candidate resources are grouped only into one subgroup, and an S-SSB carried by R candidate resources included in the subgroup may be repeatedly sent, that is, the first resource set includes only one group on which the S-SSB is repeatedly sent by R times. Alternatively, in another manner, R is less than or equal to 1. For example, if R=1, the $L_{max}$ candidate resources are grouped into at most two subgroups, and an S-SSB carried by R candidate resources included in each of the two subgroups may be repeatedly sent, that is, the first resource set includes at most two groups on which the S-SSB is repeatedly sent by R times. Considering that a receive resource is different from a transmit resource, the first resource set includes at most the two groups on which the S-SSB is repeatedly sent by R times and two groups on which an S-SSB is repeatedly received by R times. In the foregoing two cases, a time-frequency location of a resource for each actually sent S-SSB may be configured by the network device by using signaling.

For another example, when the subcarrier spacing is 30 kHz, $L_{max}$=2 or 4. For example, the $L_{max}$ candidate resources are grouped into M groups, each of the M groups is divided into K subgroups, each of the K subgroups includes R candidate resources, and an S-SSB carried by the R candidate resources may be repeatedly sent. In a manner, R is less than or equal to 4. For example, if R=4 and $L_{max}$=4, the $L_{max}$ candidate resources are grouped only into one subgroup, and an S-SSB carried by R candidate resources included in the subgroup may be repeatedly sent, that is, the first resource set includes only one group on which the S-SSB is repeatedly sent by R times. Alternatively, in another manner, R is less than or equal to 2. For example, if R=2, the $L_{max}$ candidate resources are grouped into at most two subgroups, and an S-SSB carried by R candidate resources included in each of the two subgroups may be repeatedly sent, that is, the first resource set includes at most two groups on which the S-SSB is repeatedly sent by R times. Considering that a receive resource is different from a transmit resource, the first resource set includes at most the two groups on which the S-SSB is repeatedly sent by R times and two groups on which an S-SSB is repeatedly received by R times. Then, in the foregoing two cases, a time-frequency location of a resource for each actually sent S-SSB may be configured by the network device by using signaling.

For still another example, when the subcarrier spacing is 60 kHz, $L_{max}$=4 or 8. For example, the $L_{max}$ candidate resources are grouped into M groups, each of the M groups is divided into K subgroups, each of the K subgroups includes R candidate resources, and an S-SSB carried by the R candidate resources may be repeatedly sent. In a manner, R is less than or equal to 8. For example, if R=8 and $L_{max}$=8, the $L_{max}$ candidate resources are grouped only into one subgroup, and an S-SSB carried by R candidate resources included in the subgroup may be repeatedly sent, that is, the first resource set includes only one group on which the S-SSB is repeatedly sent by R times. Alternatively, in another manner, R is less than or equal to 4. For example, if R=4, the $L_{max}$ candidate resources are grouped into at most two subgroups, and an S-SSB carried by R candidate resources included in each of the two subgroups may be repeatedly sent, that is, the first resource set includes at most two groups on which the S-SSB is repeatedly sent by R times. Considering that a receive resource is different from a transmit resource, the first resource set includes at most the two groups on which the S-SSB is repeatedly sent by R times and two groups on which an S-SSB is repeatedly received by R times. In the foregoing two cases, a time-frequency location of a resource for each actually sent S-SSB may be configured by the network device by using signaling.

In addition, one of the M groups may include X candidate resources. The X candidate resources may be consecutive in time domain; the X candidate resources may be distributed at equal intervals in time domain; or the X candidate resources may be distributed at unequal intervals in time domain. If the X candidate resources are distributed at unequal intervals in time domain, in a manner, in the X candidate resources, an interval between every two adjacent candidate resources may be one or more slots, and duration of different intervals is different. For example, if X=4, there is interval 1 between the 0th candidate resource and the 1st candidate resource, there is interval 2 between the 1st candidate resource and the 2nd candidate resource, and there is interval 3 between the 2nd candidate resource and the 3rd candidate resource. Interval 1 may be one or more slots, interval 2 may be one or more slots, interval 3 may be one or more slots, and interval 1, interval 2, and interval 3 are not equal to each other.

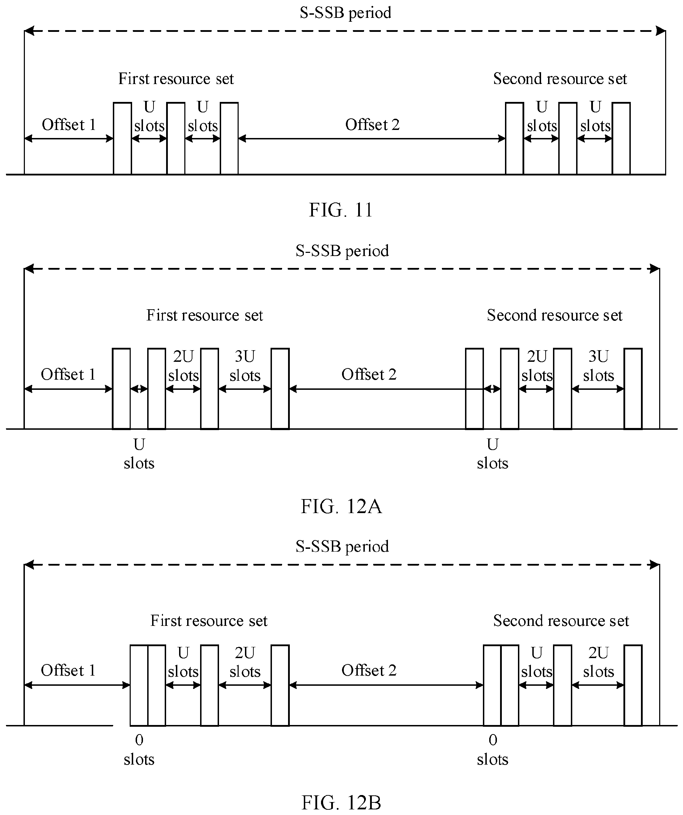

For example, FIG. 11 is a schematic diagram in which X candidate resources are distributed at equal intervals in time domain. FIG. 11 uses an example in which one S-SSB period includes a first resource set and a second resource set. In FIG. 11, three candidate resources included in the first resource set and three candidate resources included in the second resource set are used as an example. It can be learned that the three candidate resources included in the first resource set are distributed at equal intervals. For example, the interval is U slots. The three candidate resources included in the second resource set are also distributed at equal intervals. For example, the interval is also U slots. A value of U may be greater than 0. In FIG. 11, offset 1 refers to a time difference between a start location of the first resource set and a start location of the S-SSB period, and offset 2 refers to a time difference between a start location of the second resource set and the start location of the S-SSB period.

Further, FIG. 12A is a schematic diagram of distribution of X candidate resources at unequal intervals in time domain. FIG. 12A uses an example in which one S-SSB period includes a first resource set and a second resource set. In FIG. 12A, four candidate resources included in the first resource set and four candidate resources included in the second resource set are used as an example. It can be learned that the four candidate resources included in the first resource set are distributed at unequal intervals. For example, an interval between the 0th candidate resource and the 1st candidate resource is U1 slots, an interval between the 1st candidate resource and the 2nd candidate resource is U2 slots, and an interval between the 2nd candidate resource and the 3rd candidate resource is U3 slots. The four candidate resources included in the second resource set are also distributed at unequal intervals. For example, an interval between the 0th candidate resource and the 1st candidate resource is U1 slots, an interval between the 1st candidate resource and the 2nd candidate resource is U2 slots, and an interval between the 2nd candidate resource and the 3rd candidate resource is U3 slots. U1 may be greater than or equal to 0, and values of U2 and U3 may be both greater than 0. In FIG. 12A, offset 1 refers to a time difference between a time domain start location of the first resource set and a time domain start location of the S-SSB period, and offset 2 refers to a time difference between a time domain start location of the second resource set and the time domain start location of the S-SSB period.

FIG. 12B is another schematic diagram in which X candidate resources are distributed at unequal intervals in time domain. FIG. 12B uses an example in which one S-SSB period includes a first resource set and a second resource set. In FIG. 12B, four candidate resources included in the first resource set and four candidate resources included in the second resource set are used as an example. It can be learned that the four candidate resources included in the first resource set are distributed at unequal intervals. For example, an interval between the 0th candidate resource and the 1st candidate resource is U1 slots, an interval between the 1st candidate resource and the 2nd candidate resource is U2 slots, and an interval between the 2nd candidate resource and the 3rd candidate resource is U3 slots. The four candidate resources included in the second resource set are also distributed at unequal intervals. For example, an interval between the 0th candidate resource and the 1st candidate resource is U1 slots, an interval between the 1st candidate resource and the 2nd

candidate resource is U2 slots, and an interval between the 2nd candidate resource and the 3rd candidate resource is U3 slots. U1 is equal to 0, and values of U2 and U3 may be both greater than 0. For example, U2=2U, and U3=3U. In FIG. 12B, offset 1 refers to a time difference between a time domain start location of the first resource set and a time domain start location of the S-SSB period, and offset 2 refers to a time difference between a time domain start location of the second resource set and the time domain start location of the S-SSB period.

The X candidate resources may be further grouped into K subgroups, each subgroup may include R candidate resources, and values of U1, U2, U3, and the like may be related to R.

For example, when R=4, a value of an interval between the X candidate resources belongs to {0, 1, 2}, and a unit is, for example, a symbol or a slot. In other words, in a subgroup, interval U1 between the 0th candidate resource and the 1st candidate resource is zero symbols or zero slots, interval U2 between the 1st candidate resource and the 2nd candidate resource is one symbol or one slot, and interval U3 between the 1st candidate resource and the 2nd candidate resource is two symbols or two slots.

For another example, when R=8, a value of an interval between the X candidate resources belongs to {0, 1, 2, 3, 4, 5, 6}, and a unit is, for example, a symbol or a slot. In other words, in a subgroup, interval U1 between the 0th candidate resource and the 1st candidate resource is zero symbols or zero slots, interval U2 between the 1st candidate resource and the 2nd candidate resource is one symbol or one slot, interval U3 between the 1st candidate resource and the 2nd candidate resource is one symbol or one slot, interval U4 between the 2nd candidate resource and the 3rd candidate resource is three symbols or three slots, and so on.

For still another example, when R=16, a value of an interval between the X candidate resources belongs to {0, 1, 2, 3, 4, 5, 6, 7, 8, 9, 10, 11, 12, 13, 14}, and a unit is, for example, a symbol or a slot. In other words, in a subgroup, interval U1 between the 0th candidate resource and the 1st candidate resource is zero symbols or zero slots, interval U2 between the 1st candidate resource and the 2nd candidate resource is one symbol or one slot, interval U3 between the 1st candidate resource and the 2nd candidate resource is one symbol or one slot, interval U4 between the 2nd candidate resource and the 3rd candidate resource is three symbols or three slots, and so on.

As described above, a manner of determining the value of the interval between the X candidate resources may be used for at least a low frequency. For example, at a low frequency, L candidate resources are grouped into M groups, each of the M groups is further grouped into K subgroups, and each subgroup includes R candidate resources, that is, R repeatedly transmitted S-SSBs may be configured. In this case, a value of an interval between the R candidate resources may belong to {0, 1, 2, 3, 4, ..., R-2}. In other words, in a subgroup, interval U1 between the 0th candidate resource and the 1st candidate resource is zero OFDM symbols or zero slots, interval U2 between the 1st candidate resource and the 2nd candidate resource is one OFDM symbol or one slot, interval U3 between the 1st candidate resource and the 2nd candidate resource is one OFDM symbol or one slot, interval U4 between the 2nd candidate resource and the 3rd candidate resource is three OFDM symbols or three slots, interval UR between an (R-2)th candidate resource and an (R-1)th candidate resource is R-2 OFDM symbols or R-2 slots, and so on.

In this manner, a specific candidate resource may be specified. In this case, a transmit end and a receive end of an S-SSB have a same understanding of the candidate resource that carries the S-SSB, and may be aligned with each other. If the receive end uses a cross correlation manner when receiving the S-SSB, a correlation peak that is R times a correlation peak of a single S-SSB may be generated, thereby improving reception performance. Alternatively, timing on a receive end side is not aligned with timing on a transmit side. If there is a difference of one or more slots, the receive end generates detection energy of at most only a correlation peak that is one time the correlation peak of the single S-SSB. Therefore, the manner herein can greatly improve detection performance that is obtained when timing is aligned.

If the X candidate resources are contiguous in time domain, the receive end has low demodulation complexity and a small reception latency. Alternatively, if the X candidate resources are distributed at equal intervals or unequal intervals in time domain, that is, there is a specific interval between the X candidate resources, when the first terminal apparatus needs to switch an antenna array before two candidate resources, an interval between the two candidate resources may be used to reserve switching time for the first terminal apparatus. In addition, reserving a specific interval between the X candidate resources is equivalent to reserving a resource for other information. For example, data, feedback information, or the like may be sent by using the interval between the X candidate resources, so that an S-SSB can be prevented as much as possible from occupying long time, to reduce a processing latency of another service.

As described above, the first terminal apparatus may determine the time domain locations of the N candidate resources based on the first configuration information. For example, the first configuration information may indicate one or more of the slot location at which the synchronization signal block sent on the first resource is located in the synchronization signal block period, the time domain offset value of the start location of the first resource in the synchronization signal block period, or the time domain location of the first resource in the first resource set. In addition, the first terminal apparatus may further determine, based on signaling from the network device, information such as the number of candidate resources used to send a synchronization signal block.

For example, the network device may send second signaling to the first terminal apparatus, and the first terminal apparatus receives the second signaling from the network device, where the second signaling is used to indicate one or more of X1, L, R1, or K1. For example, the second signaling may indicate L and X1, and then the first terminal apparatus may determine M1 based on L and X1. Alternatively, the second signaling may indicate L and M1, and then the first terminal apparatus may determine X1 based on L and M1. Alternatively, the second signaling may indicate X1 and M1, and then the first terminal apparatus may determine L based on X1 and M1. X1 represents the number of candidate resources actually used for synchronization signal block sending in the $i^{th}$ group in the M groups, or represents the number of candidate resources actually used for synchronization signal block sending in each of the M groups. X1 may be less than or equal to X. M1 represents the number of groups actually used for sending in the first resource set. M1 may be less than or equal to M. L represents the number of candidate resources actually used for synchronization signal block sending in the first resource set, that is, represents the number of candidate resources actually invoked in the first resource set. L is less than or equal to $L_{max}$. L=M1×X1, and the formula includes three parameters. Provided that any two of the parameters are known, another parameter may be calculated. An example in which the number of candidate resources used for sending in each of M1 groups is the same is used for the formula.

Alternatively, the first terminal apparatus may determine, based on preconfigured information, the number of candidate resources used to send a synchronization signal block, where the preconfigured information may be information preconfigured for the first terminal apparatus. For example, the preconfigured information may indicate one or more of X1, L, R1, or K1. For example, the preconfigured information may indicate L and X1, and then the first terminal apparatus may determine M1 based on L and X1. Alternatively, the preconfigured information may indicate L and M1, and then the first terminal apparatus may determine X1 based on L and M1. Alternatively, the preconfigured information may indicate X1 and M1, and then the first terminal apparatus may determine L based on X1 and M1.

Alternatively, if each of one or more groups in the M groups is further divided into a plurality of subgroups, the second signaling may indicate one or more of L, X1, M1, R1, or K1. For example, the second signaling may indicate L, R1, and X1, and then the first terminal apparatus may determine M1 based on L and X1, and may determine K1 based on L, R1, and M1. Alternatively, the second signaling may indicate X1, M1, and K1, and then the first terminal apparatus may determine L based on X1 and M1, and may determine R1 based on X1 and K1. R1 represents the number of candidate resources actually used for synchronization signal block sending in the $1^{st}$ subgroup included in an $i^{th}$ group in the M1 groups, or represents the number of candidate resources actually used for synchronization signal block sending in each subgroup included in an $i^{th}$ group in the M1 groups, or represents the number of candidate resources actually used for synchronization signal block sending in each subgroup in the M1 groups. R1 is less than or equal to R. K1 represents the number of subgroups actually used for sending in the $i^{th}$ group in the M1 groups, or represents the number of subgroups actually used for sending in each of the M1 groups. K1 is less than or equal to K. X1=R1×K1, and L=M1×X1. An example in which the number of candidate resources used for sending in each of the M1 groups is the same and the number of candidate resources used for sending in each subgroup included in each of the M1 groups are the same is used for the two formulas.

Alternatively, if each of one or more groups in the M groups is further divided into a plurality of subgroups, the first terminal apparatus may determine, based on preconfigured information, the number of candidate resources used to send a synchronization signal block. For example, one or more of L, X1, M1, R1, or K1 may be indicated. For example, the preconfigured information may indicate L, R1, and X1, and then the first terminal apparatus may determine M1 based on L and X1, and may determine K1 based on L, R1, and M1. Alternatively, the preconfigured information may indicate X1, M1, and K1, and then the first terminal apparatus may determine L based on X1 and M1, and may determine R1 based on X1 and K1.

That the network device sends the second signaling to the first terminal apparatus is equivalent to indicating, to the first terminal apparatus, the number of the N candidate resources used to send a synchronization signal block. For example, if N=1, the first resource is used to send one synchronization signal block; or if N>1, the first resource is used to send a plurality of synchronization signal blocks.

In this embodiment of this application, a time domain resource corresponding to the first resource set may occupy an uplink resource, or may occupy a sidelink resource. For example, when a first sub-resource overlaps one or more of the following resources, a synchronization signal block that is in the N synchronization signal blocks and that overlaps the following resources is discarded: a downlink symbol or a downlink slot, a flexible symbol or a symbol slot, or an uplink symbol or an uplink slot. For example, a $j^{th}$ candidate resource included in the first resource is a resource used to send the $j^{th}$ synchronization signal block, and the $j^{th}$ candidate resource is a subset of the first resource. For example, if the $j^{th}$ candidate resource overlaps the downlink symbol, the $j^{th}$ synchronization signal block is discarded. Alternatively, for example, if the $j^{th}$ candidate resource overlaps the flexible symbol, the $j^{th}$ synchronization signal block is discarded. For example, the jth candidate resource occupies all remaining symbols other than the last symbol in a slot, and the 2nd symbol in the slot is a downlink symbol. In this case, on the 2nd symbol in the slot, the jth candidate resource overlaps the downlink symbol. Therefore, the jth synchronization signal block may be discarded.

For example, if the first resource set is located on a licensed (licensed) carrier, a candidate resource may be configured in an uplink (UL) slot, that is, when the candidate resource is configured, a downlink (DL) slot, a slot in which an F symbol is located, or a slot in which an X symbol is located needs to be skipped, and these slots are not configured as candidate resources. The F symbol is a flexible OFDM symbol, and the X symbol is an OFDM symbol that may be configured as an uplink symbol or a downlink symbol.

Alternatively, if the first resource set is located on a licensed carrier, and a candidate resource may still be normally configured, after the candidate resource is configured, the first resource set may repeatedly appear based on a period. When there is a candidate resource that is not configured for sidelink transmission, the candidate resource should not be selected for actually sending or receiving an S-SSB. For example, in a radio frame in which the first resource set is located, a symbol is a symbol in which a candidate resource is located, but the symbol is not configured to be capable of being used for sending sidelink information. In this case, the symbol should not be used for actually sending or receiving an S-SSB.

If the first resource set is located on an intelligent transportation system (intelligent transport system, ITS) carrier, one S-SSB period includes, for example, the first resource set and the second resource set. The first resource set may be used to send an S-SSB. The second resource set may be used to receive an S-SSB. Duration occupied by a resource set may be predefined, for example, specified by using a protocol. For example, duration occupied by the first resource set is 5 ms, and duration occupied by the second resource set is 5 ms. Alternatively, duration occupied by the first resource set is 10 ms, and duration occupied by the second resource set is 10 ms. In addition, a specific location of the first resource set in the S-SSB period may be configured for the first terminal apparatus by the network device by using signaling.

In this embodiment of this application, if a candidate resource of an S-SSB is configured in a physical slot, a physical sidelink feedback channel (physical sidelink feedback channel, PSFCH) is configured in a logical slot, and a resource occupied by the S-SSB needs to be removed before a PSFCH resource is configured. For example, when the PSFCH resource is configured, physical resources occupied by the S-SSB are first removed. After these resources are removed, remaining resources may be inconsecutive resources. In this case, the remaining resources may be numbered again, so that numbers of these resources are continuous. The renumbered resources are considered as logical resources. PSFCH resources may be configured on these logical resources.

Alternatively, if a candidate resource of an S-SSB is configured in a logical slot and a PSFCH is configured in a physical slot, a resource occupied by the PSFCH needs to be removed before the candidate resource of the S-SSB is configured.

In addition, the first resource set may be located in a synchronization signal block period, and a second resource of a synchronization signal block may be further included in the synchronization signal block period. The second resource may include a candidate resource used by the first terminal apparatus to receive the synchronization signal block, or may include a candidate resource used by a third terminal apparatus to send the synchronization signal block. Optionally, the first resource set and the second resource set occupy different slots or different radio frames in time domain.

Therefore, to enable the first terminal apparatus to send a synchronization signal block by using the first resource and receive a synchronization signal block by using the second resource, a network coverage status of the first terminal apparatus that uses the first resource may be different from a network coverage status of the third terminal apparatus that uses the second resource. A network coverage status of a terminal apparatus may refer to whether the terminal apparatus is located in coverage of a network or located outside the coverage of the network (that is, not covered by the network). That the terminal apparatus is located in the coverage of the network means that the terminal apparatus can detect, at a specific frequency, a signal sent by the network device, or that quality of a detected signal sent by the network device exceeds a preset or configured threshold. Conversely, when the terminal apparatus cannot detect, at a specific frequency, a signal sent by the network device, or quality of a detected signal sent by the network device is lower than a preset or configured threshold, the terminal apparatus is located outside the coverage of the network.

Alternatively, to enable the first terminal apparatus to send the synchronization signal block by using the first resource and receive the synchronization signal block by using the second resource, one or two of the following may be satisfied:

A network coverage status of the first terminal apparatus that uses the first resource is the same as a network coverage status of the third terminal apparatus that uses the second resource, and a synchronization signal identifier of the first resource is different from a synchronization signal identifier of the second resource; or a network coverage status of the first terminal apparatus that uses the first resource is the same as a network coverage status of the third terminal apparatus that uses the second resource, and a synchronization reference source of the first terminal apparatus is different from a synchronization reference source of the third terminal apparatus. For example, it may be satisfied that the network coverage status of the first terminal apparatus that uses the first resource is the same as the network coverage status of the third terminal apparatus that uses the second resource, and the synchronization signal identifier of the first resource is different from the synchronization signal identifier of the second resource. Alternatively, it may be satisfied that the network coverage status of the first terminal apparatus that uses the first resource is the same as the network coverage status of the third terminal apparatus that uses the second resource, and the synchronization reference source of the first terminal apparatus is different from the synchronization reference source of the third terminal apparatus. Alternatively, it may be satisfied that the network coverage status of the first terminal apparatus that uses the first resource is the same as the network coverage status of the third terminal apparatus that uses the second resource, the synchronization signal identifier of the first resource is different from the synchronization signal identifier of the second resource, the network coverage status of the first terminal apparatus that uses the first resource is the same as the network coverage status of the third terminal apparatus that uses the second resource, and the synchronization reference source of the first terminal apparatus is different from the synchronization reference source of the third terminal apparatus. When these conditions are satisfied, the first terminal apparatus can not only send the synchronization signal block by using the first resource, but also receive the synchronization signal block by using the second resource.

Alternatively, optionally, when two devices that send synchronization signal blocks use different synchronization source types, priorities, or hop counts when the two devices are used as synchronization sources, the two devices need to use at least two different synchronization resources, so that when sending the respective synchronization signal blocks, the two devices can further detect a synchronization signal block sent by another device on another resource.

For example, the first resource set is located in a synchronization signal block period, and a second resource and a third resource of a synchronization signal block may be further included in the synchronization signal block period. In this case, the first terminal apparatus that uses the first resource may be located in a network, and synchronized to a satellite or a network device. Alternatively, the first terminal apparatus that uses the first resource is located outside a network, and not synchronized to a fifth terminal apparatus in the network. The third terminal apparatus that uses the second resource may be located outside the network, and synchronized to the fifth terminal apparatus in the network. A fourth terminal apparatus that uses the third resource may be located outside the network, and synchronized to the satellite.

For example, the first resource belongs to the first resource set, and the second resource may belong to the second resource set in the synchronization signal block period. For example, the second resource set may be a resource set used by the first terminal apparatus to receive a synchronization signal block. If there is further the third resource, the third resource may belong to a third resource set in the synchronization signal block period.

S62: The second terminal apparatus determines, in the first resource set, the first resource used to transmit the N synchronization signal blocks. N is a positive integer. Alternatively, the second terminal apparatus determines, in the first resource set, the first resource used to receive the N synchronization signal blocks.

The network device may configure the first resource for the second terminal apparatus, or the first resource may be configured by using a protocol. If the network device configures the first resource for the second terminal apparatus, for example, as described in S61, the network device may send the first configuration information to the first terminal apparatus, the network device may also send the first configuration information to the second terminal apparatus, and this is equivalent to configuring the first resource.

S61 may be performed before S62, or S61 may be performed after S62, or S61 and S62 may be simultaneously performed.

S63: The first terminal apparatus sends the $j^{th}$ synchronization signal block in the N synchronization signal blocks on the $j^{th}$ candidate resource in the N candidate resources, and the second terminal apparatus receives the $j^{th}$ synchronization signal block from the first terminal apparatus on the $j^{th}$ candidate resource in the N candidate resources.

The first terminal apparatus may send the N synchronization signal blocks to the second terminal apparatus by using the first resource. For example, the $j^{th}$ synchronization signal block may be one of the N synchronization signal blocks, and the $j^{th}$ candidate resource is a subset of the first resource. For example, the first resource includes the N candidate resources, and the $j^{th}$ candidate resource may be one of the N candidate resources. When the first terminal apparatus sends each of the N synchronization signal blocks, a processing manner is similar. Therefore, S62 is described by using the $j^{th}$ synchronization signal block thereof as an example.

The second terminal apparatus determines the first resource, and may perform detection on the first resource, to receive the N synchronization signal blocks. Alternatively, to avoid missing a synchronization signal block, the second terminal apparatus may perform detection on the first resource set, to receive the N synchronization signal blocks.

After receiving the $j^{th}$ synchronization signal block, the second terminal apparatus may obtain information about timing based on the $j^{th}$ synchronization signal block; or obtain frequency information of the $j^{th}$ synchronization signal block based on the $j^{th}$ synchronization signal block; or obtain information about timing based on the jth synchronization signal block and obtain frequency information of the jth synchronization signal block.

In this embodiment of this application, the synchronization signal block period may include the first resource set, the first resource set includes the M groups, and X candidate resources included in the 1st group in the M groups may be used to carry X synchronization signal blocks. It is equivalent to that resources used to send synchronization signal blocks are specified. When a synchronization signal block needs to be sent, it only needs to select a resource from the resources, so that a resource selection manner is simplified. In addition, one synchronization signal block may occupy Y symbols, so that the technical solution provided in this embodiment of this application can be applied to the NR-V2X system, or may be applied to another communication system in which it is specified that a synchronization signal block occupies Y symbols.

In this embodiment of this application, the synchronization signal block period may include the first resource set, the first resource set includes the M groups, and the X candidate resources included in the 1st group in the M groups may be used to carry the X synchronization signal blocks. It is equivalent to that the resources used to send synchronization signal blocks are specified. When a synchronization signal block needs to be sent, it only needs to select a resource from the resources, so that the resource selection manner is simplified. In addition, one synchronization signal block may occupy Y symbols, so that the technical solution provided in this embodiment of this application can be applied to the NR-V2X system, or may be applied to another communication system in which it is specified that a synchronization signal block occupies Y symbols.

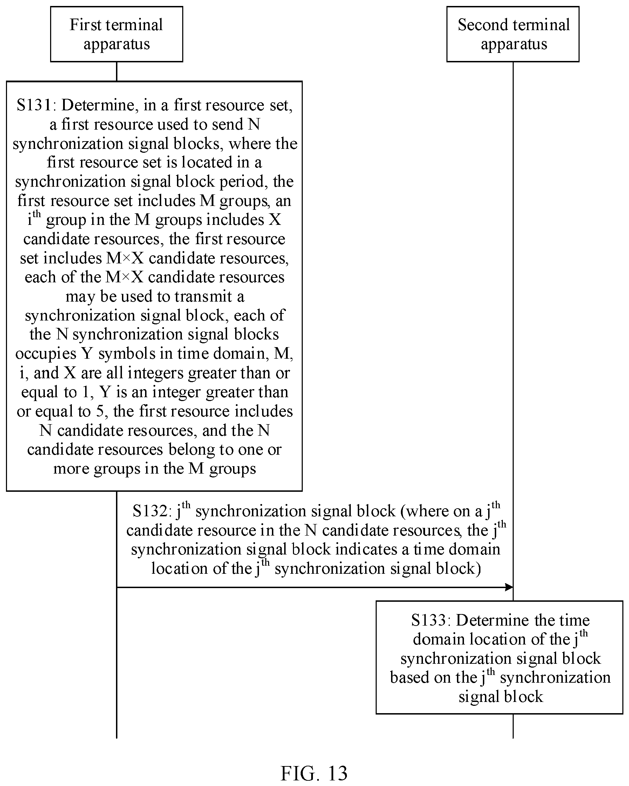

An embodiment of this application provides a second communication method, to resolve same technical problems. FIG. 13 is a flowchart of the method. In the following description process, an example in which the method is applied to the network architecture shown in FIG. 5 is used. In addition, the method may be performed by two communication apparatuses. The two communication apparatuses are, for example, a first communication apparatus and a second communication apparatus. The first communication apparatus or the second communication apparatus may be a network device or a communication apparatus that can support a function required by the network device to implement the method, or may be a terminal device or a communication apparatus that can support a function required by the terminal device to implement the method, or certainly may be another communication apparatus, for example, a chip system. In addition, an implementation of the first communication apparatus or the second communication apparatus is not limited. For example, the two communication apparatuses may be implemented in a same form. For example, the two communication apparatuses are implemented in a device form. Alternatively, the two communication apparatuses may be implemented in different forms. For example, the first communication apparatus is implemented in a device form, and the second communication apparatus is implemented in a chip system form. The network device is, for example, a base station.

For ease of description, the following uses an example in which the method is performed by a terminal apparatus and a terminal apparatus, to be specific, an example in which the first communication apparatus is a terminal apparatus (for example, referred to as a first terminal apparatus) and the second communication apparatus is also a terminal apparatus (for example, referred to as a second terminal apparatus). Because this embodiment uses an example in which the method is applied to the network architecture shown in FIG. 5, the first terminal apparatus described below may implement a function of the terminal device 1 in the network architecture shown in FIG. 5, and the second terminal apparatus described below may implement a function of the terminal device 2 in the network architecture shown in FIG. 5. In addition, the following may further relate to a network device. The network device described below may implement a function of the network device in the network architecture shown in FIG. 5. In a description process of this embodiment of this application, an example in which a synchronization signal block is an S-SSB is used. Actually, the synchronization signal block is not limited thereto. A range of the synchronization signal block described in this embodiment of this application may include any signal used for synchronization, for example, may include a sidelink synchronization signal block, or may include a synchronization signal block used for a Uu interface.

S131: The first terminal apparatus determines, in a first resource set, a first resource used to send N synchronization signal blocks. N is a positive integer.

The first resource set may be located in a synchronization signal block period. The first resource is included in the first resource set, that is, the first resource belongs to the first resource set, that is, the first resource is a subset of the first resource set. The first resource set may include M groups. An $i^{th}$ group in the M groups may include X candidate resources. The X candidate resources may be used to carry X synchronization signal blocks, that is, the X candidate resources may be used to transmit X synchronization signal blocks. One of the candidate resources may be used to transmit one synchronization signal block. The first resource set may include $M \times X$ candidate resources, and each of the $M \times X$ candidate resources may be used to transmit a synchronization signal block. Each of the N synchronization signal blocks may occupy Y symbols in time domain. Y is an integer greater than or equal to 5, and M, i, and X are all positive integers. In addition, since the first resource may be used to send the N synchronization signal blocks, the first resource may include N candidate resources, and the N candidate resources belong to one or more groups in the M groups. That is, the N candidate resources may be located in one of the M groups, or may be located in a plurality of groups in the M groups. N may be greater than or equal to X, or certainly may be less than X.

S132: The first terminal apparatus sends a $j^{th}$ synchronization signal block in the N synchronization signal blocks on a $j^{th}$ candidate resource in the N candidate resources, and the second terminal apparatus receives the $j^{th}$ synchronization signal block from the first terminal apparatus on the $j^{th}$ candidate resource in the N candidate resources.

S133: The second terminal apparatus determines a time domain location of the $j^{th}$ synchronization signal block based on the $j^{th}$ synchronization signal block.

The $j^{th}$ synchronization signal block may indicate the time domain location of the $j^{th}$ synchronization signal block, and the second terminal apparatus may determine the time domain location of the $j^{th}$ synchronization signal block based on the $j^{th}$ synchronization signal block, so as to receive the $j^{th}$ synchronization signal block.

To reduce S-SSB detection power consumption of the second terminal apparatus, the first terminal apparatus may notify the second terminal apparatus of a location of an actually sent S-SSB. For example, the $j^{th}$ synchronization signal block may indicate the time domain location of the $j^{th}$ synchronization signal block, and the second terminal apparatus may determine the time domain location of the $j^{th}$ synchronization signal block based on the $j^{th}$ synchronization signal block, so as to receive the $j^{th}$ synchronization signal block. For example, the time domain location of the $j^{th}$ synchronization signal block may include a relative location of the $j^{th}$ synchronization signal block in the first resource set, or include a location of a slot in which the $j^{th}$ synchronization signal block is actually located. If the time domain location of the $j^{th}$ synchronization signal block includes the relative location of the $j^{th}$ synchronization signal block in the first resource set, the time domain location of the $j^{th}$ synchronization signal block may include an identifier of a group in which the $j^{th}$ synchronization signal block is located; or include an identifier of the $j^{th}$ synchronization signal block in a group in which the $j^{th}$ synchronization signal block is located; or include an identifier of a group in which the $j^{th}$ synchronization signal block is located, and an identifier of the $j^{th}$ synchronization signal block in the group in which the $j^{th}$ synchronization signal block is located; or include the location of the slot in which the $j^{th}$ synchronization signal block is located.

In an optional implementation, the time domain location of the $j^{th}$ synchronization signal block may further include one or more of the following: a frame number of a radio frame in which the $j^{th}$ synchronization signal block is located, a frame number of a half-frame in which the $j^{th}$ synchronization signal block is located in the radio frame, or the number of synchronization signal blocks that are repeatedly sent on the first resource, namely, a repetition factor H. For example, the time domain location of the $j^{th}$ synchronization signal block includes the frame number of the radio frame in which the $j^{th}$ synchronization signal block is located. Alternatively, the time domain location of the $j^{th}$ synchronization signal block includes the frame number of the half-frame in which the $j^{th}$ synchronization signal block is located in the radio frame and the number of synchronization signal blocks repeatedly sent on the first resource. Alternatively, the time domain location of the $j^{th}$ synchronization signal block includes the frame number of the radio frame in which the $j^{th}$ synchronization signal block is located, the frame number of the half-frame in which the $j^{th}$ synchronization signal block is located in the radio frame, and the number of synchronization signal blocks repeatedly sent on the first resource.

For example, a time domain location of the 1st synchronization signal block may be indicated by using a broadcast channel included in the 1st synchronization signal block, in other words, the time domain location of the $j^{th}$ synchronization signal block may be indicated by using a broadcast channel included in the $j^{th}$ synchronization signal block. An example in which the $j^{th}$ synchronization signal block is an S-SSB is used. In this case, the broadcast channel included in the $j^{th}$ synchronization signal block is a sidelink broadcast channel, for example, a physical sidelink broadcast channel (physical sidelink broadcast channel, PSBCH) included in the S-SSB.

There may be a plurality of implementations for indicating the time domain location of the $j^{th}$ synchronization signal block by using the broadcast channel included in the $j^{th}$ synchronization signal block. The following uses examples for description.

1. In a first manner, the time domain location of the $j^{th}$ synchronization signal block is indicated by using signaling carried on the broadcast channel included in the $j^{th}$ synchronization signal block.

The broadcast channel included in the $j^{th}$ synchronization signal block may carry signaling, and the signaling is used to indicate the time domain location of the $j^{th}$ synchronization signal block. For example, the $j^{th}$ synchronization signal block is an S-SSB, and signaling carried on a broadcast channel of the S-SSB is, for example, an SL-master information block (master information block, MIB), or may be other signaling.

For example, when M1=8, the SL-MIB may indicate, by using 3 bits (bits), an identifier of a group in which the S-SSB is located.

2. In a second manner, the time domain location of the $j^{th}$ synchronization signal block is indicated by using a demodulation reference signal (demodulation reference signal, DMRS) carried on the broadcast channel included in the $j^{th}$ synchronization signal block.

For example, the time domain location of the $j^{th}$ synchronization signal block may be indicated by using a DMRS sequence carried on the broadcast channel included in the j$^{th}$ synchronization signal block.

When the time domain location of the j$^{th}$ synchronization signal block is indicated by using the DMRS sequence, an initial value of the DMRS sequence may be used for the indication, or an initial location of the DMRS sequence may be used for the indication.

Manner 1: The time domain location of the j$^{th}$ synchronization signal block is indicated by using the initial value of the DMRS sequence.

For example, the initial value of the DMRS sequence may be determined by using one or more of the following parameters: the identifier of the group in which the j$^{th}$ synchronization signal block is located, the identifier of the j$^{th}$ synchronization signal block in the group in which the j$^{th}$ synchronization signal block is located, and an identifier of the j$^{th}$ synchronization signal block, the identifier of the slot in which the j$^{th}$ synchronization signal block is located, or a CP type corresponding to the slot in which the j$^{th}$ synchronization signal block is located. For example, the initial value of the DMRS sequence may be determined based on the identifier of the group in which the j$^{th}$ synchronization signal block is located. Alternatively, the initial value of the DMRS sequence may be determined based on the identifier of the group in which the j$^{th}$ synchronization signal block is located and the identifier of the j$^{th}$ synchronization signal block in the group in which the j$^{th}$ synchronization signal block is located. Alternatively, the initial value of the DMRS sequence may be determined based on the identifier of the group in which the j$^{th}$ synchronization signal block is located, the identifier of the j$^{th}$ synchronization signal block in the group in which the j$^{th}$ synchronization signal block is located, the identifier of the j$^{th}$ synchronization signal block, the identifier of the slot in which the j$^{th}$ synchronization signal block is located, and the CP type corresponding to the slot in which the j$^{th}$ synchronization signal block is located.

An example in which the initial value of the DMRS sequence is determined based on the identifier of the group in which the j$^{th}$ synchronization signal block is located is used. $C_{init}=f(i_{team})$. $i_{team}$ represents the identifier of the group in which the S-SSB is located, and $C_{init}$ represents the initial value of the DMRS sequence. $f(i_{team})$ is represented as a function of $i_{team}$.

For example, $C_{init} = 2^{m+3}(i_{team} + 1)(N_{SLSSID} + 1) + 2^m(i_{team} + 1) + 2N_{SLSSID} + N_{CP}$. $N_{SLSSID}$ represents an identifier SLSSID of a synchronization source. $N_{CP}$ represents the CP type, and has a value of 0 or 1. m is an integer greater than or equal to 0. An example in which the initial value of the DMRS sequence is determined based on the identifier of the synchronization source, the CP type, and the identifier of the group in which the S-SSB is located is used for the formula.

Alternatively, an example in which the initial value of the DMRS sequence is determined based on the identifier of the j$^{th}$ synchronization signal block in the group in which the j$^{th}$ synchronization signal block is located is used. $C_{init}=f(i_{s-ssb})$. $i_{s-ssb}$ represents the identifier of the S-SSB in the group in which the S-SSB is located, and $C_{init}$ represents the initial value of the DMRS sequence. $f(i_{team})$ is represented as a function of $i_{team}$.

For example, $C_{init}=2^{m+3}(i_{s-ssb} + 1)(N_{SLSSID} + 1) + 2^m(i_{s-ssb} + 1) + 2N_{SLSSID} + N_{CP}$. An example in which the initial value of the DMRS sequence is determined based on the identifier of the synchronization source, the CP type, and the identifier of the S-SSB in the group in which the S-SSB is located is used for the formula.

A correspondence between $C_{init}$ and a time domain location of a synchronization signal block may be set in advance. The correspondence may be specified by using a protocol; may be set by the network device and notified to the first terminal apparatus and the second terminal apparatus; may be determined through negotiation between the first terminal apparatus and the second terminal apparatus; or the like. In this case, if the first terminal apparatus needs to indicate the time domain location of the j$^{th}$ synchronization signal block, the first terminal apparatus may select, based on the correspondence, $C_{init}$ corresponding to the time domain location of the j$^{th}$ synchronization signal block, and use $C_{init}$ as the initial value of the DMRS sequence. After receiving the j$^{th}$ synchronization signal block, the second terminal apparatus may determine the time domain location of the j$^{th}$ synchronization signal block based on $C_{init}$.

For example, the time domain location of the j$^{th}$ synchronization signal block includes the identifier of the group in which the j$^{th}$ synchronization signal block is located. In this case, a correspondence between $C_{init}$ and an identifier of a group may be set in advance. The correspondence may be specified by using a protocol; may be set by the network device and notified to the first terminal apparatus and the second terminal apparatus; may be determined through negotiation between the first terminal apparatus and the second terminal apparatus; or the like. In this case, if the first terminal apparatus needs to indicate the identifier of the group in which the j$^{th}$ synchronization signal block is located, the first terminal apparatus may select, based on the correspondence, $C_{init}$ corresponding to the identifier of the group, and use $C_{init}$ as the initial value of the DMRS sequence. After receiving the first synchronization signal block, the second terminal apparatus may determine the identifier of the corresponding group based on $C_{init}$.

Manner 2: The time domain location of the j$^{th}$ synchronization signal block is indicated by using the initial location of the DMRS sequence.

For example, the DMRS sequence may be generated by using an initial sequence c(n). When the DMRS sequence is generated, different locations of the sequence c(n) may be used as initial locations of the DMRS sequence, so that different DMRS sequences can be obtained. For example, for a DMRS sequence, a start location of the 2$^{nd}$ element of the sequence c(n) is used as an initial location; and for another DMRS sequence, a start location of the 5$^{th}$ element of the sequence c(n) is used as an initial location.

For example, the initial location of the DMRS sequence may be determined by using the identifier of the group in which the $j^{th}$ synchronization signal block is located, or determined by using the identifier of the $j^{th}$ synchronization signal block in the group in which the $j^{th}$ synchronization signal block is located, or determined by using the identifier of the group in which the $j^{th}$ synchronization signal block is located and the identifier of the $j^{th}$ synchronization signal block in the group in which the $j^{th}$ synchronization signal block is located.

An example in which the initial location of the DMRS sequence is determined by using the identifier of the group in which the $j^{th}$ synchronization signal block is located is used. For example, $i_{team} = 0, 1, \ldots$ and $s_i = c(j + i_{team} \times N)$. N represents a length of the DMRS sequence, and $s_i$ represents the generated DMRS sequence.

Alternatively, an example in which the initial location of the DMRS sequence is determined by using the identifier of the $j^{th}$ synchronization signal block in the group in which the $j^{th}$ synchronization signal block is located is used. For example, $i_{s-ssb} = 0, 1, \ldots$ and $s_i = c(j + i_{s-ssb} \times N)$. N represents a length of the DMRS sequence, and $s_i$ represents the generated DMRS sequence.

A correspondence between different start locations of c(n) and a time domain location of a synchronization signal block may be set in advance. The correspondence may be specified by using a protocol; may be set by the network device and notified to the first terminal apparatus and the second terminal apparatus; may be determined through negotiation between the first terminal apparatus and the second terminal apparatus; or the like. In this case, if the first terminal apparatus needs to indicate the time domain location of the $j^{th}$ synchronization signal block, the first terminal apparatus may select, based on the correspondence, a start location of c(n) corresponding to the time domain location of the $j^{th}$ synchronization signal block, to obtain a corresponding DMRS sequence. After receiving the $j^{th}$ synchronization signal block, the second terminal apparatus may determine the time domain location of the $j^{th}$ synchronization signal block based on a start location of the DMRS sequence.

For example, the time domain location of the $j^{th}$ synchronization signal block includes the identifier of the group in which the $j^{th}$ synchronization signal block is located. In this case, a correspondence between different start locations of c(n) and an identifier of a group may be set in advance. The correspondence may be specified by using a protocol; may be set by the network device and notified to the first terminal apparatus and the second terminal apparatus; may be determined through negotiation between the first terminal apparatus and the second terminal apparatus; or the like. In this case, if the first terminal apparatus needs to indicate the identifier of the group in which the $j^{th}$ synchronization signal block is located, the first terminal apparatus may select, based on the correspondence, a start location of c(n) corresponding to the identifier of the group, to obtain a corresponding DMRS sequence. After receiving the first synchronization signal block, the second terminal apparatus may determine the identifier of the corresponding group based on a start location of the DMRS sequence.

For example, a DMRS carried on a broadcast channel included in the $j^{th}$ synchronization signal block may occupy at least two adjacent symbols in time domain. The at least two symbols include, for example, two, three, or more symbols. If the number of symbols occupied by the DMRS carried on the broadcast channel included in the $j^{th}$ synchronization signal block is greater than or equal to 4, the symbols occupied by the DMRS may be grouped into at least two symbol groups. Each of the at least two symbol groups may be used to indicate the time domain location of the $j^{th}$ synchronization signal block. Content indicated by different symbol groups in the at least two symbol groups may be the same or may be different. For example, each of the at least two symbol groups may indicate the identifier of the group in which the $j^{th}$ synchronization signal block is located. Alternatively, each of the at least two symbol groups may indicate the identifier of the $j^{th}$ synchronization signal block in the group in which the $j^{th}$ synchronization signal block is located. Alternatively, one of the at least two symbol groups may indicate the identifier of the group in which the $j^{th}$ synchronization signal block is located, and another symbol group may indicate the identifier of the $j^{th}$ synchronization signal block in the group in which the $j^{th}$ synchronization signal block is located. Same content is indicated by using different symbol groups, so that the two symbol groups may be mutually verified, to ensure reliability of the indicated content. Alternatively, different content is respectively indicated by using different symbol groups, so that richer content may be indicated, and DMRS utilization is improved.

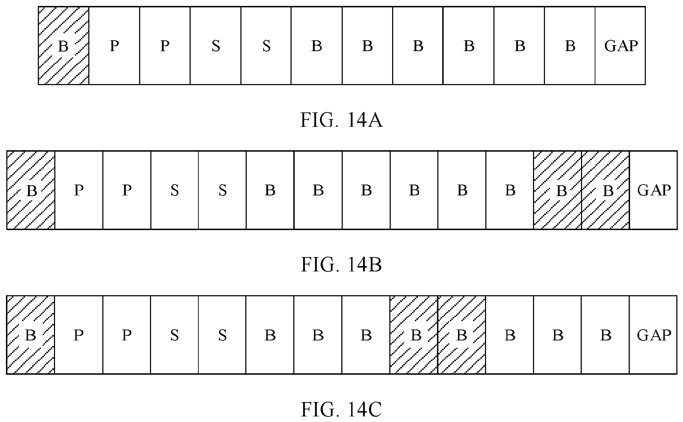

For example, FIG. 14A is a schematic diagram in which one slot of an extended (extended) CP carries a DMRS sequence. One slot of the extended CP includes 12 symbols. P represents an OFDM symbol that carries a sidelink PSS. S represents a symbol that carries a sidelink SSS. Neither a symbol represented by B with slashes nor a symbol represented by GAP is used to carry the DMRS sequence. All symbols represented by the remaining B may be used to carry the DMRS sequence. It can be learned that in FIG. 14A, there are six symbols that may carry the DMRS sequence. Optionally, the six symbols may be grouped into two groups. Each group includes three contiguous symbols. One group thereof may indicate an identifier of a group in which an S-SSB is located, and the other group thereof may indicate an identifier of the S-SSB.

For another example, FIG. 14B is a schematic diagram in which one slot of a normal (normal) CP carries a DMRS sequence. One slot of the normal CP includes 14 symbols. P represents a symbol that carries a sidelink PSS. S represents a symbol that carries a sidelink SSS. Neither a symbol represented by B with slashes nor a symbol represented by GAP is used to carry the DMRS sequence. All symbols represented by the remaining B may be used to carry the DMRS sequence. It can be learned that in FIG. 14B, there are six symbols that may carry the sequence. Optionally, the six symbols may be grouped into two groups. Each group includes three contiguous symbols. One group thereof may indicate an identifier of a group in which an S-SSB is located, and the other group thereof may indicate an identifier of the S-SSB.

For still another example, FIG. 14C is a schematic diagram in which one slot of a normal CP carries a DMRS sequence. P represents a symbol that carries a sidelink PSS. S represents a symbol that carries a sidelink SSS. Neither a symbol represented by B with slashes nor a symbol represented by GAP is used to carry the DMRS sequence. All symbols represented by the remaining B may be used to carry the DMRS sequence. It can be learned that in FIG. 14C, there are also six symbols that may carry the DMRS sequence. Optionally, the six symbols may be grouped into two groups. Each group includes three contiguous symbols. One group thereof may indicate an identifier of a group in which an S-SSB is located, and the other group thereof may indicate an identifier of the S-SSB.

3. Manner 3: The time domain location of the $j^{th}$ synchronization signal block is indicated by using a reference signal used to scramble the signaling carried on the broadcast channel included in the $j^{th}$ synchronization signal block.

An example in which the $j^{th}$ synchronization signal block is an S-SSB is used. The signaling carried on the broadcast channel included in the $j^{th}$ synchronization signal block is, for example, sidelink broadcast information (sidelink-MIB, SL-MIB). Manner 3 means that a time domain location of the S-SSB is indicated by using a reference signal used to scramble the SL-MIB. The reference signal used to scramble the SL-MIB is, for example, a reference signal sequence used to scramble the SL-MIB.

For example, an initial value of the reference signal sequence may be determined by using one or more of the following parameters: the identifier of the group in which the $j^{th}$ synchronization signal block is located, the identifier of the $j^{th}$ synchronization signal block in the group in which the $j^{th}$ synchronization signal block is located, and the identifier of the $j^{th}$ synchronization signal block, the identifier of the slot in which the $j^{th}$ synchronization signal block is located, or the CP type corresponding to the slot in which the $j^{th}$ synchronization signal block is located. For example, the initial value of the reference signal sequence may be determined based on the identifier of the group in which the $j^{th}$ synchronization signal block is located. Alternatively, the initial value of the reference signal sequence may be determined based on the identifier of the group in which the $j^{th}$

synchronization signal block is located and the identifier of the $j^{th}$ synchronization signal block in the group in which the $j^{th}$ synchronization signal block is located. Alternatively, the initial value of the reference signal sequence may be determined based on the identifier of the group in which the $j^{th}$ synchronization signal block is located, the identifier of the $j^{th}$ synchronization signal block in the group in which the $j^{th}$ synchronization signal block is located, the identifier of the $j^{th}$ synchronization signal block, the identifier of the slot in which the $j^{th}$ synchronization signal block is located, and the CP type corresponding to the slot in which the $j^{th}$ synchronization signal block is located.

For example, v=0, 1, ..., 7. $s_i = c(j + v_M)$. $b_i = (a_i + h_i)$ mod 2.

$b_i$ represents a scrambled SL-MIB. $a_i$ represents a to-be-scrambled SL-MIB, in other words, represents a bit before encoding or a bit after encoding. $h_i$ represents a reference signal sequence used to scramble the SL-MIB. c(n) represents an initial sequence. The sequence c(n) may be generated based on a pseudo-random sequence, for example, an m-sequence or a Gold sequence. A sequence value of the sequence c(n) may be determined by using an initial value $C_{init}$ of the sequence. M represents a sequence length for scrambling the SL-MIB. v is an intermediate variable.

An example in which the initial value of the reference signal sequence is determined based on the identifier of the slot in which the $j^{th}$ synchronization signal block is located and the CP type corresponding to the slot in which the $j^{th}$ synchronization signal block is located is used.

For example, $C_{init} = 2^{11} (n_s + 1)(N_{SLSSID} + 1) + 2N_{SLSSID} + N_{CP}$.

$n_s$ represents a slot number of the slot in which the $j^{th}$ synchronization signal block is located. $N_{SLSSID}$ represents the identifier SLSSID of the synchronization source. $N_{CP}$ represents the CP type, and has a value of 0 or 1.

Optionally, a corresponding maximum value of v may be a maximum value of the repetition factor H minus 1, that is, v=0, 1, ..., R-1.

For different subcarrier spacings, H may have corresponding maximum values. For example:

For a low frequency, when a subcarrier spacing is 15 kHz, a maximum value of H may be 1; or when a subcarrier spacing is 30 kHz, a maximum value of H may be 2; or when a subcarrier spacing is 60 kHz, a maximum value of H may be 4.

Alternatively, for a low frequency, when a subcarrier spacing is 15 kHz, a maximum value of H may be 2; or when a subcarrier spacing is 30 kHz, a maximum value of H may be 4; or when a subcarrier spacing is 60 kHz, a maximum value of H may be 8.

For a high frequency, when a subcarrier spacing is 60 kHz, a maximum value of H may be 32; or when a subcarrier spacing is 120 kHz, a maximum value of H may be 64.

In addition, for a high frequency, if the number H of S-SSBs that need to be repeatedly sent is less than R, repeated transmission of the S-SSBs may be implemented by using one subgroup, or repeated transmission of the S-SSBs may be implemented by using a plurality of subgroups. Alternatively, if the number H of S-SSBs that need to be repeatedly sent is greater than R, repeated transmission of the S-SSBs may be implemented by using two or more subgroups.

Alternatively, if the number H of S-SSBs that need to be repeatedly sent is less than X, repeated transmission of the S-SSBs may be implemented by using one group, or repeated transmission of the S-SSBs may be implemented by using a plurality of groups. Alternatively, if the number H of S-SSBs that need to be repeatedly sent is greater than X, repeated transmission of the S-SSBs may be implemented by using two or more groups.

A correspondence between $C_{init}$ and a time domain location of a synchronization signal block may be set in advance. The correspondence may be specified by using a protocol; may be set by the network device and notified to the first terminal apparatus and the second terminal apparatus; may be determined through negotiation between the first terminal apparatus and the second terminal apparatus; or the like. In this case, if the first terminal apparatus needs to indicate the time domain location of the $j^{th}$ synchronization signal block, the first terminal apparatus may select, based on the correspondence, $C_{init}$ corresponding to the time domain location of the $j^{th}$ synchronization signal block, and use $C_{init}$ as the initial value of the reference signal sequence. After receiving the $j^{th}$ synchronization signal block, the second terminal apparatus may determine the time domain location of the $j^{th}$ synchronization signal block based on $C_{init}$.

For example, the time domain location of the $j^{th}$ synchronization signal block includes the identifier of the group in which the $j^{th}$ synchronization signal block is located. In this case, a correspondence between $C_{init}$ and an identifier of a group may be set in advance. The correspondence may be specified by using a protocol; may be set by the network device and notified to the first terminal apparatus and the second terminal apparatus; may be determined through negotiation between the first terminal apparatus and the second terminal apparatus; or the like. In this case, if the first terminal apparatus needs to indicate the identifier of the group in which the $j^{th}$ synchronization signal block is located, the first terminal apparatus may select, based on the correspondence, $C_{init}$ corresponding to the identifier of the group, and use $C_{init}$ as the initial value of the reference signal sequence. After receiving the $j^{th}$ synchronization signal block, the second terminal apparatus may determine the identifier of the corresponding group based on $C_{init}$.

Manner 2: The time domain location of the $j^{th}$ synchronization signal block is indicated by using an initial location of the reference signal sequence.

For example, the reference signal sequence may be generated by using the initial sequence c(n). When the reference signal sequence is generated, different locations of the sequence c(n) may be used as initial locations of the reference signal sequence, so that different reference signal sequences can be obtained. For example, for a reference signal sequence, a start location of the $3^{rd}$ element of the sequence c(n) is used as an initial location; and for another reference signal sequence, a start location of the $4^{th}$ element of the sequence c(n) is used as an initial location.

For example, the initial location of the reference signal sequence may be determined by using the identifier of the group in which the $j^{th}$ synchronization signal block is located, or determined by using the identifier of the $j^{th}$ synchronization signal block in the group in which the $j^{th}$ synchronization signal block is located, or determined by using the identifier of the group in which the $j^{th}$ synchronization signal block is located and the identifier of the $j^{th}$ synchronization signal block in the group in which the $j^{th}$ synchronization signal block is located.

An example in which the initial location of the reference signal sequence is determined by using the identifier of the group in which the $j^{th}$ synchronization signal block is located is used. For example, $i_{team}=0, 1, ...$ and $s_i=c(j+i_{team} \times N)$. N represents a length of the reference signal sequence, and $s_i$ represents the generated reference signal sequence.

Alternatively, an example in which the initial location of the reference signal sequence is determined by using the identifier of the $j^{th}$ synchronization signal block in the group in which the $j^{th}$ synchronization signal block is located is used. For example, $i_{s\text{-}ssb}=0, 1, ...$ and $s_i=c(j+i_{s\text{-}ssb} \times N)$. N represents a length of the reference signal sequence, and $s_i$ represents the generated reference signal sequence.

A correspondence between different start locations of c(n) and a time domain location of a synchronization signal block may be set in advance. The correspondence may be specified by using a protocol; may be set by the network device and notified to the first terminal apparatus and the second terminal apparatus; may be determined through negotiation between the first terminal apparatus and the second terminal apparatus; or the like. In this case, if the first terminal apparatus needs to indicate the time domain location of the $j^{th}$ synchronization signal block, the first terminal apparatus may select, based on the correspondence, a start location of c(n) corresponding to the time domain location of the $j^{th}$ synchronization signal block, to obtain a corresponding reference signal sequence. After receiving the $j^{th}$ synchronization signal block, the second terminal apparatus may determine the time domain location of the $j^{th}$ synchronization signal block based on a start location of the reference signal sequence.

For example, the time domain location of the $j^{th}$ synchronization signal block includes the identifier of the group in which the $j^{th}$ synchronization signal block is located. In this case, a correspondence between different start locations of c(n) and an identifier of a group may be set in advance. The correspondence may be specified by using a protocol; may be set by the network device and notified to the first terminal apparatus and the second terminal apparatus; may be determined through negotiation between the first terminal apparatus and the second terminal apparatus; or the like. In this case, if the first terminal apparatus needs to indicate the identifier of the group in which the $j^{th}$ synchronization signal block is located, the first terminal apparatus may select, based on the correspondence, a start location of c(n) corresponding to the identifier of the group, to obtain a corresponding reference signal sequence. After receiving the $j^{th}$ synchronization signal block, the second terminal apparatus may determine the identifier of the corresponding group based on a start location of the reference signal sequence.

In the foregoing three manners, which manner is used to indicate the time domain location of the $j^{th}$ synchronization signal block may be specified by using a protocol, configured by the network device for the first terminal apparatus, determined through negotiation between the first terminal apparatus and the second terminal apparatus, or the like.

For example, the time domain location of the $j^{th}$ synchronization signal block includes the identifier of the group in which the $j^{th}$ synchronization signal block is located, and includes the identifier of the $j^{th}$ synchronization signal block in the group in which the $j^{th}$ synchronization signal block is located. In this case, the $j^{th}$ synchronization signal block indicates the time domain location of the $j^{th}$ synchronization signal block, and there may be a plurality of indication manners. For example, in an indication manner, the identifier of the group in which the $j^{th}$ synchronization signal block is located is indicated by using the signaling carried on the broadcast channel included in the $j^{th}$ synchronization signal block, and the identifier of the $j^{th}$ synchronization signal block in the group in which the $j^{th}$ synchronization signal block is located is indicated by using an initial value or an initial location of a reference signal sequence used to scramble the signaling carried on the broadcast channel included in the $j^{th}$ synchronization signal block. Alternatively, in another indication manner, the identifier of the group in which the $j^{th}$ synchronization signal block is located is indicated by using the signaling carried on the broadcast channel included in the $j^{th}$ synchronization signal block, and the identifier of the $j^{th}$ synchronization signal block in the group in which the $j^{th}$ synchronization signal block is located is indicated by using an initial value or an initial location of a demodulation reference signal sequence carried on the broadcast channel included in the $j^{th}$ synchronization signal block. Alternatively, in still another indication manner, the identifier of the group in which the $j^{th}$ synchronization signal block is located is indicated by using an initial value or an initial location of a reference signal sequence used to scramble the signaling carried on the broadcast channel included in the $j^{th}$ synchronization signal block, and the identifier of the $j^{th}$ synchronization signal block in the group in which the $j^{th}$ synchronization signal block is located is indicated by using an initial value or an initial location of a demodulation reference signal sequence carried on the broadcast channel included in the $j^{th}$ synchronization signal block. Alternatively, in yet another indication manner, the identifier of the $j^{th}$ synchronization signal block in the group in which the $j^{th}$ synchronization signal block is located is indicated by using an initial value or an initial location of a reference signal sequence used to scramble the signaling carried on the broadcast channel included in the $j^{th}$ synchronization signal block, and the identifier of the group in which the $j^{th}$ synchronization signal block is located is indicated by using an initial value or an initial location of a demodulation reference signal sequence carried on the broadcast channel included in the $j^{th}$ synchronization signal block. Certainly, the indication manners are not limited to these indication manners.

For example, if the time domain location of the $j^{th}$ synchronization signal block includes the identifier of the group in which the $j^{th}$ synchronization signal block is located, in an implementation, the identifier of the group in which the $j^{th}$ synchronization signal block is located may be indicated by using 3 bits or 1 bit in the $j^{th}$ synchronization signal block.

For example, when the frequency of the carrier on which the first resource set is located is a high frequency, M may be set to 8. Therefore, the identifier of the group in which the $j^{th}$ synchronization signal block is located may be indicated by using 3 bits. Alternatively, when the frequency of the carrier on which the first resource set is located is a low frequency, M may be set to 2. Therefore, the identifier of the group in which the $j^{th}$ synchronization signal block is located may be indicated by using 1 bit. Alternatively, when a frequency of a carrier on which the first resource set is located is a low frequency, the identifier of the group in which the $j^{th}$ synchronization signal block is located may be indicated by using two values corresponding to 3 bits. The number of bits used to indicate the identifier of the group in which the $j^{th}$ synchronization signal block is located may be related to a value of M. In this way, not only the indication of the identifier of the group in which the $j^{th}$ synchronization signal block is located can be satisfied, but also the number of bits can be reduced as much as possible.

For another example, if the time domain location of the $j^{th}$ synchronization signal block includes the identifier of the $j^{th}$ synchronization signal block in the group in which the $j^{th}$ synchronization signal block is located, in an implementation, the identifier of the $j^{th}$ synchronization signal block in the group in which the $j^{th}$ synchronization signal block is located may be indicated by using 3 bits, 2 bits, or 1 bit in the $j^{th}$ synchronization signal block.

For example, when the frequency of the carrier on which the first resource set is located is a high frequency, and the subcarrier spacing of the carrier on which the first resource set is located is 120 kHz, X may be set to 8, and the identifier of the $j^{th}$ synchronization signal block in the group in which the $j^{th}$ synchronization signal block is located may be indicated by using 3 bits. Alternatively, when the frequency of the carrier on which the first resource set is located is a high frequency, and the subcarrier spacing of the carrier on which the first resource set is located is 60 kHz, X may be set to 4, and the identifier of the $j^{th}$ synchronization signal block in the group in which the $j^{th}$ synchronization signal block is located may be indicated by using 2 bits, or four values corresponding to 3 bits. Alternatively, when the frequency of the carrier on which the first resource set is located is a low frequency, and the subcarrier spacing of the carrier on which the first resource set is located is 60 kHz, X may be set to 2, and the identifier of the $j^{th}$ synchronization signal block in the group in which the $j^{th}$ synchronization signal block is located may be indicated by using 1 bit, or two values corresponding to 3 bits; or X may be set to 4, and the identifier of the $j^{th}$ synchronization signal block in the group in which the $j^{th}$ synchronization signal block is located may be indicated by using 2 bits, or four values corresponding to 3 bits. Alternatively, when the frequency of the carrier on which the first resource set is located is a high frequency, and the subcarrier spacing of the carrier on which the first resource set is located is 15 kHz or 30 kHz, X may be set to 1 or 2, and the identifier of the $j^{th}$ synchronization signal block in the group in which the $j^{th}$ synchronization signal block is located may be indicated by using 1 bit, or one or two values corresponding to 3 bits. The number of bits used to indicate the identifier of the $j^{th}$ synchronization signal block in the group in which the $j^{th}$ synchronization signal block is located may be related to a value of X. In this way, not only the indication of the identifier of the $j^{th}$ synchronization signal block in the group in which the $j^{th}$ synchronization signal block is located can be satisfied, but also the number of bits can be reduced as much as possible.

In addition, as described above, the first resource set may be further divided into the first part and the second part. The first part may include the first M/2 groups in time domain in the M groups, and the second part may include the last M/2 groups in time domain in the M groups. In this case, the time domain location of the $j^{th}$ synchronization signal block may further include an identifier of a part in which the $j^{th}$ synchronization signal block is located, for example, an identifier indicating the first part or an identifier indicating the second part; and the time domain location of the $j^{th}$ synchronization signal block may further include an identifier of the $j^{th}$ synchronization signal block in a group to which the $j^{th}$ synchronization signal block belongs in the part in which the $j^{th}$ synchronization signal block is located. For example, if the $j^{th}$ synchronization signal block belongs to the 1st group in the first part, the time domain location of the $j^{th}$ synchronization signal block may include the identifier of the first part, and include an identifier of the 1st group.

For example, the first part is located in a first half-frame of a first radio frame, and the second part is located in a second half-frame of the first radio frame. In this case, the time domain location of the $j^{th}$ synchronization signal block may further include an identifier of a half-frame in which the part in which the $j^{th}$ synchronization signal block is located is located, and the identifier of the $j^{th}$ synchronization signal block in the group in which the $j^{th}$ synchronization signal block is located in the part in which the $j^{th}$ synchronization signal block is located. For example, if the $j^{th}$ synchronization signal block belongs to the 1st group in the first part, the time domain location of the $j^{th}$ synchronization signal block may include an identifier of the first half-frame of the first radio frame, and include the identifier of the 1st group.

In addition, as described above, the time domain location of the $j^{th}$ synchronization signal block may further include the repetition factor H. In this case, a value of the repetition factor H may be further indicated by using the broadcast channel included in the $j^{th}$ synchronization signal block. For example, the $j^{th}$ synchronization signal block is an S-SSB, and the value of H may be indicated by using a PSBCH. For a low frequency, the value of H is indicated by using at most 3 bits. For a high frequency, the value of H is indicated by using at most 3 bits. For example, for a low frequency, if a subcarrier spacing is 15 kHz, the value of H may be indicated by using 1 bit; or if a subcarrier spacing is 30 kHz, the value of H may be indicated by using 2 bits; or if a subcarrier spacing is 60 kHz, the value of H may be indicated by using 3 bits.

In this embodiment of this application, the synchronization signal block period may include the first resource set, the first resource set includes M groups, and X candidate resources included in the 1st group in the M groups may be used to carry X synchronization signal blocks. It is equivalent to that resources used to send synchronization signal blocks are specified. When a synchronization signal block needs to be sent, it only needs to select a resource from the resources, so that a resource selection manner is simplified. In addition, one synchronization signal block may occupy Y symbols, so that the technical solution provided in this embodiment of this application can be applied to an NR-V2X system, or may be applied to another communication system in which it is specified that a synchronization signal block occupies Y symbols. In addition, the time domain location of the $j^{th}$ synchronization signal block may be indicated by using the $j^{th}$ synchronization signal block, so that the second terminal apparatus can receive the $j^{th}$ synchronization signal block at a correct time domain location, and synchronization signal block detection power consumption of the second terminal apparatus is reduced.

The embodiment shown in FIG. 13 may be applied alone, or may be applied in combination with the embodiment shown in FIG. 6. For example, for details about implementation of S131, refer to the descriptions of S61 in the embodiment shown in FIG. 6.

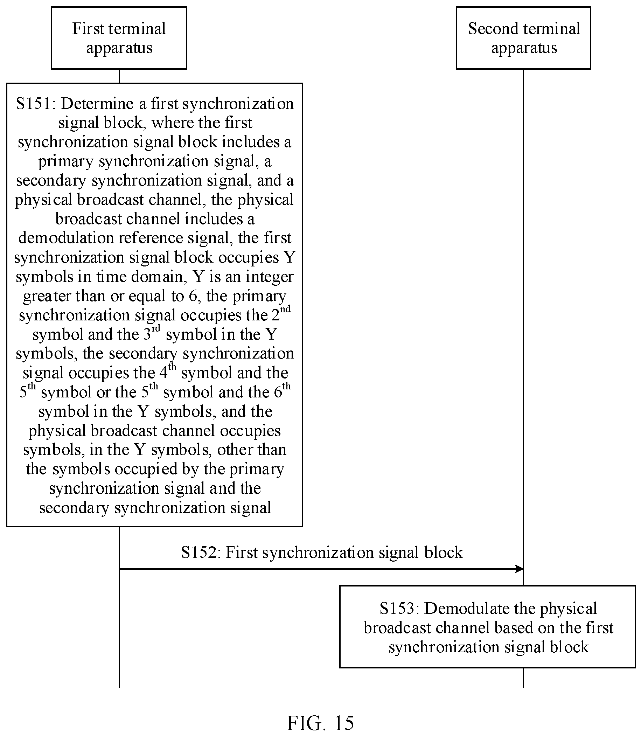

An embodiment of this application provides a third communication method, to resolve same technical problems. FIG. 15 is a flowchart of the method. In the following description process, an example in which the method is applied to the network architecture shown in FIG. 5 is used. In addition, the method may be performed by two communication apparatuses. The two communication apparatuses are, for example, a first communication apparatus and a second communication apparatus. The first communication apparatus or the second communication apparatus may be a network device or a communication apparatus that can support a function required by the network device to implement the method, or may be a terminal device or a communication apparatus that can support a function required by the terminal device to implement the method, or certainly may be another communication apparatus, for example, a chip system. In addition, an implementation of the first communication apparatus or the second communication apparatus is not limited. For example, the two communication apparatuses may be implemented in a same form. For example, the two communication apparatuses are implemented in a device form. Alternatively, the two communication apparatuses may be implemented in different forms. For example, the first communication apparatus is implemented in a device form, and the second communication apparatus is implemented in a chip system form. The network device is, for example, a base station.

For ease of description, the following uses an example in which the method is performed by a terminal apparatus and a terminal apparatus, to be specific, an example in which the first communication apparatus is a terminal apparatus (for example, referred to as a first terminal apparatus) and the second communication apparatus is also a terminal apparatus (for example, referred to as a second terminal apparatus). Because this embodiment uses an example in which the method is applied to the network architecture shown in FIG. 5, the first terminal apparatus described below may implement a function of the terminal device 1 in the network architecture shown in FIG. 5, and the second terminal apparatus described below may implement a function of the terminal device 2 in the network architecture shown in FIG. 5. In addition, the following may further relate to a network device. The network device described below may implement a function of the network device in the network architecture shown in FIG. 5. In a description process of this embodiment of this application, an example in which a synchronization signal block is an S-SSB is used. Actually, the synchronization signal block is not limited thereto. A range of the synchronization signal block described in this embodiment of this application may include any signal used for synchronization, for example, may include a sidelink synchronization signal block, or may include a synchronization signal block used for a Uu interface.

S151: The first terminal apparatus determines a first synchronization signal block.

In an optional manner, Y may be an integer greater than or equal to 6. For example, the first synchronization signal block includes a primary synchronization signal, a secondary synchronization signal, and a physical broadcast channel, and the physical broadcast channel may include a DMRS. The primary synchronization signal may occupy the $2^{nd}$ symbol and the $3^{rd}$ symbol in Y symbols. The secondary synchronization signal may occupy the $4^{th}$ symbol and the $5^{th}$ symbol in the Y symbols, or may occupy the $5^{th}$ symbol and the $6^{th}$ symbol in the Y symbols. The physical broadcast channel may occupy symbols other than the symbols occupied by the primary synchronization signal and the secondary synchronization signal in the Y symbols. For example, the physical broadcast channel may occupy all or some of the symbols other than the symbols occupied by the primary synchronization signal and the secondary synchronization signal in the Y symbols. For example, the Y symbols are located in one slot, and the one slot may include 12 symbols or 14 symbols. The primary synchronization signal may occupy the $2^{nd}$ symbol and the $3^{rd}$ symbol in the slot. The secondary synchronization signal may occupy the $4^{th}$ symbol and the $5^{th}$ symbol in the slot, or may occupy the $5^{th}$ symbol and the $6^{th}$ symbol in the slot. The physical broadcast channel may occupy symbols other than the symbols occupied by the primary synchronization signal and the secondary synchronization signal in the slot.

The physical broadcast channel includes the DMRS, and symbols occupied by the DMRS are the symbols of the physical broadcast channel. Because the physical broadcast channel may occupy all or some of the symbols other than the symbols occupied by the primary synchronization signal and the secondary synchronization signal in the Y symbols, it may be considered that the DMRS may occupy all or some of the symbols other than the symbols occupied by the primary synchronization signal and the secondary synchronization signal in the Y symbols. If the DMRS occupies all of the symbols other than the symbols occupied by the primary synchronization signal and the secondary synchronization signal in the Y symbols, coverage of the DMRS may be improved. Alternatively, if the DMRS occupies some of the symbols other than the symbols occupied by the primary synchronization signal and the secondary synchronization signal in the Y symbols, some symbols may be further reserved for sending other information, so that resource utilization is improved.

Alternatively, it may be considered that the DMRS is independent of the first synchronization signal block, to be specific, it is considered that the DMRS does not belong to the first synchronization signal block, but the DMRS is related to the physical broadcast channel included in the first synchronization signal block, and the DMRS may occupy the symbols occupied by the physical broadcast channel.

The primary synchronization signal and the secondary synchronization signal may be located at the front part of the slot, so that the primary synchronization signal and the secondary synchronization signal are sent as early as possible, and the second terminal apparatus serving as a receive end may perform an operation such as synchronization based on the primary synchronization signal and the secondary synchronization signal. In addition, the DMRS occupies only the symbols of the physical broadcast channel, and does not occupy the symbols of the primary synchronization signal and the secondary synchronization signal. Therefore, reliability of the symbols occupied by the primary synchronization signal and the secondary synchronization signal can be ensured, and the DMRS can be normally sent.

For example, the first synchronization signal block may occupy all symbols in one slot in time domain, that is, Y symbols are all symbols in the one slot. For example, for some slots, a GAP is not included, and then one synchronization signal block may occupy the entire slot. Alternatively, the first synchronization signal block may occupy remaining symbols other than the last symbol in one slot in time domain, that is, Y symbols are symbols other than the last symbol in the one slot. For example, the Y symbols may be all remaining symbols other than the last symbol in the one slot. For example, for some slots, a GAP is included, and the GAP is carried on the last symbol in the slot. In this case, a synchronization signal block cannot occupy the last symbol in the slot, but may occupy remaining symbols other than the last symbol in the slot.

In addition, in a physical resource block (physical resource block, PRB) corresponding to the symbols of the physical broadcast channel that includes the DMRS, the DMRS may occupy three or four subcarriers at equal spacings, in other words, the DMRS may occupy, at equal spacings, the subcarriers by using three or four subcarriers as a spacing. Broadcast information carried on the physical broadcast channel may occupy a subcarrier other than the subcarriers occupied by the DMRS in the PRB. For example, one slot includes 12 symbols, which are respectively symbol 0 to symbol 11, a primary synchronization signal occupies symbol 1 and symbol 2, a secondary synchronization signal occupies symbol 3 and symbol 4, symbols occupied by a physical broadcast channel include symbol 5, and a DMRS occupies symbol 5. Certainly, the DMRS may further occupy another symbol of the physical broadcast signal. Herein, only symbol 5 is used as an example. For example, symbol 5 occupies one PRB in frequency domain, and one PRB may include 12 subcarriers, which are respectively subcarrier 0 to subcarrier 11. If the DMRS occupies three subcarriers at equal spacings, the spacings between the three subcarriers are 4. For example, the DMRS occupies subcarrier 0, subcarrier 4, and subcarrier 8. In this case, broadcast information carried on the physical broadcast channel may occupy one or more subcarriers in remaining subcarrier 1 to subcarrier 3, subcarrier 5 to subcarrier 7, or subcarrier 9 to subcarrier 11. The DMRS occupies only some subcarriers in frequency domain, so that not only sending of the DMRS can be ensured, but also some subcarriers can be reserved for other information to occupy. In this way, frequency domain resource utilization can be improved.

In this embodiment of this application, a pattern of a synchronization signal block may be related to a subcarrier spacing corresponding to the synchronization signal block. When a subcarrier spacing corresponding to the first synchronization signal block is different, a pattern (pattern) of the first synchronization signal block may also be different. The pattern of the synchronization signal block may be understood as a DMRS distribution status in the synchronization signal block. For example, the numbers of symbols occupied by DMRSs included in synchronization signal blocks corresponding to different patterns are different; or locations of symbols included in synchronization signal blocks corresponding to different patterns are different; or the numbers of symbols occupied by DMRSs included in synchronization signal blocks corresponding to different patterns are different, and locations of the symbols are different.

For example, a larger subcarrier spacing corresponding to a synchronization signal block indicates the smaller number of DMRS symbols included in the synchronization signal block. When the first synchronization signal block corresponds to a first subcarrier spacing, the number of symbols occupied by the DMRS included in the first synchronization signal block is a first value. When the first synchronization signal block corresponds to a second subcarrier spacing, the number of symbols occupied by the DMRS included in the first synchronization signal block is a second value. The first subcarrier spacing is less than the second subcarrier spacing, and the first value is greater than or equal to the second value.

Alternatively, a pattern of a synchronization signal block may be related to a factor such as a moving speed of a terminal apparatus. For example, for a terminal apparatus that moves at a high speed, the number of symbols occupied by a DMRS included in a synchronization signal block may be large, to satisfy estimation of a fast-changing channel condition. However, for a terminal apparatus that moves at a slow speed, the number of symbols occupied by a DMRS included in a synchronization signal block may be small, so that not only a channel estimation requirement can be satisfied, but also more symbols may be reserved to carry more information.

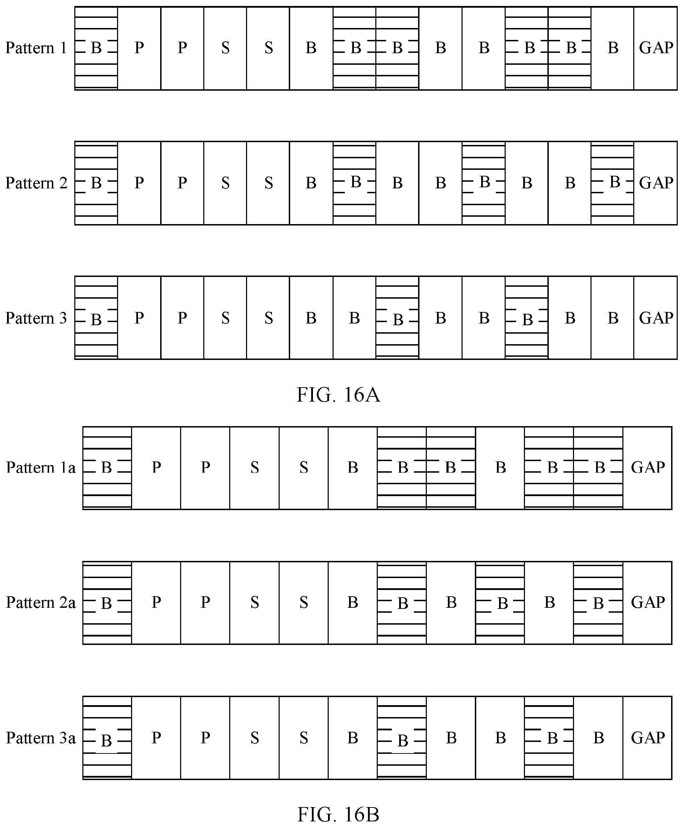

Optionally, a location of a DMRS in a PSBCH may be further determined in a manner shown in FIG. 16A or FIG. 16B. FIG. 16A shows several DMRS patterns corresponding to a slot of a normal CP. FIG. 16B shows several DMRS patterns corresponding to a slot of an extended CP. In FIG. 16A and FIG. 16B, all boxes marked with horizontal lines represent symbols occupied by the DMRS. P represents a symbol occupied by an SPSS, S represents a symbol occupied by an SSSS, and B represents a symbol occupied by the PSBCH.

Optionally, for the normal CP: Pattern 1 in FIG. 16A may be used for 15 kHz; pattern 2 in FIG. 16A may be used for 30 kHz; pattern 1, pattern 2, or pattern 3 in FIG. 16A may be used for 60 kHz; and pattern 3 in FIG. 16A may be used for 120 kHz.

Optionally, for the extended CP: Pattern 1a in FIG. 16B may be used for 15 kHz; pattern 1a or pattern 2a in FIG. 16B may be used for 30 kHz; pattern 1a, pattern 2a, or pattern 3a in FIG. 16B may be used for 60 kHz; and pattern 3a in FIG. 16B may be used for 120 kHz.

In general, for a smaller subcarrier spacing, the number of required DMRS symbols is larger, and for a faster speed, the number of required DMRS symbols is larger. In this case, the more DMRS symbols can provide better demodulation performance. For example, a pattern in which there are four DMRS symbols after an SSSS symbol is used for a smaller subcarrier spacing. Because the smaller subcarrier spacing corresponds to longer coherence time, the more DMRS symbols are required. A pattern in which there are three DMRS symbols after an SSSS symbol is used for a medium subcarrier spacing or a high speed scenario. A pattern in which there are two or one DMRS symbol after an SSSS symbol is used for a higher subcarrier spacing or a lower speed scenario, to provide optimal demodulation performance.

Further, a pattern in which there are adjacent DMRS symbols in time domain may be further used to improve estimation of Doppler frequency shift in a high speed scenario, to improve demodulation performance.

In addition, a symbol location difference between a normal CP and an extended CP is that the number of PSBCH symbols in a synchronization signal block after an SSSS symbol is different. However, in various DMRS patterns, DMRS symbols are placed as evenly as possible, so that performance of channel estimation and demodulation can be improved.

In an optional implementation, in the first synchronization signal block, symbols occupied by the physical broadcast channel that are located after the secondary synchronization signal may include at least four symbols occupied by the DMRS.

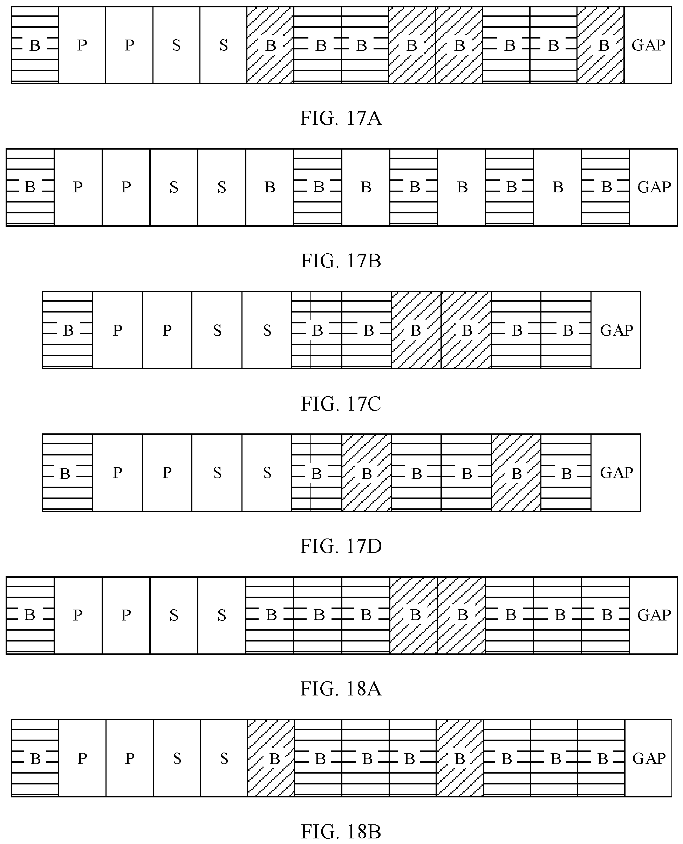

For example, FIG. 17A is a schematic diagram of a first synchronization signal block. In FIG. 17A, B represents a symbol occupied by a physical broadcast channel, P represents a symbol occupied by a primary synchronization signal, and S represents a symbol occupied by a secondary synchronization signal. In addition, a symbol with horizontal lines represents a symbol occupied by a DMRS, and a symbol with slashes represents a symbol that cannot be occupied by the primary synchronization signal, the secondary synchronization signal, and the physical broadcast channel. It can be learned that the first synchronization signal block includes five symbols occupied by the DMRS, and the DMRS occupies the 1st symbol. Therefore, after the secondary synchronization signal, four symbols occupied by the DMRS are included.

In addition, FIG. 17B is a schematic diagram of a first synchronization signal block. In FIG. 17B, B represents a symbol occupied by a physical broadcast channel, P represents a symbol occupied by a primary synchronization signal, and S represents a symbol occupied by a secondary synchronization signal. In addition, a symbol with horizontal lines represents a symbol occupied by a DMRS. In symbols occupied by a physical broadcast signal, a symbol other than symbols occupied by the DMRS may be used to carry other information, for example, broadcast information. It can be learned that the first synchronization signal block includes five symbols occupied by the DMRS, and the DMRS occupies the 1st symbol. Therefore, after the secondary synchronization signal, four symbols occupied by the DMRS are included.

In FIG. 17A and FIG. 17B, a slot corresponding to a normal CP is used as an example. Further, FIG. 17C is a schematic diagram of a first synchronization signal block. In FIG. 17C, B represents a symbol occupied by a physical broadcast channel, P represents a symbol occupied by a primary synchronization signal, and S represents a symbol occupied by a secondary synchronization signal. In addition, a symbol with horizontal lines represents a symbol occupied by a DMRS, and a symbol with slashes represents a symbol that cannot be occupied by the primary synchronization signal, the secondary synchronization signal, and the physical broadcast channel. It can be learned that the first synchronization signal block includes five symbols occupied by the DMRS, and the DMRS occupies the 1st symbol. Therefore, after the secondary synchronization signal, four symbols occupied by the DMRS are included.

Further, FIG. 17D is a schematic diagram of a first synchronization signal block. In FIG. 17D, B represents a symbol occupied by a physical broadcast channel, P represents a symbol occupied by a primary synchronization signal, and S represents a symbol occupied by a secondary synchronization signal. In addition, a symbol with horizontal lines represents a symbol occupied by a DMRS, and a symbol with slashes represents a symbol that cannot be occupied by the primary synchronization signal, the secondary synchronization signal, and the physical broadcast channel. It can be learned that the first synchronization signal block includes five symbols occupied by the DMRS, and the DMRS occupies the 1st symbol. Therefore, after the secondary synchronization signal, four symbols occupied by the DMRS are included.

In FIG. 17C and FIG. 17D, a slot corresponding to an extended CP is used as an example.

Alternatively, in the first synchronization signal block, symbols occupied by the physical broadcast channel that are located after the secondary synchronization signal may include at least six symbols occupied by the DMRS.

FIG. 18A is a schematic diagram of a first synchronization signal block. In FIG. 18A, B represents a symbol occupied by a physical broadcast channel, P represents a symbol occupied by a primary synchronization signal, and S represents a symbol occupied by a secondary synchronization signal. In addition, a symbol with horizontal lines represents a symbol occupied by a DMRS, and a symbol with slashes represents a symbol that cannot be occupied by the primary synchronization signal, the secondary synchronization signal, and the physical broadcast channel. It can be learned that the first synchronization signal block includes seven symbols occupied by the DMRS, and the DMRS occupies the 1st symbol. Therefore, after the secondary synchronization signal, six symbols occupied by the DMRS are included.

Further, FIG. 18B is a schematic diagram of a first synchronization signal block. In FIG. 18B, B represents a symbol occupied by a physical broadcast channel, P represents a symbol occupied by a primary synchronization signal, and S represents a symbol occupied by a secondary synchronization signal. In addition, a symbol with horizontal lines represents a symbol occupied by a DMRS, and a symbol with slashes represents a symbol that cannot be occupied by the primary synchronization signal, the secondary synchronization signal, and the physical broadcast channel. It can be learned that the first synchronization signal block includes seven symbols occupied by the DMRS, and the DMRS occupies the 1st symbol. Therefore, after the secondary synchronization signal, six symbols occupied by the DMRS are included.

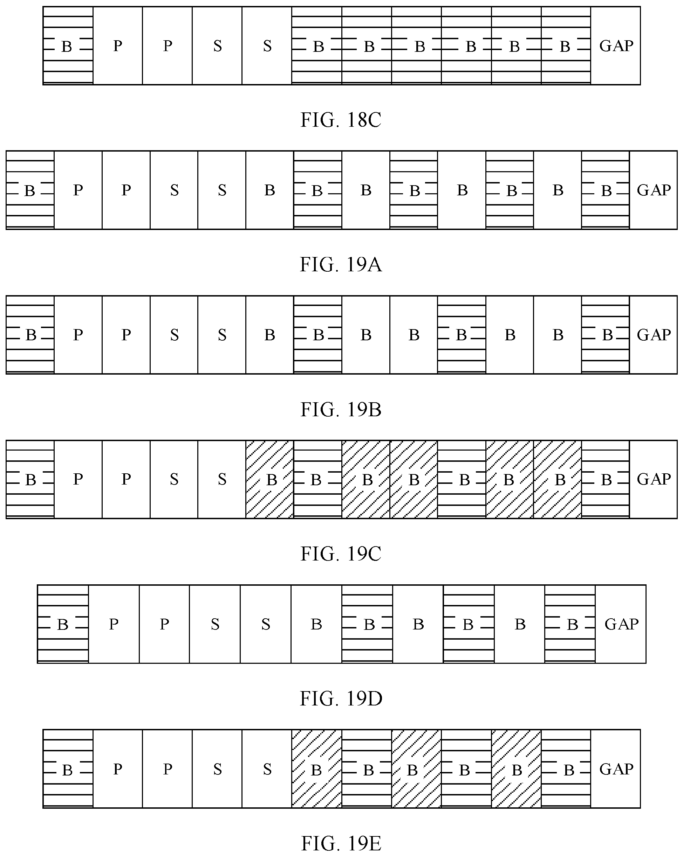

In FIG. 18A and FIG. 18B, a slot corresponding to a normal CP is used as an example. Further, FIG. 18C is a schematic diagram of a first synchronization signal block. In FIG. 18C, B represents a symbol occupied by a physical broadcast channel, P represents a symbol occupied by a primary synchronization signal, and S represents a symbol occupied by a secondary synchronization signal. In addition, a symbol with horizontal lines represents a symbol occupied by a DMRS, and the DMRS occupies all symbols occupied by the physical broadcast channel. It can be learned that the first synchronization signal block includes seven symbols occupied by the DMRS, and the DMRS occupies the 1st symbol. Therefore, after the secondary synchronization signal, six symbols occupied by the DMRS are included. In FIG. 18C, a slot corresponding to an extended CP is used as an example.

In a jth synchronization signal block, in symbols that are located after a secondary synchronization signal and that are occupied by a physical broadcast channel, if there are a plurality of symbols occupied by a DMRS, these symbols may belong to at least two symbol groups. For example, the at least two symbol groups may be discontiguous or contiguous in time domain. Each of the at least two symbol groups may include one or more symbols, for example, one, two, three, or more symbols, and the symbols included in each symbol group may be contiguous in time domain.

For example, in FIG. 17A, the four symbols are occupied by the DMRS after the secondary synchronization signal. For example, the four symbols belong to two symbol groups. The 1st symbol group thereof includes two symbols that are earlier in time domain. The 2nd symbol group thereof includes two symbols that are later in time domain. The two symbols included in each of the two symbol groups are contiguous in time domain, and the two symbol groups are discontiguous in time domain. For another example, in FIG. 18A, the six symbols are occupied by the DMRS after the secondary synchronization signal. For example, the six symbols belong to two symbol groups. The 1st symbol group thereof includes three symbols that are earlier in time domain. The 2nd symbol group thereof includes three symbols that are later in time domain. The three symbols included in each of the two symbol groups are contiguous in time domain, and the two symbol groups are discontiguous in time domain. For still another example, in FIG. 18C, the six symbols are occupied by the DMRS after the secondary synchronization signal. For example, the six symbols belong to two symbol groups. The 1st symbol group thereof includes three symbols that are earlier in time domain. The 2nd symbol group thereof includes three symbols that are later in time domain. The three symbols included in each of the two symbol groups are contiguous in time domain, and the two symbol groups are contiguous in time domain.

The symbols occupied by the DMRS are grouped into the at least two symbol groups. Different symbol groups may carry same information, for example, may all indicate an identifier of a group in which the first synchronization signal block is located. In this way, coverage of the information can be improved, to improve transmission reliability of the information. Alternatively, different symbol groups may carry different information. For example, the at least two symbol groups are specifically two symbol groups. One symbol group thereof may indicate an identifier of a group in which the first synchronization signal block is located. The other symbol group thereof may indicate an identifier of the first synchronization signal block in the group in which the first synchronization signal block is located. The different symbol groups carry the different information, so that information carried in the first synchronization signal block may be richer, and resource utilization is improved.

In an optional implementation, in the first synchronization signal block, symbols occupied by the physical broadcast channel that are located after symbols occupied by the secondary synchronization signal include at least three or four symbols at equal intervals. The at least three or four symbols at equal intervals are symbols occupied by the DMRS.

FIG. 19A is a schematic diagram of a first synchronization signal block. In FIG. 19A, B represents a symbol occupied by a physical broadcast channel, P represents a symbol occupied by a primary synchronization signal, and S represents a symbol occupied by a secondary synchronization signal. In addition, a symbol with horizontal lines represents a symbol occupied by a DMRS. In symbols occupied by the physical broadcast channel, a symbol other than symbols occupied by the DMRS may be used to carry other information, for example, broadcast information. It can be learned that the first synchronization signal block includes five symbols occupied by the DMRS, and the DMRS occupies the 1st symbol. Therefore, after the secondary synchronization signal, four symbols occupied by the DMRS are included. The four symbols are at equal intervals.

Further, FIG. 19B is a schematic diagram of a first synchronization signal block. In FIG. 19B, B represents a symbol occupied by a physical broadcast channel, P represents a symbol occupied by a primary synchronization signal, and S represents a symbol occupied by a secondary synchronization signal. In addition, a symbol with horizontal lines represents a symbol occupied by a DMRS. In symbols occupied by the physical broadcast channel, a symbol other than symbols occupied by the DMRS may be used to carry other information, for example, broadcast information. It can be learned that the first synchronization signal block includes four symbols occupied by the DMRS, and the DMRS occupies the 1st symbol. Therefore, after the secondary synchronization signal, three symbols occupied by the DMRS are included. The three symbols are at equal intervals.

Further, FIG. 19C is a schematic diagram of a first synchronization signal block. In FIG. 19C, B represents a symbol occupied by a physical broadcast channel, P represents a symbol occupied by a primary synchronization signal, and S represents a symbol occupied by a secondary synchronization signal. In addition, a symbol with horizontal lines represents a symbol occupied by a DMRS, and a symbol with slashes represents a symbol that cannot be occupied by the primary synchronization signal, the secondary synchronization signal, and the physical broadcast channel. It can be learned that the first synchronization signal block includes four symbols occupied by the DMRS, and the DMRS occupies the 1st symbol. Therefore, after the secondary synchronization signal, three symbols occupied by the DMRS are included. The three symbols are at equal intervals.

In FIG. 19A, FIG. 19B, and FIG. 19C, a slot corresponding to a normal CP is used as an example. Further, FIG. 19D is a schematic diagram of a first synchronization signal block. In FIG. 19D, B represents a symbol occupied by a physical broadcast channel, P represents a symbol occupied by a primary synchronization signal, and S represents a symbol occupied by a secondary synchronization signal. In addition, a symbol with horizontal lines represents a symbol occupied by a DMRS. In symbols occupied by the physical broadcast channel, a symbol other than symbols occupied by the DMRS may be used to carry other information, for example, broadcast information. It can be learned that the first synchronization signal block includes four symbols occupied by the DMRS, and the DMRS occupies the 1st symbol. Therefore, after the secondary synchronization signal, three symbols occupied by the DMRS are included. The three symbols are at equal intervals.

Further, FIG. 19E is a schematic diagram of a first synchronization signal block. In FIG. 19E, B represents a symbol occupied by a physical broadcast channel, P represents a symbol occupied by a primary synchronization signal, and S represents a symbol occupied by a secondary synchronization signal. In addition, a symbol with horizontal lines represents a symbol occupied by a DMRS, and a symbol with slashes represents a symbol that cannot be occupied by the primary synchronization signal, the secondary synchronization signal, and the physical broadcast channel. It can be learned that the first synchronization signal block includes four symbols occupied by the DMRS, and the DMRS occupies the 1st symbol. Therefore, after the secondary synchronization signal, three symbols occupied by the DMRS are included. The three symbols are at equal intervals.

In FIG. 19D and FIG. 19E, a slot corresponding to an extended CP is used as an example.

In an optional implementation, in the first synchronization signal block, symbols occupied by the physical broadcast channel that are located after symbols occupied by the secondary synchronization signal include one or two symbols occupied by the DMRS.

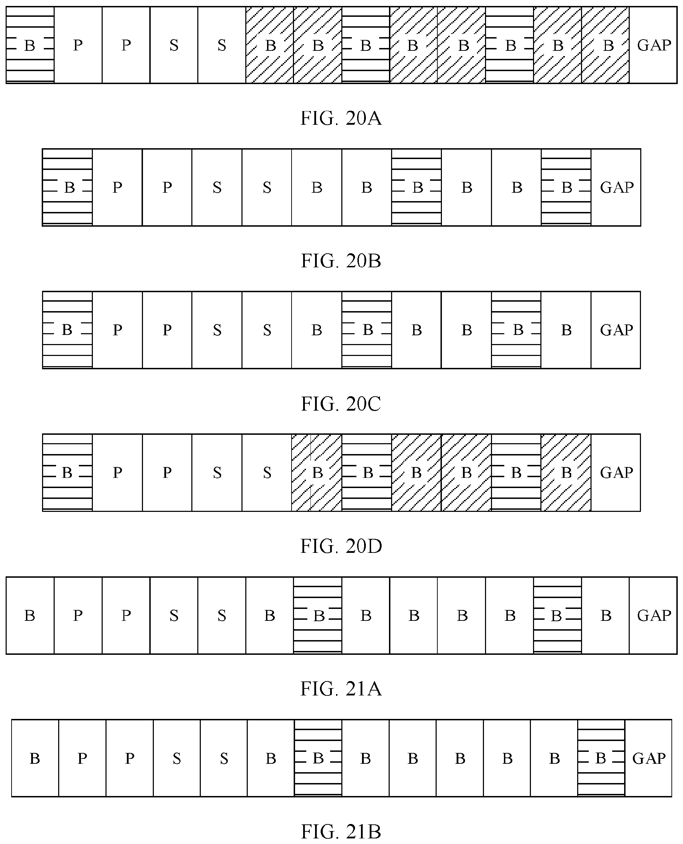

FIG. 20A is a schematic diagram of a first synchronization signal block. In FIG. 20A, B represents a symbol occupied by a physical broadcast channel, P represents a symbol occupied by a primary synchronization signal, and S represents a symbol occupied by a secondary synchronization signal. In addition, a symbol with horizontal lines represents a symbol occupied by a DMRS, and a symbol with slashes represents a symbol that cannot be occupied by the primary synchronization signal, the secondary synchronization signal, and the physical broadcast channel. It can be learned that the first synchronization signal block includes three symbols occupied by the DMRS, and the DMRS occupies the 1st symbol. Therefore, after the secondary synchronization signal, two symbols occupied by the DMRS are included. The two symbols are at equal intervals.

In FIG. 20A, a slot corresponding to a normal CP is used as an example. Further, FIG. 20B is a schematic diagram of a first synchronization signal block. In FIG. 20B, B represents a symbol occupied by a physical broadcast channel, P represents a symbol occupied by a primary synchronization signal, and S represents a symbol occupied by a secondary synchronization signal. In addition, a symbol with horizontal lines represents a symbol occupied by a DMRS. Another symbol occupied by the physical broadcast channel may be used to carry other information, for example, broadcast information. It can be learned that the first synchronization signal block includes three symbols occupied by the DMRS, and the DMRS occupies the 1st symbol. Therefore, after the secondary synchronization signal, two symbols occupied by the DMRS are included. The two symbols are at equal intervals.

Further, FIG. 20C is a schematic diagram of a first synchronization signal block. In FIG. 20C, B represents a symbol occupied by a physical broadcast channel, P represents a symbol occupied by a primary synchronization signal, and S represents a symbol occupied by a secondary synchronization signal. In addition, a symbol with horizontal lines represents a symbol occupied by a DMRS. Another symbol occupied by the physical broadcast channel may be used to carry other information, for example, broadcast information. It can be learned that the first synchronization signal block includes three symbols occupied by the DMRS, and the DMRS occupies the 1st symbol. Therefore, after the secondary synchronization signal, two symbols occupied by the DMRS are included. The two symbols are at equal intervals.

Further, FIG. 20D is a schematic diagram of a first synchronization signal block. In FIG. 20D, B represents a symbol occupied by a physical broadcast channel, P represents a symbol occupied by a primary synchronization signal, and S represents a symbol occupied by a secondary synchronization signal. In addition, a symbol with horizontal lines represents a symbol occupied by a DMRS, and a symbol with slashes represents a symbol that cannot be occupied by the primary synchronization signal, the secondary synchronization signal, and the physical broadcast channel. It can be learned that the first synchronization signal block includes three symbols occupied by the DMRS, and the DMRS occupies the 1st symbol. Therefore, after the secondary synchronization signal, two symbols occupied by the DMRS are included. The two symbols are at equal intervals.

For example, for a slot corresponding to a normal CP, the DMRS may be located on the 7th symbol, the 8th symbol, the 11th symbol, and the 12th symbol of the first synchronization signal block. For example, refer to FIG. 17A. Alternatively, for a slot corresponding to a normal CP, the DMRS may be located on the 8th symbol and the 11th symbol of the first synchronization signal block. For example, refer to FIG. 20A.

Alternatively, for a slot corresponding to a normal CP, the DMRS may be located on the 7th symbol and the 12th symbol of the first synchronization signal block. For example, refer to FIG. 21A. In FIG. 21A, B represents a symbol occupied by a physical broadcast channel, P represents a symbol occupied by a primary synchronization signal, and S represents a symbol occupied by a secondary synchronization signal. In addition, a symbol with horizontal lines represents a symbol occupied by a DMRS. It can be learned that, in a first synchronization signal block, the DMRS occupies the 7th symbol and the 12th symbol.

Alternatively, for a slot corresponding to a normal CP, the DMRS may be located on the 7th symbol and the 13th symbol of a first synchronization signal block. For example, refer to FIG. 21B. In FIG. 21B, B represents a symbol occupied by a physical broadcast channel, P represents a symbol occupied by a primary synchronization signal, and S represents a symbol occupied by a secondary synchronization signal. In addition, a symbol with horizontal lines represents a symbol occupied by a DMRS. It can be learned that, in a first synchronization signal block, the DMRS occupies the 7th symbol and the 13th symbol.

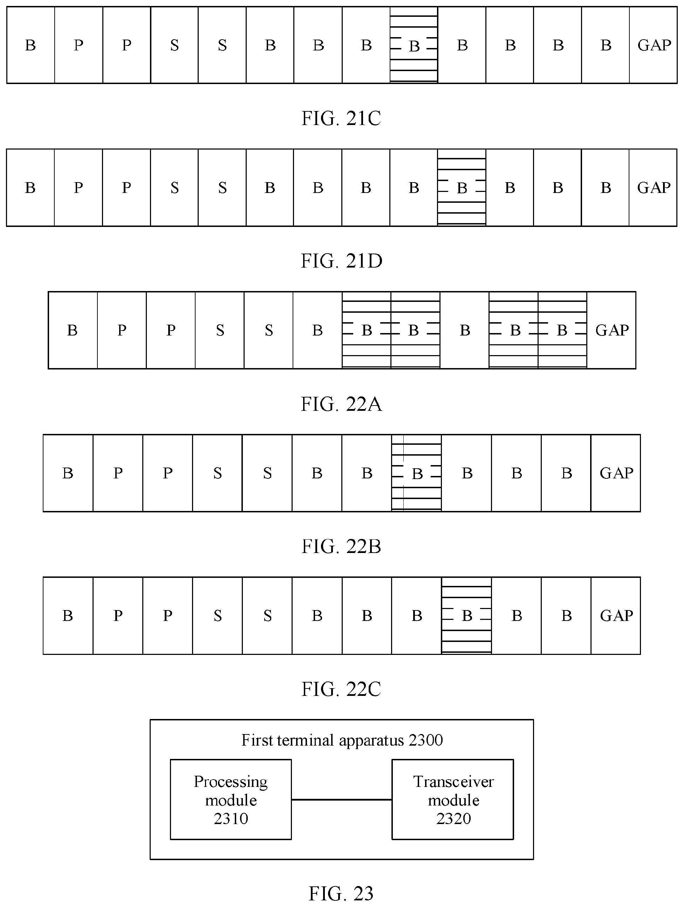

Alternatively, for a slot corresponding to a normal CP, the DMRS may be located on the 9th symbol or the 10th symbol of the first synchronization signal block. For example, refer to FIG. 21C. In FIG. 21C, B represents a symbol occupied by a physical broadcast channel, P represents a symbol occupied by a primary synchronization signal, and S represents a symbol occupied by a secondary synchronization signal. In addition, a symbol with horizontal lines represents a symbol occupied by a DMRS. It can be learned that, in a first synchronization signal block, the DMRS occupies the 9th symbol. Alternatively, refer to FIG. 21D. In FIG. 21D, B represents a symbol occupied by a physical broadcast channel, P represents a symbol occupied by a primary synchronization signal, and S represents a symbol occupied by a secondary synchronization signal. In addition, a symbol with horizontal lines represents a symbol occupied by a DMRS. It can be learned that, in a first synchronization signal block, the DMRS occupies the 10th symbol.

For example, for a slot corresponding to an extended CP, the DMRS may be located on the 7th symbol, the 8th symbol, the 10th symbol, and the 11th symbol of the first synchronization signal block. For example, refer to FIG. 22A. In FIG. 22A, B represents a symbol occupied by a physical broadcast channel, P represents a symbol occupied by a primary synchronization signal, and S represents a symbol occupied by a secondary synchronization signal. In addition, a symbol with horizontal lines represents a symbol occupied by a DMRS. It can be learned that, in a first synchronization signal block, the DMRS occupies the 7th symbol, the 8th symbol, the 10th symbol, and the 11th symbol.

Alternatively, for a slot corresponding to an extended CP, the DMRS may be located on the 7th symbol, the 9th symbol, and the 11th symbol of the first synchronization signal block. For example, refer to FIG. 19D.

Alternatively, for a slot corresponding to an extended CP, the DMRS may be located on the 7th symbol and the 10th symbol of the first synchronization signal block. For example, refer to FIG. 20C.

Alternatively, for a slot corresponding to an extended CP, the DMRS may be located on the 8th symbol or the 9th symbol of the first synchronization signal block. For example, refer to FIG. 22B. In FIG. 22B, B represents a symbol occupied by a physical broadcast channel, P represents a symbol occupied by a primary synchronization signal, and S represents a symbol occupied by a secondary synchronization signal. In addition, a symbol with horizontal lines represents a symbol occupied by a DMRS. It can be learned that, in a first synchronization signal block, the DMRS occupies the 8th symbol. Alternatively, refer to FIG. 22C. In FIG. 22C, B represents a symbol occupied by a physical broadcast channel, P represents a symbol occupied by a primary synchronization signal, and S represents a symbol occupied by a secondary synchronization signal. In addition, a symbol with horizontal lines represents a symbol occupied by a DMRS. It can be learned that, in a first synchronization signal block, the DMRS occupies the $9^{th}$ symbol.

S152: The first terminal apparatus sends the first synchronization signal block to the second terminal apparatus, and the second terminal apparatus receives the first synchronization signal block from the first terminal apparatus.

The first terminal apparatus may send N synchronization signal blocks to the second terminal apparatus, and the first synchronization signal block may be one of the N synchronization signal blocks.

S153: The second terminal apparatus demodulates the physical broadcast channel based on the first synchronization signal block.

For example, the second terminal apparatus may demodulate the physical broadcast channel based on the first synchronization signal block, to obtain the broadcast information carried on the physical broadcast channel, and the like. Certainly, the first synchronization signal may have another function. This is not specifically limited thereto. In addition, S213 is only an optional step, and is not necessarily performed.

In this embodiment of this application, the primary synchronization signal and the secondary synchronization signal may be located at the front part of the slot, so that the primary synchronization signal and the secondary synchronization signal are sent as early as possible, and the second terminal apparatus serving as the receive end may perform the operation such as synchronization based on the primary synchronization signal and the secondary synchronization signal. In addition, the DMRS occupies only the symbols of the physical broadcast channel, and does not occupy the symbols of the primary synchronization signal and the secondary synchronization signal. Therefore, the reliability of the symbols occupied by the primary synchronization signal and the secondary synchronization signal can be ensured, and the DMRS can be normally sent.

The embodiment shown in FIG. 15 may be applied independently. Alternatively, any two of the embodiment shown in FIG. 6, the embodiment shown in FIG. 13, and the embodiment shown in FIG. 15 may be applied in combination. For example, the embodiment shown in FIG. 6 may be applied in combination with the embodiment shown in FIG. 15; or the embodiment shown in FIG. 13 may be applied in combination with the embodiment shown in FIG. 15; or the embodiment shown in FIG. 6, the embodiment shown in FIG. 13, and the embodiment shown in FIG. 15 may be applied in combination. If the embodiment shown in FIG. 15 needs to be applied in combination with any one or two of the foregoing embodiments, the first synchronization signal block in the embodiment shown in FIG. 15 may alternatively be replaced with the $j^{th}$ synchronization signal block.

The following describes, with reference to the accompanying drawings, apparatuses configured to implement the foregoing methods in embodiments of this application. Therefore, all the foregoing content may be used in the following embodiments. Repeated content is not described again.

FIG. 23 is a schematic block diagram of a communication apparatus 2300 according to an embodiment of this application. For example, the communication apparatus 2300 is a first terminal apparatus 2300.

The first terminal apparatus 2300 includes a processing module 2310. Optionally, the first terminal apparatus 2300 may further include a transceiver module 2320. For example, the first terminal apparatus 2300 may be a terminal device, or may be a chip used in the terminal device, or another combined device, another component, or the like that has a function of the terminal device. When the first terminal apparatus 2300 is a terminal device, the transceiver module 2320 may be a transceiver, and may include an antenna, a radio frequency circuit, and the like, and the processing module 2310 may be a processor, for example, a baseband processor. The baseband processor may include one or more central processing units (central processing units, CPUs). When the first terminal apparatus 2300 is a component having a function of the terminal, the transceiver module 2320 may be a radio frequency unit, and the processing module 2310 may be a processor, for example, a baseband processor. When the first terminal apparatus 2300 is a chip system, the transceiver module 2320 may be a communication interface (for example, an input/output interface) of the chip system (for example, a baseband chip), and the processing module may be a processor of the chip system, and may include one or more central processing units.

The processing module 2310 may be configured to perform all operations, except receiving and sending operations, performed by the first terminal apparatus in the embodiment shown in FIG. 6, for example, S601, and/or configured to support another process of the technology described in this specification. The transceiver module 2320 may be configured to perform all receiving and sending operations performed by the first terminal apparatus in the embodiment shown in FIG. 6, for example, S63, and/or configured to support another process of the technology described in this specification.

In addition, the transceiver module 2320 may be a functional module. The functional module can implement both a sending operation and a receiving operation. For example, the transceiver module 2320 may be configured to perform all sending operations and receiving operations performed by the first terminal apparatus in the embodiment shown in FIG. 6. For example, when a sending operation is performed, it may be considered that the transceiver module 2320 is a sending module, and when a receiving operation is performed, it may be considered that the transceiver module 2320 is a receiving module. Alternatively, the transceiver module 2320 may be a collective term of two functional modules. The two functional modules are a sending module and a receiving module. The sending module is configured to implement a sending operation. For example, the sending module may be configured to perform all sending operations performed by the first terminal apparatus in the embodiment shown in FIG. 6. The receiving module is configured to implement a receiving operation. For example, the receiving module may be configured to perform all receiving operations performed by the first terminal apparatus in the embodiment shown in FIG. 6.

For example, the processing module 2310 is configured to determine, in a first resource set, a first resource used to send N synchronization signal blocks, where the first resource set is located in a synchronization signal block period, the first resource set includes M groups, an $i^{th}$ group in the M groups includes X candidate resources, the first resource set includes $M \times X$ candidate resources, each of the $M \times X$ candidate resources may be used to transmit a synchronization signal block, each of the N synchronization signal blocks occupies Y symbols in time domain, M, i, and X are all integers greater than or equal to 1, Y is an integer greater than or equal to 5, the first resource includes N candidate resources, and the N candidate resources belong to one or more groups in the M groups.

The transceiver module 2320 is configured to send a $j^{th}$ synchronization signal block in the N synchronization signal blocks on a $j^{th}$ candidate resource in the N candidate resources, where j is an integer greater than or equal to 1 and less than or equal to N.

In an optional implementation, that the $j^{th}$ synchronization signal block occupies Y symbols in time domain includes:

the Y symbols are all symbols in one slot; or
the Y symbols are all symbols except the last symbol in one slot.

In an optional implementation,

for a normal cyclic prefix, Y=13, or
for an extended cyclic prefix, Y=11.

In an optional implementation, the N synchronization signal blocks are transmitted in a repeated manner, or every H synchronization signal blocks in the N synchronization signal blocks are transmitted in a repeated manner, where H is a positive integer less than or equal to N.

In an optional implementation,

when a frequency of a carrier on which the first resource set is located is a low frequency, duration of a time domain resource occupied by a synchronization signal block carried by the first resource set is less than or equal to 2 milliseconds; or
when a frequency of a carrier on which the first resource set is located is a high frequency, duration of a time domain resource occupied by a synchronization signal block carried by the first resource set is less than or equal to 8 milliseconds.

In an optional implementation, duration occupied in time domain by a synchronization signal block carried by the $i^{th}$ group is 1 ms.

In an optional implementation,

the processing module 2310 is further configured to determine a time domain location of the first resource set in the synchronization signal block period based on preconfigured information; or
the transceiver module 2320 is further configured to receive first signaling from a network device, where the first signaling is used to indicate a time domain location of the first resource set in the synchronization signal block period.

In an optional implementation, when the frequency of the carrier on which the first resource set is located is a low frequency, the number of groups to which the N candidate resources belong is less than or equal to 2, where the groups to which the N candidate resources belong are located in a same radio frame, or are respectively located in different half-frames of a same radio frame.

In an optional implementation, the $i^{th}$ group includes K subgroups, the X candidate resources belong to the K subgroups, one subgroup in the K subgroups includes R candidate resources, the R candidate resources may be used to transmit R synchronization signal blocks, and the R synchronization signal blocks are repeatedly transmitted.

In an optional implementation, the first resource set includes a first part and a second part, the first part includes the first M/2 groups in time domain in the M groups, and the second part includes the last M/2 groups in time domain in the M groups.

It should be understood that the processing module 2310 in this embodiment of this application may be implemented by using a processor or a processor-related circuit component, and the transceiver module 2320 may be implemented by using a transceiver or a transceiver-related circuit component.

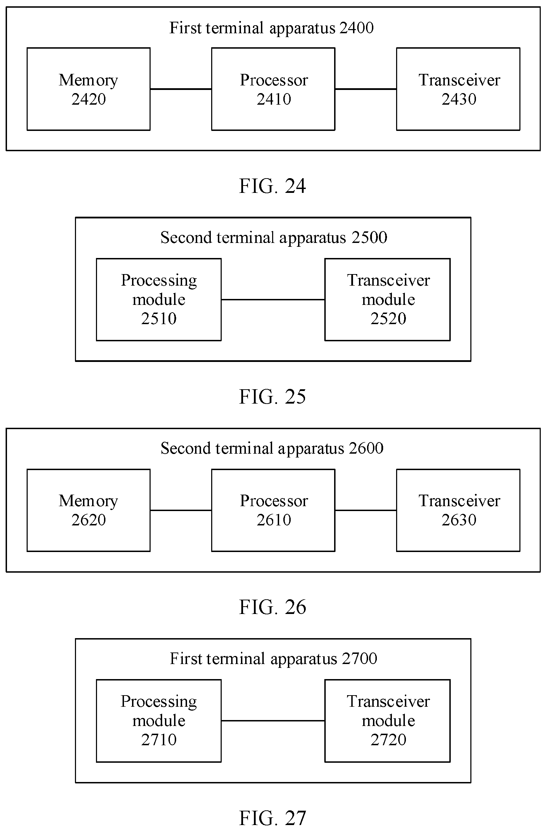

As shown in FIG. 24, an embodiment of this application further provides a communication apparatus 2400. For example, the communication apparatus 2400 is a first terminal apparatus 2400. For example, the first terminal apparatus 2400 may be a communication device, for example, a terminal device, or may be a chip system. The first terminal apparatus 2400 includes a processor 2410, a transceiver 2430, and a memory 2420. The memory 2420 stores instructions or a program, and the processor 2410 is configured to execute the instructions or the program stored in the memory 2420. When the instructions or the program stored in the memory 2420 is executed, the processor 2410 is configured to perform an operation performed by the processing module 2310 in the foregoing embodiment, and the transceiver 2430 is configured to perform an operation performed by the transceiver module 2320 in the foregoing embodiment. Alternatively, the first terminal apparatus 2400 may not include the memory 2420. For example, the memory is located outside the first terminal apparatus 2400. When the computer instructions or the program stored in the external memory is executed, the processor 2410 is configured to perform an operation performed by the processing module 2310 in the foregoing embodiment, and the transceiver 2430 is configured to perform an operation performed by the transceiver module 2320 in the foregoing embodiment.

The transceiver 2430 may be a functional unit, and the functional unit can complete both a sending operation and a receiving operation. For example, the transceiver 2430 may be configured to perform all sending operations and receiving operations performed by the first terminal apparatus in the embodiment shown in FIG. 6. For example, when a sending operation is performed, the transceiver 2430 may be considered as a transmitter, and when a receiving operation is performed, the transceiver 2430 may be considered as a receiver. Alternatively, the transceiver 2430 may be a collective term of two functional units, and the two functional units are respectively a transmitter and a receiver. The transmitter is configured to complete a sending operation. For example, the transmitter may be configured to perform all sending operations performed by the first terminal apparatus in the embodiment shown in FIG. 6. The receiver is configured to complete a receiving operation. For example, the receiver may be configured to perform all receiving operations performed by the first terminal apparatus in the embodiment shown in FIG. 6.

In addition, if the communication apparatus 2400 is the chip system, the transceiver 2430 may also be implemented by using a communication interface of the chip system. The communication interface is connected to a radio frequency transceiver component in the communication device, to implement information receiving and sending by using the radio frequency transceiver component. The communication interface may be a functional unit. The functional unit can implement both a sending operation and a receiving operation. For example, the communication interface may be configured to perform all sending operations and receiving operations performed by the first terminal apparatus in the embodiment shown in FIG. 6. For example, when a sending operation is performed, it may be considered that the communication interface is a sending interface, and when a receiving operation is performed, it may be considered that the communication interface is a receiving interface. Alternatively, the communication interface may be a general term of two functional units. The two functional units are respectively a sending interface and a receiving interface. The sending interface is configured to implement a sending operation. For example, the sending interface may be configured to perform all sending operations performed by the first terminal apparatus in the embodiment shown in FIG. 6. The receiving interface is configured to implement a receiving operation. For example, the receiving interface may be configured to perform all receiving operations performed by the first terminal apparatus in the embodiment shown in FIG. 6.

It should be understood that the first terminal apparatus 2300 or the first terminal apparatus 2400 according to embodiments of this application can implement a function of the first terminal apparatus in the embodiment shown in FIG. 3, and operations and/or functions of the modules in the first terminal apparatus 2300 or the first terminal apparatus 2400 are respectively intended to implement corresponding procedures in the embodiment shown in FIG. 6. For brevity, details are not described herein again.

FIG. 25 is a schematic block diagram of a communication apparatus 2500 according to an embodiment of this application. For example, the communication apparatus 2500 is a second terminal apparatus 2500.

The second terminal apparatus 2500 includes a processing module 2510. Optionally, the second terminal apparatus 2500 may further include a transceiver module 2520. For example, the second terminal apparatus 2500 may be a terminal device, or may be a chip used in the terminal device, or another combined device, another component, or the like that has a function of the terminal device. When the second terminal apparatus 2500 is a terminal device, the transceiver module 2520 may be a transceiver, and may include an antenna, a radio frequency circuit, and the like, and the processing module 2510 may be a processor, for example, a baseband processor. The baseband processor may include one or more central processing units (central processing units, CPUs). When the second terminal apparatus 2500 is a component having a function of the terminal, the transceiver module 2520 may be a radio frequency unit, and the processing module 2510 may be a processor, for example, a baseband processor. When the second terminal apparatus 2500 is a chip system, the transceiver module 2520 may be a communication interface (an input/output interface) of the chip system (for example, a baseband chip), and the processing module may be a processor of the chip system, and may include one or more central processing units.

The processing module 2510 may be configured to perform all operations, except receiving and sending operations, performed by the second terminal apparatus in the embodiment shown in FIG. 6, for example, S62, and/or configured to support another process of the technology described in this specification. The transceiver module 2520 may be configured to perform all receiving and sending operations performed by the second terminal apparatus in the embodiment shown in FIG. 6, for example, S63, and/or configured to support another process of the technology described in this specification.

In addition, the transceiver module 2520 may be a functional module. The functional module can implement both a sending operation and a receiving operation. For example, the transceiver module 2520 may be configured to perform all sending operations and receiving operations performed by the second terminal apparatus in the embodiment shown in FIG. 6. For example, when a sending operation is performed, it may be considered that the transceiver module 2520 is a sending module, and when a receiving operation is performed, it may be considered that the transceiver module 2520 is a receiving module. Alternatively, the transceiver module 2520 may be a collective term of two functional modules. The two functional modules are a sending module and a receiving module. The sending module is configured to implement a sending operation. For example, the sending module may be configured to perform all sending operations performed by the second terminal apparatus in the embodiment shown in FIG. 6. The receiving module is configured to implement a receiving operation. For example, the receiving module may be configured to perform all receiving operations performed by the second terminal apparatus in the embodiment shown in FIG. 6.

For example, the processing module 2510 is configured to determine, in a first resource set, a first resource used to transmit N synchronization signal blocks, where the first resource set is located in a synchronization signal block period, the first resource set includes M groups, an $i^{th}$ group in the M groups includes X candidate resources, the first resource set includes $M \times X$ candidate resources, each of the $M \times X$ candidate resources may be used to transmit a synchronization signal block, each of the N synchronization signal blocks occupies Y symbols in time domain, M, i, and X are all integers greater than or equal to 1, Y is an integer greater than or equal to 5, the first resource includes N candidate resources, and the N candidate resources belong to one or more groups in the M groups.

The transceiver module 2520 is configured to receive a $j^{th}$ synchronization signal block in the N synchronization signal blocks on a $j^{th}$ candidate resource in the N candidate resources, where j is an integer greater than or equal to 1 and less than or equal to N.

In an optional implementation, the processing module 2510 is further configured to: after the transceiver module 2520 receives the $j^{th}$ synchronization signal block, obtain information about timing and/or information about a frequency of the $j^{th}$ synchronization signal block based on the $j^{th}$ synchronization signal block.

In an optional implementation, that the $j^{th}$ synchronization signal block occupies Y symbols in time domain includes:

the Y symbols are all symbols in one slot; or
the Y symbols are all symbols except the last symbol in one slot.

In an optional implementation,

for a normal cyclic prefix, Y=13, or
for an extended cyclic prefix, Y=11.

In an optional implementation, the N synchronization signal blocks are transmitted in a repeated manner, or every H synchronization signal blocks in the N synchronization signal blocks are transmitted in a repeated manner, where H is a positive integer less than or equal to N.

In an optional implementation,

when a frequency of a carrier on which the first resource set is located is a low frequency, duration of a time domain resource occupied by a synchronization signal block carried by the first resource set is less than or equal to 2 milliseconds; or
when a frequency of a carrier on which the first resource set is located is a high frequency, duration of a time domain resource occupied by a synchronization signal block carried by the first resource set is less than or equal to 8 milliseconds.

In an optional implementation, duration occupied in time domain by a synchronization signal block carried by the $i^{th}$ group is 1 ms.

In an optional implementation,
when the frequency of the carrier on which the first resource set is located is a low frequency, the number of groups to which the N candidate resources belong is less than or equal to 2, where the groups to which the N candidate resources belong are located in a same radio frame, or are respectively located in different half-frames of a same radio frame.

In an optional implementation, the $i^{th}$ group includes K subgroups, the X candidate resources belong to the K subgroups, one subgroup in the K subgroups includes R candidate resources, the R candidate resources may be used to transmit R synchronization signal blocks, and the R synchronization signal blocks are repeatedly transmitted.

In an optional implementation, the first resource set includes a first part and a second part, the first part includes the first M/2 groups in time domain in the M groups, and the second part includes the last M/2 groups in time domain in the M groups.

It should be understood that the processing module 2510 in this embodiment of this application may be implemented by using a processor or a processor-related circuit component, and the transceiver module 2520 may be implemented by using a transceiver or a transceiver-related circuit component.

As shown in FIG. 26, an embodiment of this application further provides a communication apparatus 2600. For example, the communication apparatus 2600 is a second terminal apparatus 2600. For example, the second terminal apparatus 2600 may be a communication device, for example, a terminal device, or may be a chip system. The second terminal apparatus 2600 includes a processor 2610. Optionally, the second terminal apparatus 2600 may further include a memory 2620. Optionally, the second terminal apparatus 2600 may further include a transceiver 2630. The memory 2620 stores computer instructions or a program, and the processor 2610 may execute the computer instructions or the program stored in the memory 2620. When the computer instructions or the program stored in the memory 2620 is executed, the processor 2610 is configured to perform an operation performed by the processing module 2510 in the foregoing embodiment, and the transceiver 2630 is configured to perform an operation performed by the transceiver module 2520 in the foregoing embodiment. Alternatively, the second terminal apparatus 2600 may not include the memory 2620. For example, the memory is located outside the second terminal apparatus 2600. When the computer instructions or the program stored in the external memory is executed, the processor 2610 is configured to perform an operation performed by the processing module 2510 in the foregoing embodiment, and the transceiver 2630 is configured to perform an operation performed by the transceiver module 2520 in the foregoing embodiment.

The transceiver 2630 may be a functional unit, and the functional unit can complete both a sending operation and a receiving operation. For example, the transceiver 2630 may be configured to perform all sending operations and receiving operations performed by the second terminal apparatus in the embodiment shown in FIG. 6. For example, when a sending operation is performed, the transceiver 2630 may be considered as a transmitter, and when a receiving operation is performed, the transceiver 2630 may be considered as a receiver. Alternatively, the transceiver 2630 may be a collective term of two functional units, and the two functional units are respectively a transmitter and a receiver. The transmitter is configured to complete a sending operation. For example, the transmitter may be configured to perform all sending operations performed by the second terminal apparatus in the embodiment shown in FIG. 6. The receiver is configured to complete a receiving operation. For example, the receiver may be configured to perform all receiving operations performed by the second terminal apparatus in the embodiment shown in FIG. 6.

In addition, if the communication apparatus 2600 is the chip system, the transceiver 2630 may also be implemented by using a communication interface of the chip system. The communication interface is connected to a radio frequency transceiver component in the communication device, to implement information receiving and sending by using the radio frequency transceiver component. The communication interface may be a functional unit. The functional unit can implement both a sending operation and a receiving operation. For example, the communication interface may be configured to perform all sending operations and receiving operations performed by the second terminal apparatus in the embodiment shown in FIG. 6. For example, when a sending operation is performed, it may be considered that the communication interface is a sending interface, and when a receiving operation is performed, it may be considered that the communication interface is a receiving interface. Alternatively, the communication interface may be a general term of two functional units. The two functional units are respectively a sending interface and a receiving interface. The sending interface is configured to implement a sending operation. For example, the sending interface may be configured to perform all sending operations performed by the second terminal apparatus in the embodiment shown in FIG. 6. The receiving interface is configured to implement a receiving operation. For example, the receiving interface may be configured to perform all receiving operations performed by the second terminal apparatus in the embodiment shown in FIG. 6.

It should be understood that the second terminal apparatus 2500 or the second terminal apparatus 2600 according to embodiments of this application can implement a function of the second terminal apparatus in the embodiment shown in FIG. 6, and operations and/or functions of the modules in the second terminal apparatus 2500 or the second terminal apparatus 2600 are respectively intended to implement corresponding procedures in the embodiment shown in FIG. 6. For brevity, details are not described herein again.

FIG. 27 is a schematic block diagram of a communication apparatus 2700 according to an embodiment of this application. For example, the communication apparatus 2700 is a first terminal apparatus 2700.

The first terminal apparatus 2700 includes a processing module 2710. Optionally, the first terminal apparatus 2700 may further include a transceiver module 2720. For example, the first terminal apparatus 2700 may be a terminal device, or may be a chip used in the terminal device, or another combined device, another component, or the like that has a function of the terminal device. When the first terminal apparatus 2700 is a terminal device, the transceiver module 2720 may be a transceiver, and may include an antenna, a radio frequency circuit, and the like, and the processing module 2710 may be a processor, for example, a baseband processor. The baseband processor may include one or more CPUs. When the first terminal apparatus 2700 is a component having a function of the terminal, the transceiver module 2720 may be a radio frequency unit, and the processing module 2710 may be a processor, for example, a baseband processor. When the first terminal apparatus 2700 is a chip system, the transceiver module 2720 may be a communication interface (for example, an input/output interface) of the chip system (for example, a baseband chip), and the processing module may be a processor of the chip system, and may include one or more central processing units.

The processing module 2710 may be configured to perform all operations, except receiving and sending operations, performed by the first terminal apparatus in the embodiment shown in FIG. 13, for example, S131, and/or configured to support another process of the technology described in this specification. The transceiver module 2720 may be configured to perform all receiving and sending operations performed by the first terminal apparatus in the embodiment shown in FIG. 13, for example, S132, and/or configured to support another process of the technology described in this specification.

In addition, the transceiver module 2720 may be a functional module. The functional module can implement both a sending operation and a receiving operation. For example, the transceiver module 2720 may be configured to perform all sending operations and receiving operations performed by the first terminal apparatus in the embodiment shown in FIG. 13. For example, when a sending operation is performed, it may be considered that the transceiver module 2720 is a sending module, and when a receiving operation is performed, it may be considered that the transceiver module 2720 is a receiving module. Alternatively, the transceiver module 2720 may be a collective term of two functional modules. The two functional modules are a sending module and a receiving module. The sending module is configured to implement a sending operation. For example, the sending module may be configured to perform all sending operations performed by the first terminal apparatus in the embodiment shown in FIG. 13. The receiving module is configured to implement a receiving operation. For example, the receiving module may be configured to perform all receiving operations performed by the first terminal apparatus in the embodiment shown in FIG. 13.

For example, the processing module 2710 is configured to determine, in a first resource set, a first resource used to send N synchronization signal blocks, where the first resource set is located in a synchronization signal block period, the first resource set includes M groups, an $i^{th}$ group in the M groups includes X candidate resources, the first resource set includes M×X candidate resources, each of the M×X candidate resources may be used to transmit a synchronization signal block, each of the N synchronization signal blocks occupies Y symbols in time domain, M, i, and X are all integers greater than or equal to 1, Y is an integer greater than or equal to 5, the first resource includes N candidate resources, and the N candidate resources belong to one or more groups in the M groups.

The transceiver module 2720 is configured to send a $j^{th}$ synchronization signal block in the N synchronization signal blocks on a $j^{th}$ candidate resource in the N candidate resources, where the $j^{th}$ synchronization signal block indicates a time domain location of the $j^{th}$ synchronization signal block.

In an optional implementation, the time domain location of the $j^{th}$ synchronization signal block includes an identifier of a group in which the $j^{th}$ synchronization signal block is located, and/or an identifier of the $j^{th}$ synchronization signal block in a group in which the $j^{th}$ synchronization signal block is located.

In an optional implementation, that the $j^{th}$ synchronization signal block indicates a time domain location of the $j^{th}$ synchronization signal block includes:

signaling carried on a broadcast channel included in the $j^{th}$ synchronization signal block indicates the time domain location of the $j^{th}$ synchronization signal block; or
a demodulation reference signal carried on a broadcast channel included in the $j^{th}$ synchronization signal block indicates the time domain location of the $j^{th}$ synchronization signal block; or
a reference signal used to scramble signaling carried on a broadcast channel included in the $j^{th}$ synchronization signal block indicates the time domain location of the $j^{th}$ synchronization signal block.

In an optional implementation, that a demodulation reference signal carried on a broadcast channel included in the $j^{th}$ synchronization signal block indicates the time domain location of the $j^{th}$ synchronization signal block includes:
an initial value or an initial location of the demodulation reference signal sequence indicates the time domain location of the $j^{th}$ synchronization signal block.

In an optional implementation, that a reference signal used to scramble signaling carried on a broadcast channel included in the $j^{th}$ synchronization signal block indicates the time domain location of the $j^{th}$ synchronization signal block includes:
an initial value or an initial location of the reference signal sequence used to scramble the signaling carried on the broadcast channel included in the $j^{th}$ synchronization signal block indicates the time domain location of the $j^{th}$ synchronization signal block.

In an optional implementation, the initial value of the sequence is determined by using one or more of the following parameters:

the identifier of the group in which the $j^{th}$ synchronization signal block is located;
the identifier of the $j^{th}$ synchronization signal block in the group in which the $j^{th}$ synchronization signal block is located;
an identifier of a synchronization signal source;
an identifier of a slot in which the $j^{th}$ synchronization signal block is located; or
a CP type corresponding to a slot in which the $j^{th}$ synchronization signal block is located.

It should be understood that the processing module 2710 in this embodiment of this application may be implemented by using a processor or a processor-related circuit component, and the transceiver module 2720 may be implemented by using a transceiver or a transceiver-related circuit component.

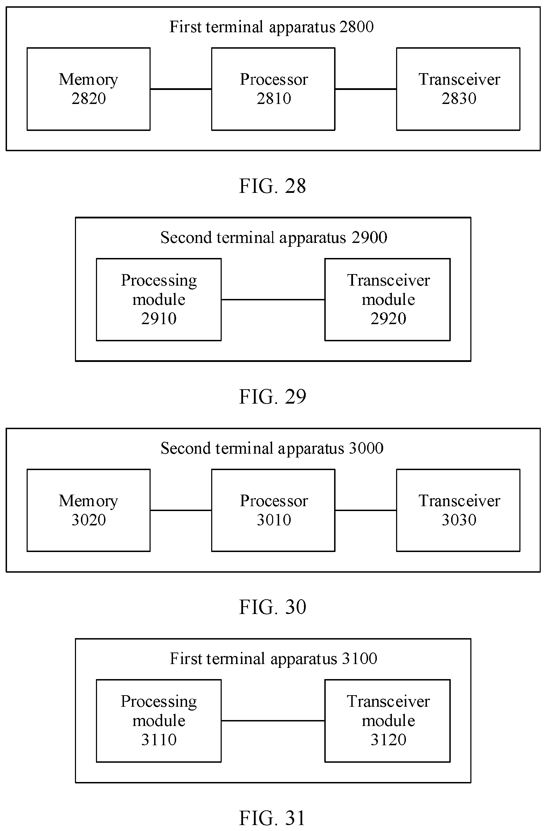

As shown in FIG. 28, an embodiment of this application further provides a communication apparatus 2800. For example, the communication apparatus 2800 is a first terminal apparatus 2800. For example, the first terminal apparatus 2800 may be a communication device, for example, a terminal device, or may be a chip system. The first terminal apparatus 2800 includes a processor 2810. Optionally, the first terminal apparatus 2800 may further include a memory 2820. Optionally, the first terminal apparatus 2800 may further include a transceiver 2830. The memory 2820 stores computer instructions or a program, and the processor 2810 may execute the computer instructions or the program stored in the memory 2820. When the computer instructions or the program stored in the memory 2820 is executed, the processor 2810 is configured to perform an operation performed by the processing module 2710 in the foregoing embodiment, and the transceiver 2830 is configured to perform an operation performed by the transceiver module 2720 in the foregoing embodiment. Alternatively, the first terminal apparatus 2800 may not include the memory 2820. For example, the memory is located outside the first terminal apparatus 2800. When the computer instructions or the program stored in the external memory is executed, the processor 2810 is configured to perform an operation performed by the processing module 2710 in the foregoing embodiment, and the transceiver 2830 is configured to perform an operation performed by the transceiver module 2720 in the foregoing embodiment.

The transceiver 2830 may be a functional unit, and the functional unit can complete both a sending operation and a receiving operation. For example, the transceiver 2830 may be configured to perform all sending operations and receiving operations performed by the first terminal apparatus in the embodiment shown in FIG. 13. For example, when a sending operation is performed, the transceiver 2830 may be considered as a transmitter, and when a receiving operation is performed, the transceiver 2830 may be considered as a receiver. Alternatively, the transceiver 2830 may be a collective term of two functional units, and the two functional units are respectively a transmitter and a receiver. The transmitter is configured to complete a sending operation. For example, the transmitter may be configured to perform all sending operations performed by the first terminal apparatus in the embodiment shown in FIG. 13. The receiver is configured to complete a receiving operation. For example, the receiver may be configured to perform all receiving operations performed by the first terminal apparatus in the embodiment shown in FIG. 13.

In addition, if the communication apparatus 2800 is the chip system, the transceiver 2830 may also be implemented by using a communication interface of the chip system. The communication interface is connected to a radio frequency transceiver component in the communication device, to implement information receiving and sending by using the radio frequency transceiver component. The communication interface may be a functional unit. The functional unit can implement both a sending operation and a receiving operation. For example, the communication interface may be configured to perform all sending operations and receiving operations performed by the first terminal apparatus in the embodiment shown in FIG. 13. For example, when a sending operation is performed, it may be considered that the communication interface is a sending interface, and when a receiving operation is performed, it may be considered that the communication interface is a receiving interface. Alternatively, the communication interface may be a general term of two functional units. The two functional units are respectively a sending interface and a receiving interface. The sending interface is configured to implement a sending operation. For example, the sending interface may be configured to perform all sending operations performed by the first terminal apparatus in the embodiment shown in FIG. 13. The receiving interface is configured to implement a receiving operation. For example, the receiving interface may be configured to perform all receiving operations performed by the first terminal apparatus in the embodiment shown in FIG. 13.

It should be understood that the first terminal apparatus 2700 or the first terminal apparatus 2800 according to embodiments of this application can implement a function of the first terminal apparatus in the embodiment shown in FIG. 13, and operations and/or functions of the modules in the first terminal apparatus 2700 or the first terminal apparatus 2800 are respectively intended to implement corresponding procedures in the embodiment shown in FIG. 13. For brevity, details are not described herein again.

FIG. 29 is a schematic block diagram of a communication apparatus 2900 according to an embodiment of this application. For example, the communication apparatus 2900 is a second terminal apparatus 2900.

The second terminal apparatus 2900 includes a processing module 2910. Optionally, the second terminal apparatus 2900 may further include a transceiver module 2920. For example, the second terminal apparatus 2900 may be a terminal device, or may be a chip used in the terminal device, or another combined device, another component, or the like that has a function of the terminal device. When the second terminal apparatus 2900 is a terminal device, the transceiver module 2920 may be a transceiver, and may include an antenna, a radio frequency circuit, and the like, and the processing module 2910 may be a processor, for example, a baseband processor. The baseband processor may include one or more CPUs. When the second terminal apparatus 2900 is a component having a function of the terminal, the transceiver module 2920 may be a radio frequency unit, and the processing module 2910 may be a processor, for example, a baseband processor. When the second terminal apparatus 2900 is a chip system, the transceiver module 2920 may be a communication interface (an input/output interface) of the chip system (for example, a baseband chip), and the processing module may be a processor of the chip system, and may include one or more central processing units.

The processing module 2910 may be configured to perform all operations, except receiving and sending operations, performed by the second terminal apparatus in the embodiment shown in FIG. 13, for example, S133, and/or configured to support another process of the technology described in this specification. The transceiver module 2920 may be configured to perform all receiving and sending operations performed by the second terminal apparatus in the embodiment shown in FIG. 13, for example, S132, and/or configured to support another process of the technology described in this specification.

In addition, the transceiver module 2920 may be a functional module. The functional module can implement both a sending operation and a receiving operation. For example, the transceiver module 2920 may be configured to perform all sending operations and receiving operations performed by the second terminal apparatus in the embodiment shown in FIG. 13. For example, when a sending operation is performed, it may be considered that the transceiver module 2920 is a sending module, and when a receiving operation is performed, it may be considered that the transceiver module 2920 is a receiving module. Alternatively, the transceiver module 2920 may be a collective term of two functional modules. The two functional modules are a sending module and a receiving module. The sending module is configured to implement a sending operation. For example, the sending module may be configured to perform all sending operations performed by the second terminal apparatus in the embodiment shown in FIG. 13. The receiving module is configured to implement a receiving operation. For example, the receiving module may be configured to perform all receiving operations performed by the second terminal apparatus in the embodiment shown in FIG. 13.

For example, the processing module 2910 is configured to receive a $j^{th}$ synchronization signal block in N synchronization signal blocks on a $j^{th}$ candidate resource in N candidate resources, where the N candidate resources belong to a first resource set, the first resource set is located in a synchronization signal block period, the first resource set includes M groups, an $i^{th}$ group in the M groups includes X candidate resources, the first resource set includes M×X candidate resources, each of the M×X candidate resources may be used to transmit a synchronization signal block, each of the N synchronization signal blocks occupies Y symbols in time domain, M, i, and X are all integers greater than or equal to 1, Y is an integer greater than or equal to 5, and the N candidate resources belong to one or more groups in the M groups; and

the transceiver module 2920 is configured to determine a time domain location of the $j^{th}$ synchronization signal block based on the $j^{th}$ synchronization signal block.

In an optional implementation, the time domain location of the $j^{th}$ synchronization signal block includes an identifier of a group in which the $j^{th}$ synchronization signal block is located, and/or an identifier of the $j^{th}$ synchronization signal block in a group in which the $j^{th}$ synchronization signal block is located.

In an optional implementation, the processing module 2910 is configured to determine a time domain location of the $j^{th}$ synchronization signal block based on the $j^{th}$ synchronization signal block in the following manner:

determining the time domain location of the $j^{th}$ synchronization signal block based on signaling carried on a broadcast channel included in the $j^{th}$ synchronization signal block; or

determining the time domain location of the $j^{th}$ synchronization signal block based on a demodulation reference signal carried on a broadcast channel included in the $j^{th}$ synchronization signal block; or

determining the time domain location of the $j^{th}$ synchronization signal block based on a reference signal used to scramble signaling carried on a broadcast channel included in the $j^{th}$ synchronization signal block.

In an optional implementation, the processing module 2910 is configured to determine, in the following manner, the time domain location of the $j^{th}$ synchronization signal block based on a demodulation reference signal carried on a broadcast channel included in the $j^{th}$ synchronization signal block:

determining the time domain location of the $j^{th}$ synchronization signal block based on an initial value or an initial location of the demodulation reference signal sequence.

In an optional implementation, the processing module 2910 is configured to determine, in the following manner, the time domain location of the $j^{th}$ synchronization signal block based on a reference signal used to scramble signaling carried on a broadcast channel included in the $j^{th}$ synchronization signal block:

determining the time domain location of the $j^{th}$ synchronization signal block based on an initial value or an initial location of the reference signal sequence used to scramble the signaling carried on the broadcast channel included in the $j^{th}$ synchronization signal block.

In an optional implementation, the initial value of the sequence is determined by using one or more of the following parameters:

the identifier of the group in which the $j^{th}$ synchronization signal block is located;

the identifier of the $j^{th}$ synchronization signal block in the group in which the $j^{th}$ synchronization signal block is located;

an identifier of a synchronization signal source;

an identifier of a slot in which the $j^{th}$ synchronization signal block is located; or

a CP type corresponding to a slot in which the $j^{th}$ synchronization signal block is located.

It should be understood that the processing module 2910 in this embodiment of this application may be implemented by using a processor or a processor-related circuit component, and the transceiver module 2920 may be implemented by using a transceiver or a transceiver-related circuit component.

As shown in FIG. 30, an embodiment of this application further provides a communication apparatus 3000. For example, the communication apparatus 3000 is a second terminal apparatus 3000. For example, the second terminal apparatus 3000 may be a communication device, for example, a terminal device, or may be a chip system. The second terminal apparatus 3000 includes a processor 3010. Optionally, the second terminal apparatus 3000 may further include a memory 3020. Optionally, the second terminal apparatus 3000 may further include a transceiver 3030. The memory 3020 stores computer instructions or a program, and the processor 3010 may execute the computer instructions or the program stored in the memory 3020. When the computer instructions or the program stored in the memory 3020 is executed, the processor 3010 is configured to perform an operation performed by the processing module 2910 in the foregoing embodiment, and the transceiver 3030 is configured to perform an operation performed by the transceiver module 2920 in the foregoing embodiment. Alternatively, the second terminal apparatus 3000 may not include the memory 3020. For example, the memory is located outside the second terminal apparatus 3000. When the computer instructions or the program stored in the external memory is executed, the processor 3010 is configured to perform an operation performed by the processing module 2910 in the foregoing embodiment, and the transceiver 3030 is configured to perform an operation performed by the transceiver module 2920 in the foregoing embodiment.

The transceiver 3030 may be a functional unit, and the functional unit can complete both a sending operation and a receiving operation. For example, the transceiver 3030 may be configured to perform all sending operations and receiving operations performed by the second terminal apparatus in the embodiment shown in FIG. 13. For example, when a sending operation is performed, the transceiver 3030 may be considered as a transmitter, and when a receiving operation is performed, the transceiver 3030 may be considered as a receiver. Alternatively, the transceiver 3030 may be a collective term of two functional units, and the two functional units are respectively a transmitter and a receiver. The transmitter is configured to complete a sending operation. For example, the transmitter may be configured to perform all sending operations performed by the second terminal apparatus in the embodiment shown in FIG. 13. The receiver is configured to complete a receiving operation. For example, the receiver may be configured to perform all receiving operations performed by the second terminal apparatus in the embodiment shown in FIG. 13.

In addition, if the communication apparatus 3000 is the chip system, the transceiver 3030 may also be implemented by using a communication interface of the chip system. The communication interface is connected to a radio frequency transceiver component in the communication device, to implement information receiving and sending by using the radio frequency transceiver component. The communication interface may be a functional unit. The functional unit can implement both a sending operation and a receiving operation. For example, the communication interface may be configured to perform all sending operations and receiving operations performed by the second terminal apparatus in the embodiment shown in FIG. 13. For example, when a sending operation is performed, it may be considered that the communication interface is a sending interface, and when a receiving operation is performed, it may be considered that the communication interface is a receiving interface. Alternatively, the communication interface may be a general term of two functional units. The two functional units are respectively a sending interface and a receiving interface. The sending interface is configured to implement a sending operation. For example, the sending interface may be configured to perform all sending operations performed by the second terminal apparatus in the embodiment shown in FIG. 13. The receiving interface is configured to implement a receiving operation. For example, the receiving interface may be configured to perform all receiving operations performed by the second terminal apparatus in the embodiment shown in FIG. 13.

It should be understood that the second terminal apparatus 2900 or the second terminal apparatus 3000 according to embodiments of this application can implement a function of the second terminal apparatus in the embodiment shown in FIG. 13, and operations and/or functions of the modules in the second terminal apparatus 2900 or the second terminal apparatus 3000 are respectively intended to implement corresponding procedures in the embodiment shown in FIG. 13. For brevity, details are not described herein again.

FIG. 31 is a schematic block diagram of a communication apparatus 3100 according to an embodiment of this application. For example, the communication apparatus 3100 is a first terminal apparatus 3100.

The first terminal apparatus 3100 includes a processing module 3110. Optionally, the first terminal apparatus 3100 may further include a transceiver module 3120. For example, the first terminal apparatus 3100 may be a terminal device, or may be a chip used in the terminal device, or another combined device, another component, or the like that has a function of the terminal device. When the first terminal apparatus 3100 is a terminal device, the transceiver module 3120 may be a transceiver, and may include an antenna, a radio frequency circuit, and the like, and the processing module 3110 may be a processor, for example, a baseband processor. The baseband processor may include one or more central processing units (central processing units, CPUs).

When the first terminal apparatus 3100 is a component having a function of the terminal, the transceiver module 3120 may be a radio frequency unit, and the processing module 3110 may be a processor, for example, a baseband processor. When the first terminal apparatus 3100 is a chip system, the transceiver module 3120 may be a communication interface (for example, an input/output interface) of the chip system (for example, a baseband chip), and the processing module may be a processor of the chip system, and may include one or more central processing units.

The processing module 3110 may be configured to perform all operations, except receiving and sending operations, performed by the first terminal apparatus in the embodiment shown in FIG. 15, for example, S151, and/or configured to support another process of the technology described in this specification. The transceiver module 3120 may be configured to perform all receiving and sending operations performed by the first terminal apparatus in the embodiment shown in FIG. 15, for example, S152, and/or configured to support another process of the technology described in this specification.

In addition, the transceiver module 3120 may be a functional module. The functional module can implement both a sending operation and a receiving operation. For example, the transceiver module 3120 may be configured to perform all sending operations and receiving operations performed by the first terminal apparatus in the embodiment shown in FIG. 15. For example, when a sending operation is performed, it may be considered that the transceiver module 3120 is a sending module, and when a receiving operation is performed, it may be considered that the transceiver module 3120 is a receiving module. Alternatively, the transceiver module 3120 may be a collective term of two functional modules. The two functional modules are a sending module and a receiving module. The sending module is configured to implement a sending operation. For example, the sending module may be configured to perform all sending operations performed by the first terminal apparatus in the embodiment shown in FIG. 15. The receiving module is configured to implement a receiving operation. For example, the receiving module may be configured to perform all receiving operations performed by the first terminal apparatus in the embodiment shown in FIG. 15.

For example, the processing module 3110 is configured to determine a first synchronization signal block, where the first synchronization signal block includes a primary synchronization signal, a secondary synchronization signal, and a physical broadcast channel, the physical broadcast channel includes a demodulation reference signal, the first synchronization signal block occupies Y symbols in time domain, Y is an integer greater than or equal to 6, the primary synchronization signal occupies the $2^{nd}$ symbol and the $3^{rd}$ symbol in the Y symbols, the secondary synchronization signal occupies the $4^{th}$ symbol and the $5^{th}$ symbol or the $5^{th}$ symbol and the $6^{th}$ symbol in the Y symbols, and the physical broadcast channel occupies symbols, in the Y symbols, other than the symbols occupied by the primary synchronization signal and the secondary synchronization signal; and the transceiver module 3120 is configured to send the first synchronization signal block.

In an optional implementation, that the first synchronization signal block occupies Y symbols in time domain includes:

the Y symbols are all symbols in one slot; or
the Y symbols are all symbols except the last symbol in one slot.

In an optional implementation,

for a normal cyclic prefix, Y=13, or
for an extended cyclic prefix, Y=11.

In an optional implementation, the demodulation reference signal occupies all or some symbols, in the Y symbols, other than the symbols occupied by the primary synchronization signal and the secondary synchronization signal.

In an optional implementation, in a physical resource block corresponding to the symbols of the physical broadcast channel including the demodulation reference signal, the demodulation reference signal occupies three or four subcarriers at equal spacings; and broadcast information carried by the physical broadcast signal occupies another subcarrier other than the subcarriers occupied by the demodulation reference signal in the physical resource block.

In an optional implementation, for a normal cyclic prefix, the demodulation reference signal is located in locations of the following symbols in the first synchronization signal block:

the demodulation reference signal is located in a $7^{th}$ symbol, an $8^{th}$ symbol, an $11^{th}$ symbol, and a $12^{th}$ symbol in the synchronization signal block; or
the demodulation reference signal is located in a $7^{th}$ symbol, a $10^{th}$ symbol, and a $13^{th}$ symbol in the synchronization signal block; or
the demodulation reference signal is located in an $8^{th}$ symbol and an $11^{th}$ symbol in the synchronization signal block; or
the demodulation reference signal is located in a $7^{th}$ symbol and a $12^{th}$ symbol in the synchronization signal block; or
the demodulation reference signal is located in a $7^{th}$ symbol and a $13^{th}$ symbol in the synchronization signal block; or
the demodulation reference signal is located in a $9^{th}$ symbol or a $10^{th}$ symbol in the synchronization signal block.

In an optional implementation, for an extended cyclic prefix, the demodulation reference signal is located in locations of the following symbols in the first synchronization signal block:

the demodulation reference signal is located in a $7^{th}$ symbol, an $8^{th}$ symbol, a $10^{th}$ symbol, and an $11^{th}$ symbol in the synchronization signal block; or
the demodulation reference signal is located in a $7^{th}$ symbol, a $9^{th}$ symbol, and an $11^{th}$ symbol in the synchronization signal block; or
the demodulation reference signal is located in a $7^{th}$ symbol and a $10^{th}$ symbol in the synchronization signal block; or
the demodulation reference signal is located in an $8^{th}$ symbol or a $9^{th}$ symbol in the synchronization signal block.

It should be understood that the processing module 3110 in this embodiment of this application may be implemented by using a processor or a processor-related circuit component, and the transceiver module 3120 may be implemented by using a transceiver or a transceiver-related circuit component.

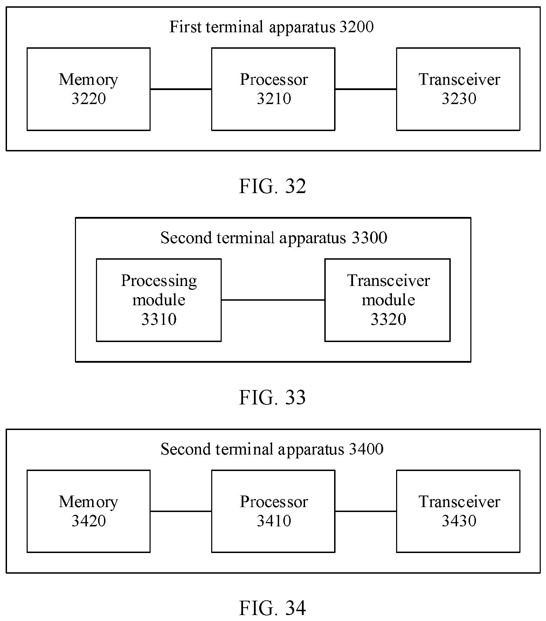

As shown in FIG. 32, an embodiment of this application further provides a communication apparatus 3200. For example, the communication apparatus 3200 is a first terminal apparatus 3200. For example, the first terminal apparatus 3200 may be a communication device, for example, a terminal device, or may be a chip system. The first terminal apparatus 3200 includes a processor 3210. Optionally, the first terminal apparatus 3200 may further include a memory 3220. Optionally, the first terminal apparatus 3200 may further include a transceiver 3230. The memory 3220 stores computer instructions or a program, and the processor 3210 may execute the computer instructions or the program stored in the memory 3220. When the computer instructions or the program stored in the memory 3220 is executed, the processor 3210 is configured to perform an operation performed by the processing module 3110 in the foregoing embodiment, and the transceiver 3230 is configured to perform an operation performed by the transceiver module 3120 in the foregoing embodiment. Alternatively, the first terminal apparatus 3200 may not include the memory 3220. For example, the memory is located outside the first terminal apparatus 3200. When the computer instructions or the program stored in the external memory is executed, the processor 3210 is configured to perform an operation performed by the processing module 3110 in the foregoing embodiment, and the transceiver 3230 is configured to perform an operation performed by the transceiver module 3120 in the foregoing embodiment.

The transceiver 3230 may be a functional unit, and the functional unit can complete both a sending operation and a receiving operation. For example, the transceiver 3230 may be configured to perform all sending operations and receiving operations performed by the first terminal apparatus in the embodiment shown in FIG. 15. For example, when a sending operation is performed, the transceiver 3230 may be considered as a transmitter, and when a receiving operation is performed, the transceiver 3230 may be considered as a receiver. Alternatively, the transceiver 3230 may be a collective term of two functional units, and the two functional units are respectively a transmitter and a receiver. The transmitter is configured to complete a sending operation. For example, the transmitter may be configured to perform all sending operations performed by the first terminal apparatus in the embodiment shown in FIG. 15. The receiver is configured to complete a receiving operation. For example, the receiver may be configured to perform all receiving operations performed by the first terminal apparatus in the embodiment shown in FIG. 15.

In addition, if the communication apparatus 3200 is the chip system, the transceiver 3230 may also be implemented by using a communication interface of the chip system. The communication interface is connected to a radio frequency transceiver component in the communication device, to implement information receiving and sending by using the radio frequency transceiver component. The communication interface may be a functional unit. The functional unit can implement both a sending operation and a receiving operation. For example, the communication interface may be configured to perform all sending operations and receiving operations performed by the first terminal apparatus in the embodiment shown in FIG. 15. For example, when a sending operation is performed, it may be considered that the communication interface is a sending interface, and when a receiving operation is performed, it may be considered that the communication interface is a receiving interface. Alternatively, the communication interface may be a general term of two functional units. The two functional units are respectively a sending interface and a receiving interface. The sending interface is configured to implement a sending operation. For example, the sending interface may be configured to perform all sending operations performed by the first terminal apparatus in the embodiment shown in FIG. 15. The receiving interface is configured to implement a receiving operation. For example, the receiving interface may be configured to perform all receiving operations performed by the first terminal apparatus in the embodiment shown in FIG. 15.

It should be understood that the first terminal apparatus 3100 or the first terminal apparatus 3200 according to embodiments of this application can implement a function of the first terminal apparatus in the embodiment shown in FIG. 15, and operations and/or functions of the modules in the first terminal apparatus 3100 or the first terminal apparatus 3200 are respectively intended to implement corresponding procedures in the embodiment shown in FIG. 15. For brevity, details are not described herein again.

FIG. 33 is a schematic block diagram of a communication apparatus 3300 according to an embodiment of this application. For example, the communication apparatus 3300 is a second terminal apparatus 3300.

The second terminal apparatus 3300 includes a processing module 3310. Optionally, the second terminal apparatus 3300 may further include a transceiver module 3320. For example, the second terminal apparatus 3300 may be a terminal device, or may be a chip used in the terminal device, or another combined device, another component, or the like that has a function of the terminal device. When the second terminal apparatus 3300 is a terminal device, the transceiver module 3320 may be a transceiver, and may include an antenna, a radio frequency circuit, and the like, and the processing module 3310 may be a processor, for example, a baseband processor. The baseband processor may include one or more CPUs. When the second terminal apparatus 3300 is a component having a function of the terminal, the transceiver module 3320 may be a radio frequency unit, and the processing module 3310 may be a processor, for example, a baseband processor. When the second terminal apparatus 3300 is a chip system, the transceiver module 3320 may be a communication interface (an input/output interface) of the chip system (for example, a baseband chip), and the processing module may be a processor of the chip system, and may include one or more central processing units.

The processing module 3310 may be configured to perform all operations, except receiving and sending operations, performed by the second terminal apparatus in the embodiment shown in FIG. 15, for example, S153, and/or configured to support another process of the technology described in this specification. The transceiver module 3320 may be configured to perform all receiving and sending operations performed by the second terminal apparatus in the embodiment shown in FIG. 15, for example, S152, and/or configured to support another process of the technology described in this specification.

In addition, the transceiver module 3320 may be a functional module. The functional module can implement both a sending operation and a receiving operation. For example, the transceiver module 3320 may be configured to perform all sending operations and receiving operations performed by the second terminal apparatus in the embodiment shown in FIG. 15. For example, when a sending operation is performed, it may be considered that the transceiver module 3320 is a sending module, and when a receiving operation is performed, it may be considered that the transceiver module 3320 is a receiving module. Alternatively, the transceiver module 3320 may be a collective term of two functional modules. The two functional modules are a sending module and a receiving module. The sending module is configured to implement a sending operation. For example, the sending module may be configured to perform all sending operations performed by the second terminal apparatus in the embodiment shown in FIG. 15. The receiving module is configured to implement a receiving operation.

For example, the receiving module may be configured to perform all receiving operations performed by the second terminal apparatus in the embodiment shown in FIG. 15.

For example, the transceiver module 3320 is configured to receive a first synchronization signal block, where the first synchronization signal block includes a primary synchronization signal, a secondary synchronization signal, and a physical broadcast channel, the physical broadcast channel includes a demodulation reference signal, the first synchronization signal block occupies Y symbols in time domain, Y is an integer greater than or equal to 6, the primary synchronization signal occupies the 2nd symbol and the 3rd symbol in the Y symbols, the secondary synchronization signal occupies the 4th symbol and the 5th symbol or the 5th symbol and the 6th symbol in the Y symbols, and the physical broadcast channel occupies symbols, in the Y symbols, other than the symbols occupied by the primary synchronization signal and the secondary synchronization signal; and the processing module 3310 is configured to demodulate the physical broadcast channel based on the first synchronization signal block.

The processing module 3310 may obtain, by demodulating the physical broadcast channel, broadcast information carried on the physical broadcast channel, and the like.

In an optional implementation, that the first synchronization signal block occupies Y symbols in time domain includes:

the Y symbols are all symbols in one slot; or
the Y symbols are all symbols except the last symbol in one slot.

In an optional implementation,

for a normal cyclic prefix, Y=13, or
for an extended cyclic prefix, Y=11.

In an optional implementation, the demodulation reference signal occupies all or some symbols, in the Y symbols, other than the symbols occupied by the primary synchronization signal and the secondary synchronization signal.

In an optional implementation, in a physical resource block corresponding to the symbols of the physical broadcast channel including the demodulation reference signal, the demodulation reference signal occupies three or four subcarriers at equal spacings; and broadcast information carried by the physical broadcast signal occupies another subcarrier other than the subcarriers occupied by the demodulation reference signal in the physical resource block.

In an optional implementation, for a normal cyclic prefix, the demodulation reference signal is located in locations of the following symbols in the first synchronization signal block:

the demodulation reference signal is located in a $7^{th}$ symbol, an $8^{th}$ symbol, an $11^{th}$ symbol, and a $12^{th}$ symbol in the synchronization signal block; or

the demodulation reference signal is located in a $7^{th}$ symbol, a $10^{th}$ symbol, and a $13^{th}$ symbol in the synchronization signal block; or

the demodulation reference signal is located in an $8^{th}$ symbol and an $11^{th}$ symbol in the synchronization signal block; or

the demodulation reference signal is located in a $7^{th}$ symbol and a $12^{th}$ symbol in the synchronization signal block; or

the demodulation reference signal is located in a $7^{th}$ symbol and a $13^{th}$ symbol in the synchronization signal block; or

the demodulation reference signal is located in a $9^{th}$ symbol or a $10^{th}$ symbol in the synchronization signal block.

In an optional implementation, for an extended cyclic prefix, the demodulation reference signal is located in locations of the following symbols in the first synchronization signal block:

the demodulation reference signal is located in a $7^{th}$ symbol, an $8^{th}$ symbol, a $10^{th}$ symbol, and an $11^{th}$ symbol in the synchronization signal block; or

the demodulation reference signal is located in a $7^{th}$ symbol, a $9^{th}$ symbol, and an $11^{th}$ symbol in the synchronization signal block; or

the demodulation reference signal is located in a $7^{th}$ symbol and a $10^{th}$ symbol in the synchronization signal block; or

the demodulation reference signal is located in an $8^{th}$ symbol or a $9^{th}$ symbol in the synchronization signal block.

It should be understood that the processing module 3310 in this embodiment of this application may be implemented by using a processor or a processor-related circuit component, and the transceiver module 3320 may be implemented by using a transceiver or a transceiver-related circuit component.

As shown in FIG. 34, an embodiment of this application further provides a communication apparatus 3400. For example, the communication apparatus 3400 is a second terminal apparatus 3400. For example, the second terminal apparatus 3400 may be a communication device, for example, a terminal device, or may be a chip system. The second terminal apparatus 3400 includes a processor 3410. Optionally, the second terminal apparatus 3400 may further include a memory 3420. Optionally, the second terminal apparatus 3400 may further include a transceiver 3430. The memory 3420 stores computer instructions or a program, and the processor 3410 may execute the computer instructions or the program stored in the memory 3420. When the computer instructions or the program stored in the memory 3420 is executed, the processor 3410 is configured to perform an operation performed by the processing module 3310 in the foregoing embodiment, and the transceiver 3430 is configured to perform an operation performed by the transceiver module 3320 in the foregoing embodiment. Alternatively, the second terminal apparatus 3400 may not include the memory 3420. For example, the memory is located outside the second terminal apparatus 3400. When the computer instructions or the program stored in the external memory is executed, the processor 3410 is configured to perform an operation performed by the processing module 3310 in the foregoing embodiment, and the transceiver 3430 is configured to perform an operation performed by the transceiver module 3320 in the foregoing embodiment.

The transceiver 3430 may be a functional unit, and the functional unit can complete both a sending operation and a receiving operation. For example, the transceiver 3430 may be configured to perform all sending operations and receiving operations performed by the second terminal apparatus in the embodiment shown in FIG. 15. For example, when a sending operation is performed, the transceiver 3430 may be considered as a transmitter, and when a receiving operation is performed, the transceiver 3430 may be considered as a receiver. Alternatively, the transceiver 3430 may be a collective term of two functional units, and the two functional units are respectively a transmitter and a receiver. The transmitter is configured to complete a sending operation. For example, the transmitter may be configured to perform all sending operations performed by the second terminal apparatus in the embodiment shown in FIG. 15. The receiver is configured to complete a receiving operation. For example, the receiver may be configured to perform all receiving operations performed by the second terminal apparatus in the embodiment shown in FIG. 15.

In addition, if the communication apparatus 3400 is the chip system, the transceiver 3430 may also be implemented by using a communication interface of the chip system. The communication interface is connected to a radio frequency transceiver component in the communication device, to implement information receiving and sending by using the radio frequency transceiver component. The communication interface may be a functional unit. The functional unit can implement both a sending operation and a receiving operation. For example, the communication interface may be configured to perform all sending operations and receiving operations performed by the second terminal apparatus in the embodiment shown in FIG. 15. For example, when a sending operation is performed, it may be considered that the communication interface is a sending interface, and when a receiving operation is performed, it may be considered that the communication interface is a receiving interface. Alternatively, the communication interface may be a general term of two functional units. The two functional units are respectively a sending interface and a receiving interface. The sending interface is configured to implement a sending operation. For example, the sending interface may be configured to perform all sending operations performed by the second terminal apparatus in the embodiment shown in FIG. 15. The receiving interface is configured to implement a receiving operation. For example, the receiving interface may be configured to perform all receiving operations performed by the second terminal apparatus in the embodiment shown in FIG. 15.

It should be understood that the second terminal apparatus 3300 or the second terminal apparatus 3400 according to embodiments of this application can implement a function of the second terminal apparatus in the embodiment shown in FIG. 15, and operations and/or functions of the modules in the second terminal apparatus 3300 or the second terminal apparatus 3400 are respectively intended to implement corresponding procedures in the embodiment shown in FIG. 15. For brevity, details are not described herein again.

An embodiment of this application further provides a communication apparatus. The communication apparatus may be a terminal device or a circuit. The communication apparatus may be configured to perform an action performed by the first terminal apparatus or the second terminal apparatus in the method embodiments.

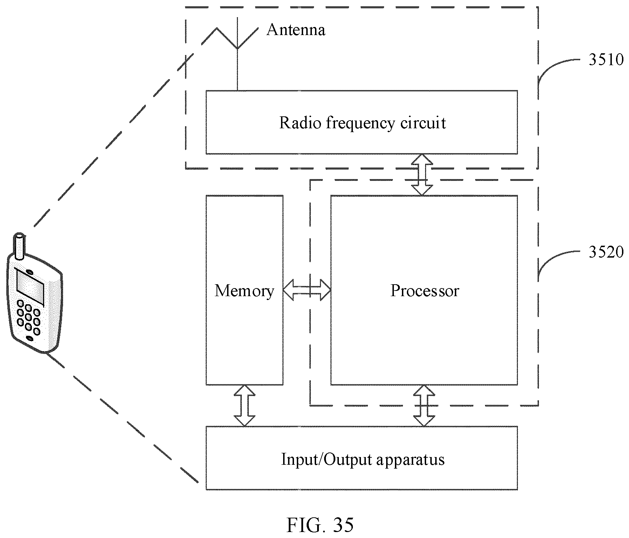

When the communication apparatus is a terminal device, FIG. 35 is a simplified schematic diagram of a structure of the terminal device. For ease of understanding and convenience of figure illustration, an example in which the terminal device is a mobile phone is used in FIG. 35. As shown in FIG. 35, the terminal device includes a processor, a memory, a radio frequency circuit, an antenna, and an input/output apparatus. The processor is mainly configured to: process a communication protocol and communication data, control the terminal device, execute a software program, process data of the software program, and so on. The memory is mainly configured to store the software program and the data. The radio frequency circuit is mainly configured to: perform conversion between a baseband signal and a radio frequency signal and process the radio frequency signal. The antenna is mainly configured to send and receive the radio frequency signal in a form of an electromagnetic wave. The input/output apparatus, for example, a touchscreen, a display, or a keyboard, is mainly configured to: receive data input by a user and output data to the user. It should be noted that some types of terminal devices may have no input/output apparatus.

When data needs to be sent, the processor performs baseband processing on the to-be-sent data, and outputs a baseband signal to the radio frequency circuit. The radio frequency circuit performs radio frequency processing on the baseband signal, then sends a radio frequency signal to the outside in a form of an electromagnetic wave through the antenna. When data is sent to the terminal device, the radio frequency circuit receives the radio frequency signal by using the antenna, converts the radio frequency signal into a baseband signal, and outputs the baseband signal to the processor, and the processor converts the baseband signal into data and processes the data. For ease of description, only one memory and one processor are shown in FIG. 35. In an actual terminal device product, there may be one or more processors and one or more memories. The memory may also be referred to as a storage medium, a storage device, or the like. The memory may be disposed independent of the processor, or may be integrated with the processor. This is not limited in this embodiment of this application.

In this embodiment of this application, the antenna and the radio frequency circuit that have sending and receiving functions may be considered as a transceiver unit of the terminal device, and the processor that has a processing function may be considered as a processing unit of the terminal device. As shown in FIG. 35, the terminal device includes a transceiver unit 3510 and a processing unit 3520. The transceiver unit may also be referred to as a transceiver, a transceiver machine, a transceiver apparatus, or the like. The processing unit may also be referred to as a processor, a processing board, a processing module, a processing apparatus, or the like. Optionally, a component that is in the transceiver unit 3510 and that is configured to implement a receiving function may be considered as a receiving unit, and a component that is in the transceiver unit 3510 and that is configured to implement a sending function may be considered as a sending unit. In other words, the transceiver unit 3510 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receiver circuit, or the like. The sending unit sometimes may also be referred to as a transmitter machine, a transmitter, a transmitter circuit, or the like.

It should be understood that the transceiver unit 3510 is configured to perform a sending operation and a receiving operation of a first terminal apparatus side in the foregoing method embodiments, and the processing unit 3520 is configured to perform an operation other than the receiving operation and the sending operation of the first terminal apparatus in the foregoing method embodiments.

For example, in an implementation, the transceiver unit 3510 is configured to perform all sending operations and receiving operations performed by the first terminal apparatus in the embodiment shown in FIG. 6, for example, S63, and/or the transceiver unit 3510 is further configured to perform another process supporting the technology described in this specification. The processing unit 3520 is configured to perform all operations other than the sending and receiving operations performed by the first terminal apparatus in the embodiment shown in FIG. 6, for example, S61, and/or the processing unit 3520 is further configured to perform another process supporting the technology described in this specification.

For another example, in an implementation, the transceiver unit 3510 is configured to perform all sending operations and receiving operations performed by the first terminal apparatus in the embodiment shown in FIG. 13, for example, S131, and/or the transceiver unit 3510 is further configured to perform another process supporting the technology described in this specification. The processing unit 3520 is configured to perform all operations other than the sending and receiving operations performed by the first terminal apparatus in the embodiment shown in FIG. 13, for example, S132, and/or the processing unit 3520 is further configured to perform another process supporting the technology described in this specification.

For another example, in an implementation, the transceiver unit 3510 is configured to perform all sending operations and receiving operations performed by the first terminal apparatus in the embodiment shown in FIG. 15, for example, S151, and/or the transceiver unit 3510 is further configured to perform another process supporting the technology described in this specification. The processing unit 3520 is configured to perform all operations other than the sending and receiving operations performed by the first terminal apparatus in the embodiment shown in FIG. 15, for example, S152, and/or the processing unit 3520 is further configured to perform another process supporting the technology described in this specification.

Alternatively, the transceiver unit 3510 is configured to perform a sending operation and a receiving operation of a second terminal apparatus side in the foregoing method embodiments, and the processing unit 3520 is configured to perform an operation other than the receiving operation and the sending operation of the second terminal apparatus in the foregoing method embodiments.

For example, in an implementation, the transceiver unit 3510 is configured to perform all sending operations and receiving operations performed by the second terminal apparatus in the embodiment shown in FIG. 6, for example, S62, and/or the transceiver unit 3510 is further configured to perform another process supporting the technology described in this specification. The processing unit 3520 is configured to perform all operations other than the sending and receiving operations performed by the second terminal apparatus in the embodiment shown in FIG. 6, for example, S63, and/or the processing unit 3520 is further configured to perform another process supporting the technology described in this specification.

For another example, in an implementation, the transceiver unit 3510 is configured to perform all sending operations and receiving operations performed by the second terminal apparatus in the embodiment shown in FIG. 13, for example, S133, and/or the transceiver unit 3510 is further configured to perform another process supporting the technology described in this specification.

The processing unit 3520 is configured to perform all operations other than the sending and receiving operations performed by the second terminal apparatus in the embodiment shown in FIG. 13, for example, S132, and/or the processing unit 3520 is further configured to perform another process supporting the technology described in this specification.

For another example, in an implementation, the transceiver unit 3510 is configured to perform all sending operations and receiving operations performed by the second terminal apparatus in the embodiment shown in FIG. 15, for example, S153, and/or the transceiver unit 3510 is further configured to perform another process supporting the technology described in this specification. The processing unit 3520 is configured to perform all operations other than the sending and receiving operations performed by the second terminal apparatus in the embodiment shown in FIG. 15, for example, S152, and/or the processing unit 3520 is further configured to perform another process supporting the technology described in this specification.

When the communication apparatus is a chip-type apparatus or circuit, the apparatus may include a transceiver unit and a processing unit. The transceiver unit may be an input/output circuit and/or a communication interface. The processing unit is an integrated processor, a microprocessor, or an integrated circuit.

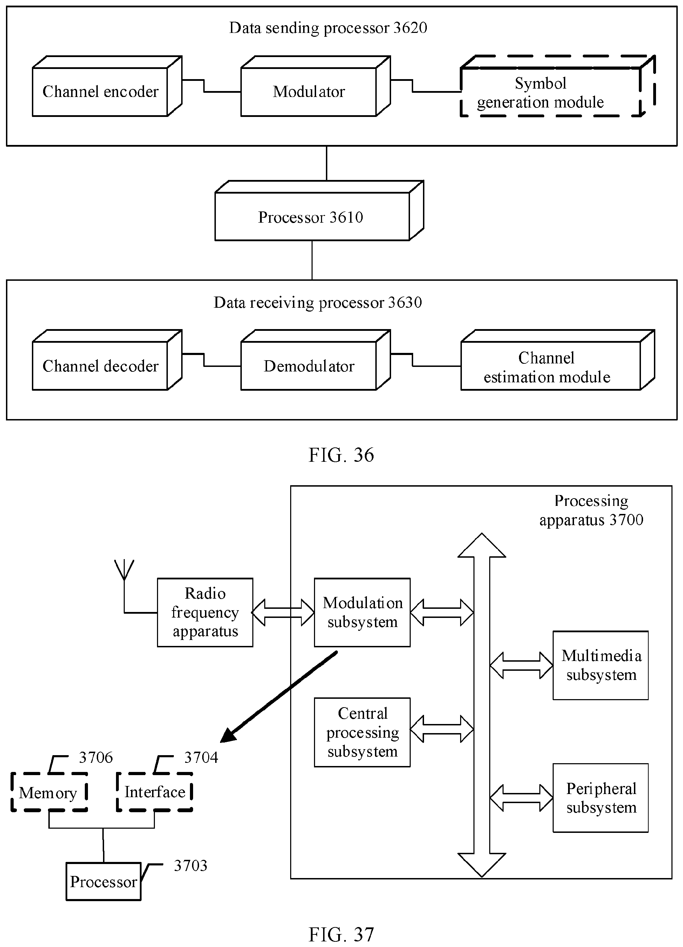

When the communication apparatus in this embodiment is a terminal device, refer to a device shown in FIG. 36. In an example, the device may implement functions similar to those of the processor 2410 in FIG. 24. Alternatively, in an example, the device may implement functions similar to those of the processor 2610 in FIG. 26. Alternatively, in an example, the device may implement functions similar to those of the processor 2810 in FIG. 28. Alternatively, in an example, the device may implement functions similar to those of the processor 3010 in FIG. 30. Alternatively, in an example, the device may implement functions similar to those of the processor 3210 in FIG. 32. Alternatively, in an example, the device may implement functions similar to those of the processor 3410 in FIG. 34. In FIG. 36, the device includes a processor 3610, a data sending processor 3620, and a data receiving processor 3630. The processing module 2310 in the foregoing embodiment may be the processor 3610 in FIG. 36, and implements corresponding functions. The transceiver module 2320 in the foregoing embodiment may be the data sending processor 3620 and/or the data receiving processor 3630 in FIG. 36. Alternatively, the processing module 2510 in the foregoing embodiment may be the processor 2410 in FIG. 36, and implements corresponding functions. The transceiver module 2520 in the foregoing embodiment may be the data sending processor 3620 and/or the data receiving processor 3630 in FIG. 36. Alternatively, the processing module 2710 in the foregoing embodiment may be the processor 3610 in FIG. 36, and implements corresponding functions. The transceiver module 2720 in the foregoing embodiment may be the data sending processor 3620 and/or the data receiving processor 3630 in FIG. 36. Alternatively, the processing module 2910 in the foregoing embodiment may be the processor 2410 in FIG. 36, and implements corresponding functions. The transceiver module 2920 in the foregoing embodiment may be the data sending processor 3620 and/or the data receiving processor 3630 in FIG. 36. Alternatively, the processing module 3110 in the foregoing embodiment may be the processor 3610 in FIG. 36, and implements corresponding functions. The transceiver module 3120 in the foregoing embodiment may be the data sending processor 3620 and/or the data receiving processor 3630 in FIG. 36. Alternatively, the processing module 3310 in the foregoing embodiment may be the processor 3610 in FIG. 36, and implements corresponding functions. The transceiver module 3320 in the foregoing embodiment may be the data sending processor 3620 and/or the data receiving processor 3630 in FIG. 36. Although FIG. 36 shows a channel encoder and a channel decoder, it may be understood that the modules are merely examples, and do not constitute a limitation to this embodiment.

FIG. 37 shows another form of this embodiment. A processing apparatus 3700 includes modules such as a modulation subsystem, a central processing subsystem, and a peripheral subsystem. The communication apparatus in this embodiment may be used as the modulation subsystem thereof. Specifically, the modulation subsystem may include a processor 3703 and an interface 3704. The processor 3703 implements a function of the processing module 2310, and the interface 3704 implements a function of the transceiver module 2320. Alternatively, the processor 3703 implements a function of the processing module 2510, and the interface 3704 implements a function of the transceiver module 2520. Alternatively, the processor 3703 implements a function of the processing module 2710, and the interface 3704 implements a function of the transceiver module 2720. Alternatively, the processor 3703 implements a function of the processing module 2910, and the interface 3704 implements a function of the transceiver module 2920. Alternatively, the processor 3703 implements a function of the processing module 3110, and the interface 3704 implements a function of the transceiver module 3120. Alternatively, the processor 3703 implements a function of the processing module 3310, and the interface 3704 implements a function of the transceiver module 3320. In another variation, the modulation subsystem includes a memory 3706, the processor 3703, and a program that is stored in the memory 3706 and that can be run on the processor. When executing the program, the processor 3703 implements a method of a terminal device side in the foregoing method embodiments. It should be noted that the memory 3706 may be non-volatile or volatile. The memory 3706 may be located in the modulation subsystem, or may be located in the processing apparatus 3700, provided that the memory 3706 can be connected to the processor 3703.

An embodiment of this application provides a first communication system. The first communication system may include at least one first terminal apparatus in the embodiment shown in FIG. 6, and include at least one second terminal apparatus in the embodiment shown in FIG. 6. The first terminal apparatus is, for example, the communication apparatus 2300 in FIG. 23 or the communication apparatus 2400 in FIG. 24. The second terminal apparatus is, for example, the communication apparatus 2500 in FIG. 25 or the communication apparatus 2600 in FIG. 26.

An embodiment of this application provides a second communication system. The second communication system may include at least one first terminal apparatus in the embodiment shown in FIG. 13, and include at least one second terminal apparatus in the embodiment shown in FIG. 13. The first terminal apparatus is, for example, the communication apparatus 2700 in FIG. 27 or the communication apparatus 2800 in FIG. 28. The second terminal apparatus is, for example, the communication apparatus 2900 in FIG. 29 or the communication apparatus 3000 in FIG. 30.

An embodiment of this application provides a third communication system. The third communication system may include at least one first terminal apparatus in the embodiment shown in FIG. 15, and include at least one second terminal apparatus in the embodiment shown in FIG. 15. The first terminal apparatus is, for example, the communication apparatus 3100 in FIG. 31 or the communication apparatus 3200 in FIG. 32. The second terminal apparatus is, for example, the communication apparatus 3300 in FIG. 33 or the communication apparatus 3400 in FIG. 34.

The foregoing three communication systems may be a same communication system, or may be different communication systems. Alternatively, any two communication systems thereof may be a same communication system, and the other communication system may be a different communication system. For example, the first communication system and the second communication system described above are a same communication system and the third communication system is a different communication system. Alternatively, for example, the second communication system and the third communication system are a same communication system and the first communication system is a different communication system.

An embodiment of this application further provides a computer-readable storage medium. The computer-readable storage medium is configured to store a computer program. When the computer program is executed by a computer, the computer may implement a procedure related to the first terminal apparatus provided in the method embodiment shown in FIG. 6.

An embodiment of this application further provides a computer-readable storage medium. The computer-readable storage medium is configured to store a computer program. When the computer program is executed by a computer, the computer may implement a procedure related to the second terminal apparatus provided in the method embodiment shown in FIG. 6.

An embodiment of this application further provides a computer-readable storage medium. The computer-readable storage medium is configured to store a computer program. When the computer program is executed by a computer, the computer may implement a procedure related to the first terminal apparatus provided in the method embodiment shown in FIG. 13.

An embodiment of this application further provides a computer-readable storage medium. The computer-readable storage medium is configured to store a computer program. When the computer program is executed by a computer, the computer may implement a procedure related to the second terminal apparatus provided in the method embodiment shown in FIG. 13.

An embodiment of this application further provides a computer-readable storage medium. The computer-readable storage medium is configured to store a computer program. When the computer program is executed by a computer, the computer may implement a procedure related to the first terminal apparatus provided in the method embodiment shown in FIG. 15.

An embodiment of this application further provides a computer-readable storage medium. The computer-readable storage medium is configured to store a computer program. When the computer program is executed by a computer, the computer may implement a procedure related to the second terminal apparatus provided in the method embodiment shown in FIG. 15.

An embodiment of this application further provides a computer program product. The computer program product is configured to store a computer program. When the computer program is executed by a computer, the computer may implement a procedure related to the first terminal apparatus provided in the method embodiment shown in FIG. 6.

An embodiment of this application further provides a computer program product. The computer program product is configured to store a computer program. When the computer program is executed by a computer, the computer may implement a procedure related to the second terminal apparatus provided in the method embodiment shown in FIG. 6.

An embodiment of this application further provides a computer program product. The computer program product is configured to store a computer program. When the computer program is executed by a computer, the computer may implement a procedure related to the first terminal apparatus provided in the method embodiment shown in FIG. 13.

An embodiment of this application further provides a computer program product. The computer program product is configured to store a computer program. When the computer program is executed by a computer, the computer may implement a procedure related to the second terminal apparatus provided in the method embodiment shown in FIG. 13.

An embodiment of this application further provides a computer program product. The computer program product is configured to store a computer program. When the computer program is executed by a computer, the computer may implement a procedure related to the first terminal apparatus provided in the method embodiment shown in FIG. 15.

An embodiment of this application further provides a computer program product. The computer program product is configured to store a computer program. When the computer program is executed by a computer, the computer may implement a procedure related to the second terminal apparatus provided in the method embodiment shown in FIG. 15.

It should be understood that the processor mentioned in embodiments of this application may be a CPU, or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate, a transistor logic device, a discrete hardware component, or the like. The general-purpose processor may be a microprocessor, or the processor may be any conventional processor or the like.

It should be further understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative descriptions, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate, a transistor logic device, or a discrete hardware component, the memory (a storage module) is integrated into the processor.

It should be noted that the memory described in this specification aims to include but is not limited to these memories and any memory of another proper type.

It should be understood that, in embodiments of this application, sequence numbers of the foregoing processes do not mean execution sequences. The execution sequences of the processes should be determined based on functions and internal logic of the processes, and should not constitute any limitation to implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing systems, apparatuses, and units, refer to a corresponding process in the foregoing method embodiments. Details are not described herein again.

In the several embodiments provided in this application, it should be understood that the disclosed systems, apparatuses, and methods may be implemented in another manner. For example, the described apparatus embodiments are merely examples. For example, division into units is merely logical function division, and may be another manner of division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic, a mechanical, or another form.

The units described as separate parts may or may not be physically separate. Parts displayed as units may or may not be physical units, in other words, may be located in one position, or may be distributed on a plurality of network units. Some or all of the units may be selected based on an actual requirement, to achieve the objectives of the solutions in the embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computer device (which may be a personal computer, a server, or a network device) to perform all or some of the steps in the method described in embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

## Claims

1. A communication method performed by a first communication apparatus, the method comprising:

   determining, in a first resource set, a first resource used to send N synchronization signal blocks, wherein the first resource set is located in a synchronization signal block period, the first resource set comprises M groups, an $i^{th}$ group in the M groups comprises X candidate resources, the first resource set comprises M×X candidate resources, each of the M×X candidate resources may be used to transmit a synchronization signal block, each of the N synchronization signal blocks occupies Y symbols in time domain, M and X are integers greater than 1, i is an integer greater than or equal to 1, Y is an integer greater than or equal to 5, the first resource comprises N candidate resources, and the N candidate resources belong to one or more groups in the M groups (S61); and
   sending a $j^{th}$ synchronization signal block in the N synchronization signal blocks (S63) on a $j^{th}$ candidate resource in the N candidate resources, wherein j is an integer greater than or equal to 1 and less than or equal to N;
   wherein the $i^{th}$ group comprises K subgroups, the X candidate resources belong to the K subgroups, one subgroup in the K subgroups comprises R candidate resources, the R candidate resources may be used to transmit R synchronization signal blocks, and the R synchronization signal blocks are repeatedly transmitted; and
   synchronization signal blocks carried by different K subgroups in the M groups are sent by using antenna units installed in different locations.

2. The method according to claim 1, wherein that the j^th synchronization signal block occupies Y symbols in time domain comprises:

the Y symbols are all symbols in one slot; or
the Y symbols are all symbols except the last symbol in one slot; preferably
for a normal cyclic prefix, Y=13, or
for an extended cyclic prefix, Y=11.

3. The method according to any one of claims 1 to 2, wherein the N synchronization signal blocks are transmitted in a repeated manner, or every H synchronization signal blocks in the N synchronization signal blocks are transmitted in a repeated manner, wherein H is a positive integer less than or equal to N.

4. The method according to any one of claims 1 to 3, comprising

determining a time domain location of the first resource set in the synchronization signal block period based on preconfigured information; or receiving first signaling from a network device, wherein the first signaling is used to indicate a time domain location of the first resource set in the synchronization signal block period.

5. The method according to any one of claims 1 to 4, wherein
when the frequency of the carrier on which the first resource set is located is a low frequency, the number of groups to which the N candidate resources belong is less than or equal to 2, wherein the groups to which the N candidate resources belong are located in a same radio frame, or are respectively located in different half-frames of a same radio frame.

6. The method according to any one of claims 1 to 5, wherein the first resource set comprises a first part and a second part, the first part comprises the first M/2 groups in time domain in the M groups, and the second part comprises the last M/2 groups in time domain in the M groups.

7. The method according to any preceding claim, wherein M groups are sent by using M beams, with different beams correspond to different directions and the M groups correspond to M sending directions, and the X candidate resources carried by the M groups correspond to M sending directions.

8. A communication method performed by a second communication apparatus, the method comprising:

determining, in a first resource set, a first resource used to transmit N synchronization signal blocks, wherein the first resource set is located in a synchronization signal block period, the first resource set comprises M groups, and an i^th group in the M groups comprises X candidate resources, the first resource set comprises M×X candidate resources, each of the M×X candidate resources may be used to transmit a synchronization signal block, each of the N synchronization signal blocks occupies Y symbols in time domain, M and X are integers greater than 1, i is an integer greater than or equal to 1, Y is an integer greater than or equal to 5, the first resource comprises N candidate resources, and the N candidate resources belong to one or more groups in the M groups (S61); and receiving a j^th synchronization signal block in the N synchronization signal blocks (S63) on a j^th candidate resource in the N candidate resources, wherein j is an integer greater than or equal to 1 and less than or equal to N; wherein the i^th group comprises K subgroups, the X candidate resources belong to the K subgroups, one subgroup in the K subgroups comprises R candidate resources, the R candidate resources may be used to transmit R synchronization signal blocks, and the R synchronization signal blocks are repeatedly transmitted; and synchronization signal blocks carried by different K subgroups in the M groups are sent by using antenna units installed in different locations.

9. The method according to claim 8, wherein that the j^th synchronization signal block occupies Y symbols in time domain comprises:

the Y symbols are all symbols in one slot; or
the Y symbols are all symbols except the last symbol in one slot; preferably
for a normal cyclic prefix, Y=13, or
for an extended cyclic prefix, Y=11.

10. The method according to any one of claims 8 to 9, wherein
when the frequency of the carrier on which the first resource set is located is a low frequency, the number of groups to which the N candidate resources belong is less than or equal to 2, wherein the groups to which the N candidate resources belong are located in a same radio frame, or are respectively located in different half-frames of a same radio frame.

11. The method according to any one of claims 8 to 10, wherein the first resource set comprises a first part and a second part, the first part comprises the first M/2 groups in time domain in the M groups, and the second part comprises the last M/2 groups in time domain in the M groups.

12. The method according to any one of claims 8 to 11, wherein the M groups are sent by using M beams, with different beams correspond to different directions and the M groups correspond to M sending directions, and the X candidate resources carried by the M groups correspond to M sending directions.

13. A communication apparatus configured to implement the method in accordance with any one of claims 1 to 7 or any one of claims 8 to 12.

14. A communication system, comprising a communication apparatus configured to implement the method in accordance with any one of claims 1 to 7 and a communication apparatus configured to implement the method in accordance with any one of claims 8 to 12.

15. A computer-readable storage medium, wherein the computer-readable storage medium stores a computer program, and when the computer program is run on a computer, the computer is enabled to perform the method according to any one of claims 1 to 7, or the computer is enabled to perform the method according to any one of claims 8 to 12.

**Patentansprüche**

1. Kommunikationsverfahren, das durch eine erste Kommunikationsvorrichtung durchgeführt wird, wobei das Verfahren Folgendes umfasst:

   Bestimmen, in einem ersten Ressourcensatz, einer ersten Ressource, die dazu verwendet wird, N Synchronisationssignalblöcke zu senden, wobei sich der erste Ressourcensatz in einer Synchronisationssignalblockperiode befindet, der erste Ressourcensatz M Gruppen umfasst, eine i-te Gruppe in den M Gruppen X Kandidatenressourcen umfasst, der erste Ressourcensatz M×X Kandidatenressourcen umfasst, jede der M×X Kandidatenressourcen dazu verwendet werden kann, einen Synchronisationssignalblock zu übertragen, jeder der N Synchronisationssignalblöcke Y Symbole in einem Zeitbereich belegt, M und X ganze Zahlen größer als 1 sind, i eine ganze Zahl größer als oder gleich 1 ist, Y eine ganze Zahl größer als oder gleich 5 ist, die erste Ressource N Kandidatenressourcen umfasst und die N Kandidatenressourcen zu einer oder mehreren Gruppen in den M Gruppen (S61) gehören; und
   Senden eines j-ten Synchronisationssignalblocks in den N Synchronisationssignalblöcken (S63) auf einer j-ten Kandidatenressource in den N Kandidatenressourcen, wobei j eine ganze Zahl größer als oder gleich 1 und kleiner als oder gleich N ist;
wobei die i-te Gruppe K Untergruppen umfasst, die X Kandidatenressourcen zu den K Untergruppen gehören, eine Untergruppe in den K Untergruppen R Kandidatenressourcen umfasst, die R Kandidatenressourcen dazu verwendet werden können, R Synchronisationssignalblöcke zu übertragen und die R Synchronisationssignalblöcke wiederholt übertragen werden; und
Synchronisationssignalblöcke, die von verschiedenen K Untergruppen in den M Gruppen getragen werden, unter Verwendung von Antenneneinheiten gesendet werden, die an verschiedenen Orten installiert sind.

2. Verfahren nach Anspruch 1, wobei die Tatsache, dass der j-te Synchronisationssignalblock Y Symbole im Zeitbereich belegt, Folgendes umfasst:

   die Y-Symbole sind alle Symbole in einem Slot; oder
   die Y-Symbole sind alle Symbole außer dem letzten Symbol in einem Slot; vorzugsweise für ein normales zyklisches Präfix, Y=13, oder für ein erweitertes zyklisches Präfix, Y=11.

3. Verfahren nach einem der Ansprüche 1 bis 2, wobei die N Synchronisationssignalblöcke wiederholt übertragen werden oder jeweils H Synchronisationssignalblöcke in den N Synchronisationssignalblöcken wiederholt übertragen werden, wobei H eine positive ganze Zahl kleiner als oder gleich N ist.

4. Verfahren nach einem der Ansprüche 1 bis 3, umfassend

   Bestimmen eines Zeitbereich-Ortes des ersten Ressourcensatzes in der Synchronisationssignalblockperiode basierend auf vorkonfigurierten Informationen; oder
   Empfangen einer ersten Signalisierung von einer Netzvorrichtung, wobei die erste Signalisierung dazu verwendet wird, einen Zeitbereich-Ort des ersten Ressourcensatzes in der Synchronisationssignalblockperiode anzugeben.

5. Verfahren nach einem der Ansprüche 1 bis 4, wobei wenn die Frequenz des Trägers, auf dem sich der erste Ressourcensatz befindet, eine niedrige Frequenz ist, die Anzahl von Gruppen, zu denen die N Kandidatenressourcen gehören, kleiner als oder gleich 2 ist, wobei sich die Gruppen, zu denen die N Kandidatenressourcen gehören, in demselben Funkrahmen befinden bzw. sich jeweils in verschiedenen Halbrahmen eines selben Funkrahmens befinden.

6. Verfahren nach einem der Ansprüche 1 bis 5, wobei der erste Ressourcensatz einen ersten Teil und einen zweiten Teil umfasst, der erste Teil die ersten M/2 Gruppen im Zeitbereich in den M Gruppen umfasst und der zweite Teil die letzten M/2 Gruppen im Zeitbereich in den M Gruppen umfasst.

7. Verfahren nach einem der vorhergehenden Ansprüche, wobei M Gruppen unter Verwendung von M Strahlen gesendet werden, wobei verschiedene Strahlen verschiedenen Richtungen entsprechen und die M Gruppen M Senderichtungen entsprechen und die von den M Gruppen getragenen X Kandidatenressourcen M Senderichtungen entsprechen.

8. Kommunikationsverfahren, das durch eine zweite Kommunikationsvorrichtung durchgeführt wird, wobei das Verfahren Folgendes umfasst:

   Bestimmen, in einem ersten Ressourcensatz, einer ersten Ressource, die dazu verwendet wird, N Synchronisationssignalblöcke zu übertragen, wobei sich der erste Ressourcensatz in einer Synchronisationssignalblockperiode befindet, der erste Ressourcensatz M Gruppen umfasst und eine i-te Gruppe in den M Gruppen X Kandidatenressourcen umfasst, der erste Ressourcensatz M×X Kandidatenressourcen umfasst, jede der M×X Kandidatenressourcen dazu verwendet werden kann, einen Synchronisationssignalblock zu übertragen, jeder der N Synchronisationssignalblöcke Y Symbole in einem Zeitbereich belegt, M und X ganze Zahlen größer als 1 sind, i eine ganze Zahl größer als oder gleich 1 ist, Y eine ganze Zahl größer als oder gleich 5 ist, die erste Ressource N Kandidatenressourcen umfasst und die N Kandidatenressourcen zu einer oder mehreren Gruppen in den M Gruppen (S61) gehören; und
   Empfangen eines j-ten Synchronisationssignalblocks in den N Synchronisationssignalblöcken (S63) auf einer j-ten Kandidatenressource in den N Kandidatenressourcen, wobei j eine ganze Zahl größer als oder gleich 1 und kleiner als oder gleich N ist;
   wobei die i-te Gruppe K Untergruppen umfasst, die X Kandidatenressourcen zu den K Untergruppen gehören, eine Untergruppe in den K Untergruppen R Kandidatenressourcen umfasst, die R Kandidatenressourcen dazu verwendet werden können, R Synchronisationssignalblöcke zu übertragen und die R Synchronisationssignalblöcke wiederholt übertragen werden; und
   Synchronisationssignalblöcke, die von verschiedenen K Untergruppen in den M Gruppen getragen werden, unter Verwendung von Antenneneinheiten gesendet werden, die an verschiedenen Orten installiert sind.

9. Verfahren nach Anspruch 8, wobei die Tatsache, dass der j-te Synchronisationssignalblock Y Symbole im Zeitbereich belegt, Folgendes umfasst:

   die Y-Symbole sind alle Symbole in einem Slot; oder
   die Y-Symbole sind alle Symbole außer dem letzten Symbol in einem Slot; vorzugsweise für ein normales zyklisches Präfix, Y=13, oder für ein erweitertes zyklisches Präfix, Y=11.

10. Verfahren nach einem der Ansprüche 8 bis 9, wobei wenn die Frequenz des Trägers, auf dem sich der erste Ressourcensatz befindet, eine niedrige Frequenz ist, die Anzahl von Gruppen, zu denen die N Kandidatenressourcen gehören, kleiner als oder gleich 2 ist, wobei sich die Gruppen, zu denen die N Kandidatenressourcen gehören, in demselben Funkrahmen befinden bzw. sich jeweils in verschiedenen Halbrahmen eines selben Funkrahmens befinden.

11. Verfahren nach einem der Ansprüche 8 bis 10, wobei der erste Ressourcensatz einen ersten Teil und einen zweiten Teil umfasst, der erste Teil die ersten M/2 Gruppen im Zeitbereich in den M Gruppen umfasst und der zweite Teil die letzten M/2 Gruppen im Zeitbereich in den M Gruppen umfasst.

12. Verfahren nach einem der Ansprüche 8 bis 11, wobei die M Gruppen unter Verwendung von M Strahlen gesendet werden, wobei verschiedene Strahlen verschiedenen Richtungen entsprechen und die M Gruppen M Senderichtungen entsprechen und die von den M Gruppen getragenen X Kandidatenressourcen M Senderichtungen entsprechen.

13. Kommunikationsvorrichtung, die dazu konfiguriert ist, das Verfahren nach einem der Ansprüche 1 bis 7 oder einem der Ansprüche 8 bis 12 zu implementieren.

14. Kommunikationssystem, umfassend eine Kommunikationsvorrichtung, die dazu konfiguriert ist, das Verfahren nach einem der Ansprüche 1 bis 7 zu implementieren, und eine Kommunikationsvorrichtung, die dazu konfiguriert ist, das Verfahren nach einem der Ansprüche 8 bis 12 zu implementieren.

15. Computerlesbares Speichermedium, wobei das computerlesbare Speichermedium ein Computerprogramm speichert, und, wenn das Computerprogramm auf einem Computer ausgeführt wird, der Computer in die Lage versetzt wird, das Verfahren nach einem der Ansprüche 1 bis 7 durchzuführen, oder der Computer in die Lage versetzt wird, das Verfahren nach einem der Ansprüche 8 bis 12 durchzuführen.

## Revendications

1. Procédé de communication réalisé par un premier appareil de communication, le procédé comprenant :

   la détermination, dans un premier ensemble de ressources, d'une première ressource utilisée pour envoyer N blocs de signaux de synchronisation, dans lequel le premier ensemble de ressources est situé dans une période de bloc de signaux de synchronisation, le premier ensemble de ressources comprend M groupes, un $i^{-ème}$ groupe dans les M groupes comprend X ressources candidates, le premier ensemble de ressources comprend M×X ressources candidates, chacune des M×X ressources candidates peut être utilisée pour transmettre un bloc de signaux de synchronisation, chacun des N blocs de signaux de synchronisation occupe Y symboles dans le domaine temporel, M et X sont des entiers supérieurs à 1, i est un entier supérieur ou égal à 1, Y est un entier supérieur ou égal à 5, la première ressource comprend N ressources candidates, et les N ressources candidates appartiennent à un ou plusieurs groupes dans les M groupes (S61) ; et
   l'envoi d'un $j^{-ème}$ bloc de signaux de synchronisation dans les N blocs de signaux de synchronisation (S63) sur une $j^{-ème}$ ressource candidate dans les N ressources candidates, dans lequel j est un entier supérieur ou égal à 1 et inférieur ou égal à N ;
   dans lequel le $i^{-ème}$ groupe comprend K sous-groupes, les X ressources candidates appartiennent aux K sous-groupes, un sous-groupe dans les K sous-groupes comprend R ressources candidates, les R ressources candidates peuvent être utilisées pour transmettre R blocs de signaux de synchronisation, et les R blocs de signaux de synchronisation sont transmis de manière répétée ; et
   les blocs de signaux de synchronisation transportés par différents K sous-groupes dans les M groupes sont envoyés à l'aide d'unités d'antenne installées à différents emplacements.

2. Procédé selon la revendication 1, dans lequel le fait que le $j^{-ème}$ bloc de signaux de synchronisation occupe Y symboles dans le domaine temporel comprend :

les Y symboles sont tous les symboles d'un même créneau ; ou
les Y symboles sont tous les symboles sauf le dernier symbole d'un créneau ; de préférence pour un préfixe cyclique normal, Y=13, ou pour un préfixe cyclique étendu, Y=11.

3. Procédé selon l'une quelconque des revendications 1 et 2, dans lequel les N blocs de signaux de synchronisation sont transmis de manière répétée, ou tous les H blocs de signaux de synchronisation dans les N blocs de signaux de synchronisation sont transmis de manière répétée, dans lequel H est un entier positif inférieur ou égal à N.

4. Procédé selon l'une quelconque des revendications 1 à 3, comprenant

   la détermination d'un emplacement dans le domaine temporel du premier ensemble de ressources dans la période de bloc de signaux de synchronisation sur la base d'informations préconfigurées ; ou
   la réception d'un premier signal provenant d'un dispositif réseau, dans lequel le premier signal est utilisé pour indiquer un emplacement dans le domaine temporel du premier ensemble de ressources dans la période de bloc de signaux de synchronisation.

5. Procédé selon l'une quelconque des revendications 1 à 4, dans lequel
lorsque la fréquence de la porteuse sur laquelle le premier ensemble de ressources est situé est une basse fréquence, le nombre de groupes auxquels les N ressources candidates appartiennent est inférieur ou égal à 2, dans lequel les groupes auxquels les N ressources candidates appartiennent sont situés dans une même trame radio, ou sont respectivement situés dans différentes demi-trames d'une même trame radio.

6. Procédé selon l'une quelconque des revendications 1 à 5, dans lequel le premier ensemble de ressources comprend une première partie et une seconde partie, la première partie comprend les premiers M/2 groupes dans le domaine temporel des M groupes, et la seconde partie comprend les derniers M/2 groupes dans le domaine temporel des M groupes.

7. Procédé selon l'une quelconque des revendications précédentes, dans lequel M groupes sont envoyés en utilisant M faisceaux, les différents faisceaux correspondent à différentes directions et les M groupes correspondent à M directions d'envoi, et les X ressources candidates transportées par les M groupes correspondent à M directions d'envoi.

**8.** Procédé de communication réalisé par un second appareil de communication, le procédé comprenant :

la détermination, dans un premier ensemble de ressources, d'une première ressource utilisée pour transmettre N blocs de signaux de synchronisation, dans lequel le premier ensemble de ressources est situé dans une période de bloc de signaux de synchronisation, le premier ensemble de ressources comprend M groupes, et un $i^{-ème}$ groupe dans les M groupes comprend X ressources candidates, le premier ensemble de ressources comprend M×X ressources candidates, chacune des M×X ressources candidates peut être utilisée pour transmettre un bloc de signaux de synchronisation, chacun des N blocs de signaux de synchronisation occupe Y symboles dans le domaine temporel, M et X sont des entiers supérieurs à 1, i est un entier supérieur ou égal à 1, Y est un entier supérieur ou égal à 5, la première ressource comprend N ressources candidates, et les N ressources candidates appartiennent à un ou plusieurs groupes dans les M groupes (S61) ; et

la réception d'un $j^{-ème}$ bloc de signaux de synchronisation dans les N blocs de signaux de synchronisation (S63) sur une $j^{-ème}$ ressource candidate dans les N ressources candidates, dans lequel j est un entier supérieur ou égal à 1 et inférieur ou égal à N ;

dans lequel le $i^{-ème}$ groupe comprend K sous-groupes, les X ressources candidates appartiennent aux K sous-groupes, un sous-groupe dans les K sous-groupes comprend R ressources candidates, les R ressources candidates peuvent être utilisées pour transmettre R blocs de signaux de synchronisation, et les R blocs de signaux de synchronisation sont transmis de manière répétée ; et

les blocs de signaux de synchronisation transportés par différents K sous-groupes dans les M groupes sont envoyés à l'aide d'unités d'antenne installées à différents emplacements.

**9.** Procédé selon la revendication 8, dans lequel le fait que le $j^{-ème}$ bloc de signaux de synchronisation occupe Y symboles dans le domaine temporel comprend :

les Y symboles sont tous les symboles d'un même créneau ; ou

les Y symboles sont tous les symboles sauf le dernier symbole d'un créneau ; de préférence pour un préfixe cyclique normal, Y=13, ou pour un préfixe cyclique étendu, Y=11.

**10.** Procédé selon l'une quelconque des revendications 8 et 9, dans lequel

lorsque la fréquence de la porteuse sur laquelle le premier ensemble de ressources est situé est une basse fréquence, le nombre de groupes auxquels les N ressources candidates appartiennent est inférieur ou égal à 2, dans lequel les groupes auxquels les N ressources candidates appartiennent sont situés dans une même trame radio, ou sont respectivement situés dans différentes demi-trames d'une même trame radio.

**11.** Procédé selon l'une quelconque des revendications 8 à 10, dans lequel le premier ensemble de ressources comprend une première partie et une seconde partie, la première partie comprend les premiers M/2 groupes dans le domaine temporel des M groupes, et la seconde partie comprend les derniers M/2 groupes dans le domaine temporel des M groupes.

**12.** Procédé selon l'une quelconque des revendications 8 à 11, dans lequel les M groupes sont envoyés en utilisant M faisceaux, les différents faisceaux correspondent à différentes directions et les M groupes correspondent à M directions d'envoi, et les X ressources candidates transportées par les M groupes correspondent à M directions d'envoi.

**13.** Appareil de communication configuré pour mettre en œuvre le procédé selon l'une quelconque des revendications 1 à 7 ou l'une quelconque des revendications 8 à 12.

**14.** Système de communication, comprenant un appareil de communication configuré pour mettre en œuvre le procédé selon l'une quelconque des revendications 1 à 7 et un appareil de communication configuré pour mettre en œuvre le procédé selon l'une quelconque des revendications 8 à 12.

**15.** Support de stockage lisible par ordinateur, dans lequel le support de stockage lisible par ordinateur stocke un programme informatique, et lorsque le programme informatique fonctionne sur un ordinateur, l'ordinateur est activé pour réaliser le procédé selon l'une quelconque des revendications 1 à 7, ou l'ordinateur est activé pour réaliser le procédé selon l'une quelconque des revendications 8 à 12.

FIG. 1

FIG. 2

FIG. 3

FIG. 4A

FIG. 4B

FIG. 4C

FIG. 4D

FIG. 4E

Network device

Terminal device 1

Terminal device 2

FIG. 5

| First terminal apparatus | Second terminal apparatus |
|---|---|

S61: Determine, in a first resource set, a first resource used to send N synchronization signal blocks, where the first resource set is located in a synchronization signal block period, the first resource set includes M groups, an $i^{th}$ group in the M groups includes X candidate resources, the first resource set includes M×X candidate resources, each of the M×X candidate resources may be used to transmit a synchronization signal block, each of the N synchronization signal blocks occupies Y symbols in time domain, M, i, and X are all integers greater than or equal to 1, Y is an integer greater than or equal to 5, the first resource includes N candidate resources, and the N candidate resources belong to one or more groups in the M groups

S62: Determine, in the first resource set, the first resource used to transmit the N synchronization signal blocks, where the first resource set is located in the synchronization signal block period, the first resource set includes the M groups, the $i^{th}$ group in the M groups includes the X candidate resources, the first resource set includes the M×X candidate resources, each of the M×X candidate resources may be used to transmit the synchronization signal block, each of the N synchronization signal blocks occupies the Y symbols in time domain, M, i, and X are all integers greater than or equal to 1, Y is an integer greater than or equal to 5, the first resource includes the N candidate resources, and the N candidate resources belong to the one or more groups in the M groups

S63: $j^{th}$ synchronization signal block (on a $j^{th}$ candidate resource in the N candidate resources)

FIG. 6

First resource set, 10 ms

S $\leftarrow I_g \rightarrow$ S  S  S  S  S  S  S

S-SSB 0  S-SSB 1

FIG. 7A

S-SSB period: 160 ms

First resource set

Offset 1

10 ms

FIG. 7B

| B | P | P | S | S | B | B | B | B | B | B | B | B | GAP |

FIG. 7C

| B | P | P | S | S | B | B | B | B | B | B | GAP |

FIG. 7D

S-SSB period

First resource set

Offset 1

Offset 2

Second resource set

10 ms

10 ms

| X | X | X | X | X | X | X | X |

Eight groups

FIG. 8

S-SSB period

First resource set

Offset 1

Offset 2

Second resource set

10 ms

10 ms

| X | X | X | X | X | X | X | X |

5 ms

5 ms

FIG. 9A

First resource set, 10 ms

S ←— $I_g$ —→ S    S    S    S    S    S    S

5 ms: $L_{max}$/two S-SSBs    5 ms: $L_{max}$/two S-SSBs

S-SSB 0    S-SSB 1

FIG. 9B

S-SSB period

First resource set    Second resource set

Offset 1    Offset 2

10 ms    10 ms

X X    X X    X X    X X

Eight groups

FIG. 10

S-SSB period

First resource set

Offset 1 | U slots | U slots | Offset 2 | Second resource set | U slots | U slots

FIG. 11

S-SSB period

First resource set

Offset 1 | 2U slots | 3U slots | Offset 2 | Second resource set | 2U slots | 3U slots

U slots

U slots

FIG. 12A

S-SSB period

First resource set

Offset 1 | U slots | 2U slots | Offset 2 | Second resource set | U slots | 2U slots

0 slots

0 slots

FIG. 12B

| First terminal apparatus | | Second terminal apparatus |
| --- | --- | --- |

S131: Determine, in a first resource set, a first resource used to send N synchronization signal blocks, where the first resource set is located in a synchronization signal block period, the first resource set includes M groups, an $i^{th}$ group in the M groups includes X candidate resources, the first resource set includes M×X candidate resources, each of the M×X candidate resources may be used to transmit a synchronization signal block, each of the N synchronization signal blocks occupies Y symbols in time domain, M, i, and X are all integers greater than or equal to 1, Y is an integer greater than or equal to 5, the first resource includes N candidate resources, and the N candidate resources belong to one or more groups in the M groups

S132: $j^{th}$ synchronization signal block (where on a $j^{th}$ candidate resource in the N candidate resources, the $j^{th}$ synchronization signal block indicates a time domain location of the $j^{th}$ synchronization signal block)

S133: Determine the time domain location of the $j^{th}$ synchronization signal block based on the $j^{th}$ synchronization signal block

FIG. 13

| B | P | P | S | S | B | B | B | B | B | B | GAP |
|---|---|---|---|---|---|---|---|---|---|---|-----|

FIG. 14A

| B | P | P | S | S | B | B | B | B | B | B | B | B | GAP |
|---|---|---|---|---|---|---|---|---|---|---|---|---|-----|

FIG. 14B

| B | P | P | S | S | B | B | B | B | B | B | B | B | GAP |
|---|---|---|---|---|---|---|---|---|---|---|---|---|-----|

FIG. 14C

| First terminal apparatus | Second terminal apparatus |
|---|---|

S151: Determine a first synchronization signal block, where the first synchronization signal block includes a primary synchronization signal, a secondary synchronization signal, and a physical broadcast channel, the physical broadcast channel includes a demodulation reference signal, the first synchronization signal block occupies Y symbols in time domain, Y is an integer greater than or equal to 6, the primary synchronization signal occupies the 2nd symbol and the 3rd symbol in the Y symbols, the secondary synchronization signal occupies the 4th symbol and the 5th symbol or the 5th symbol and the 6th symbol in the Y symbols, and the physical broadcast channel occupies symbols, in the Y symbols, other than the symbols occupied by the primary synchronization signal and the secondary synchronization signal

S152: First synchronization signal block

S153: Demodulate the physical broadcast channel based on the first synchronization signal block

FIG. 15

Pattern 1 | B | P | P | S | S | B | B | B | B | B | B | B | B | GAP

Pattern 2 | B | P | P | S | S | B | B | B | B | B | B | B | B | GAP

Pattern 3 | B | P | P | S | S | B | B | B | B | B | B | B | GAP

FIG. 16A

Pattern 1a | B | P | P | S | S | B | B | B | B | B | B | GAP

Pattern 2a | B | P | P | S | S | B | B | B | B | B | B | GAP

Pattern 3a | B | P | P | S | S | B | B | B | B | B | GAP

FIG. 16B

FIG. 17A

FIG. 17B

FIG. 17C

FIG. 17D

FIG. 18A

FIG. 18B

FIG. 18C

FIG. 19A

FIG. 19B

FIG. 19C

FIG. 19D

FIG. 19E

FIG. 20A

FIG. 20B

FIG. 20C

FIG. 20D

FIG. 21A

FIG. 21B

| B | P | P | S | S | B | B | B | B | B | B | B | B | GAP |

FIG. 21C

| B | P | P | S | S | B | B | B | B | B | B | B | B | GAP |

FIG. 21D

| B | P | P | S | S | B | B | B | B | B | B | B | GAP |

FIG. 22A

| B | P | P | S | S | B | B | B | B | B | B | GAP |

FIG. 22B

| B | P | P | S | S | B | B | B | B | B | B | GAP |

FIG. 22C

First terminal apparatus 2300

Processing module 2310 ——— Transceiver module 2320

FIG. 23

First terminal apparatus 2400

| Memory 2420 | Processor 2410 | Transceiver 2430 |

FIG. 24

Second terminal apparatus 2500

| Processing module 2510 | Transceiver module 2520 |

FIG. 25

Second terminal apparatus 2600

| Memory 2620 | Processor 2610 | Transceiver 2630 |

FIG. 26

First terminal apparatus 2700

| Processing module 2710 | Transceiver module 2720 |

FIG. 27

First terminal apparatus 2800

| Memory 2820 | Processor 2810 | Transceiver 2830 |

FIG. 28

Second terminal apparatus 2900

| Processing module 2910 | Transceiver module 2920 |

FIG. 29

Second terminal apparatus 3000

| Memory 3020 | Processor 3010 | Transceiver 3030 |

FIG. 30

First terminal apparatus 3100

| Processing module 3110 | Transceiver module 3120 |

FIG. 31

First terminal apparatus 3200

| Memory 3220 | Processor 3210 | Transceiver 3230 |

FIG. 32

Second terminal apparatus 3300

| Processing module 3310 | Transceiver module 3320 |

FIG. 33

Second terminal apparatus 3400

| Memory 3420 | Processor 3410 | Transceiver 3430 |

FIG. 34

Antenna

Radio frequency circuit

3510

Memory

Processor

3520

Input/Output apparatus

FIG. 35

Data sending processor 3620

Channel encoder — Modulator — Symbol generation module

Processor 3610

Data receiving processor 3630

Channel decoder — Demodulator — Channel estimation module

FIG. 36

Processing apparatus 3700

Radio frequency apparatus ⟷ Modulation subsystem ⟷

Multimedia subsystem

Central processing subsystem ⟷

Peripheral subsystem

3706    3704

Memory    Interface

3703

Processor

FIG. 37

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ZTE et al.** Discussion on synchronization mechanism in NR V2X. *3GPP DRAFT: R1-1908895*, 17 August 2019

- **CATT et al.** Sidelink synchronization mechanism in NR V2X. *3GPP DRAFT; R1-1908582*, 17 August 2019